# EUROPEAN PATENT APPLICATION

(11) **EP 2 613 538 A1**
(43) Date of publication of application: **10.07.2013**
(21) Application number: 11821900.5
(22) Date of filing: 31.08.2011
(51) Int. Cl.: H04N 13/00, G09G 5/00, G09G 5/36

(54) **IMAGE PROCESSING DEVICE AND METHOD**

(30) Priority: 13.06.2011 JP 2011131677; 03.09.2010 JP 2010198120
(71) Applicant: Sony Corporation, Tokyo 108-0075 (JP)
(72) Inventor: HATTORI Shinobu, Tokyo 108-0075 (JP)
(74) Representative: Davies, Simon Robert
(86) International application number: PCT/JP2011/069842
(87) International publication number: WO 2012/029885

(57) **Abstract**

The present invention relates to image processing devices and methods for correctly transmitting image data in such a format as to generate multi-view images.

A mode determining unit of a reproducing device determines a compatible mode indicating compatibility with an image data format by referring to the format of 3D image data to be used for generating a multi-view image. A 3D information generating unit generates compatibility information indicating the determined compatible mode as 3D information. A communication unit transmits the 3D image data and the 3D information to a display device. A communication unit of the display device receives the 3D image data transmitted from the reproducing device, and receives the compatibility information as the 3D information. A mode determining unit determines the compatible mode of the 3D image data from the 3D information. Based on the determined compatible mode, a synchronization control unit controls synchronization of processing of the 3D image data. The present technique can be applied to image processing devices, for example.

## Description

### TECHNICAL FIELD

The present technique relates to image processing devices and methods, and more particularly, to image processing devices and methods for correctly transmitting image data in such a format as to generate multi-view images.

### BACKGROUND ART

As video content, 3D (3 Dimensions) images that allow stereoscopic viewing by using parallaxes have been becoming common.

As a popular technique for viewing such 3D images, there is a technique by which a user sees images of two viewpoints that are alternately displayed. In viewing the images of two viewpoints, the user wears glasses that open the shutter for the left eye when one of the images of two viewpoints is displayed, and open the shutter for the right eye when the other one of the images is displayed (hereinafter referred to as the two-view technique).

An example method of encoding and decoding 3D image data for allowing stereoscopic viewing, or image data of multiple viewpoints, is disclosed in Patent Document 1.

In recent years, there is an increasing demand for a technique for stereoscopically viewing 3D images without glasses for stereoscopic viewing (hereinafter referred to a multi-view technique). In the case of a multi-view technique, to display a 3D image, a multi-view image is generated and displayed. A viewer can view an image suitable for his/her location (viewpoint), without glasses for stereoscopic viewing.

### CITATION LIST

### PATENT DOCUMENT

Patent Document 1: Japanese Patent Application Laid-Open No. 2008-182669

### SUMMARY OF THE INVENTION

### PROBLEMS TO BE SOLVED BY THE INVENTION

There may be cases where such 3D images are transmitted between devices, like other types of images. For example, uncompressed 3D images might be transmitted from a Blu-ray player (a reproducing device) or the like to a digital television monitor (a display device) or the like.

However, there have been transmission methods only for two-view 3D images, and no methods have been suggested for transmitting multi-view 3D images.

Therefore, if such multi-view 3D images are transmitted by a conventional transmission method for two-view 3D images, correct transmission cannot be performed.

The present technique has been developed in view of those circumstances, and an object thereof is to allow correct transmission of image data in such a format as to generate multi-view images.

### SOLUTIONS TO PROBLEMS

One aspect of the present technique is an image processing device that includes: a mode determining unit that determines a compatible mode indicating compatibility with an image data format by referring to the format of stereoscopic image data to be used for generating a multi-view image; a generating unit that generates compatibility information as 3D information, the compatibility information indicating the compatible mode determined by the mode determining unit; and a transmitting unit that transmits the stereoscopic image data and the 3D information generated by the generating unit to a transmission destination of the stereoscopic image data.

The generating unit can generate format information as the 3D information, the format information indicating the format of the stereoscopic image data.

The generating unit can generate image multiplexing information and parallax image multiplexing information as the 3D information, the image multiplexing information indicating the multiplexing technique for the image data in the stereoscopic image data, the parallax image multiplexing information indicating the multiplexing technique for the parallax image data in the stereoscopic image data.

The generating unit can generate identification information as the 3D information, the identification information being for identifying the multiplexing pattern of the image data in the stereoscopic image data or the multiplexing pattern of the parallax image data in the stereoscopic image data.

The transmitting unit can put the 3D information in VSIFPC (Vendor Specific InfoFrame Packet Contents) of the HDMI (High Definition Multimedia Interface) standard, and transmit the 3D information.

The transmitting unit can put the 3D information in a free space in a region of the VSIFPC, and then transmit the 3D information, the region of the VSIFPC being designed to have information about 3D image data written therein.

Examples of the compatible mode may include mono compatible mode indicating compatibility with conventional two-dimensional image data, frame packing compatible mode indicating compatibility with conventional frame packing 3D image data, and stereoscopic compatible mode indicating compatibility with conventional stereoscopic 3D image data.

The transmitting unit can transmit data of one frame of the stereoscopic image data, using an active video interval equivalent to more than one cycle of a vertical synchronization signal.

The image processing device further includes an interval setting unit that sets irregular cycles to the vertical synchronization signal. The transmitting unit can transmit data of one frame of the stereoscopic image data, using the active video interval that is equivalent to the cycles set by the interval setting unit.

The image processing device further includes: a capability information acquiring unit that acquires capability information from a device at the transmission destination of the stereoscopic image data, the capability information indicating the processing capability of the device; and a synchronization setting unit that sets a synchronization method for the stereoscopic image data, based on the processing capability of the device indicated by the capability information acquired by the capability information acquiring unit. The generating unit can generate synchronization information as the 3D information, the synchronization information indicating the synchronization method set by the synchronization setting unit.

The one aspect of the present technique is also an image processing method to be performed by an image processing device, the method including: determining a compatible mode indicating compatibility with an image data format by referring to the format of stereoscopic image data to be used for generating a multi-view image, the determining being performed by a mode determining unit; generating compatibility information as 3D information, the compatibility information indicating the compatible mode determined by the mode determining unit, the generating being performed by a generating unit; and transmitting the stereoscopic image data and the 3D information generated by the generating unit to a transmission destination of the stereoscopic image data, the transmitting being performed by a transmitting unit.

The other aspect of the present technique is an image processing device that includes: a receiving unit that receives stereoscopic image data to be used for generating a multi-view image, and receives a compatible mode as 3D information, the compatible mode indicating compatibility of the format of the stereoscopic image data with an image data format; a mode determining unit that determines the compatible mode of the stereoscopic image data received by the receiving unit, based on the 3D information received by the receiving unit; and a synchronization control unit that controls synchronization of processing of the stereoscopic image data received by the receiving unit, based on the compatible mode determined by the mode determining unit.

The receiving unit can receive format information as the 3D information, the format information indicating the format of the stereoscopic image data.

The receiving unit can generate image multiplexing information and parallax image multiplexing information as the 3D information, the image multiplexing information indicating the multiplexing technique for the image data in the stereoscopic image data, the parallax image multiplexing information indicating the multiplexing technique for the parallax image data in the stereoscopic image data.

The receiving unit can receive identification information as the 3D information, the identification information being for identifying the multiplexing pattern of the image data in the stereoscopic image data or the multiplexing pattern of the parallax image data in the stereoscopic image data.

The receiving unit can receive the 3D information that is written in VSIFPC (Vendor Specific InfoFrame Packet Contents) of the HDMI (High Definition Multimedia Interface) standard, and is then transmitted.

The receiving unit can receive the 3D information that is written in a free space in a region of the VSIFPC and is then transmitted, the region of the VSIFPC being designed to have information about 3D image data written therein.

Examples of the compatible mode may include mono compatible mode indicating compatibility with conventional two-dimensional image data, frame packing compatible mode indicating compatibility with conventional frame packing 3D image data, and stereoscopic compatible mode indicating compatibility with conventional stereoscopic 3D image data.

The receiving unit can receive data of one frame of the stereoscopic image data transmitted using an active video interval equivalent to more than one cycle of a vertical synchronization signal.

The receiving unit can receive data of one frame of the stereoscopic image data transmitted using the active video interval equivalent to more than one cycle of the vertical synchronization signal, the cycles of the vertical synchronization signal being irregular.

The image processing device may further include a capability information providing unit that provides capability information indicating the processing capability of the image processing device to the device as the transmitter of the stereoscopic image data.

The other aspect of the present technique is also an image processing method to be performed by an image processing device, the method including: receiving stereoscopic image data to be used for generating a multi-view image, and receives a compatible mode as 3D information, the compatible mode indicating compatibility of the format of the stereoscopic image data with an image data format, the receiving being performed by a receiving unit; determining the compatible mode of the stereoscopic image data received by the receiving unit, based on the 3D information received by the receiving unit, the determining being performed by a mode determining unit; and controlling synchronization of processing of the stereoscopic image data received by the receiving unit, based on the compatible mode determined by the mode determining unit, the controlling being performed by a synchronization control unit.

In the one aspect of the present technique, the format of stereoscopic image data to be used for generating a multi-view image is referred to, and a compatible mode indicating compatibility with an image data format is determined. Compatibility information indicating the compatible mode is generated as 3D information, and the stereoscopic image data and the 3D information are transmitted to a transmission destination of the stereoscopic image data.

In the other aspect of the present technique, stereoscopic image data to be used for generating a multi-view image is received, and a compatible mode indicating compatibility of the format of the stereoscopic image data with an image data format is also received as 3D information. Based on the received 3D information, the compatible mode of the stereoscopic image data is determined. Based on the compatible mode, synchronization of the processing of the stereoscopic image data is controlled.

### EFFECTS OF THE INVENTION

According to the present technique, communications can be performed. Particularly, image data in such a format as to generate multi-view images can be correctly transmitted.

### BRIEF DESCRIPTION OF DRAWINGS

Fig. 1 is a block diagram showing a typical example structure of an encoding device of a 3D image system.
Fig. 2 is a block diagram showing a typical example structure of a decoding device corresponding to the encoding device of the 3D image system shown in Fig. 1.
Fig. 3 is a block diagram showing another example structure of an encoding device of a 3D image system.
Fig. 4 is a block diagram showing a typical example structure of a decoding device corresponding to the encoding device of the 3D image system shown in Fig. 3.
Fig. 5 is a block diagram showing yet another example structure of an encoding device of a 3D image system.
Fig. 6 is a block diagram showing a typical example structure of a decoding device corresponding to the encoding device of the 3D image system shown in Fig. 5.
Fig. 7 is a block diagram showing a typical example structure of a transmission system to which the present technique is applied.
Fig. 8 is a block diagram showing a typical example structure of the reproducing device shown in Fig. 7.
Fig. 9 is a block diagram showing a typical example structure of the display device shown in Fig. 7.
Fig. 10 is a block diagram showing a typical example structure of a HDMI transmission system.
Fig. 11 is a diagram showing an example structure of Vendor Specific infoFrame Packet Contents.
Fig. 12 is a diagram for explaining an example expansion of 3D_Structure.
Fig. 13 is a diagram for explaining an example of conventional image transmission.
Fig. 14 is a diagram for explaining an example of image transmission to which the present technique is applied.
Fig. 15 is a diagram for explaining another example of image transmission to which the present technique is applied.
Fig. 16 is a diagram for explaining yet another example of image transmission to which the present technique is applied.
Fig. 17 is a diagram for explaining still another example of image transmission to which the present technique is applied.
Fig. 18 is a diagram for explaining yet another example of image transmission to which the present technique is applied.
Fig. 19 is a diagram for explaining still another example of image transmission to which the present technique is applied.
Fig. 20 is a diagram for explaining yet another example of image transmission to which the present technique is applied.
Fig. 21 is a flowchart for explaining an example of a transmission processing flow.
Fig. 22 is a flowchart for explaining an example of a reception processing flow.
Fig. 23 is a diagram for showing an example structure of E-EDID data.
Fig. 24 is a diagram showing an example structure of Vendor-Specific Data Block.
Fig. 25 is a diagram for explaining an example expansion of 3D_Structure_ALL_X.
Fig. 26 is a diagram for explaining an example expansion of 3D_Structure_X.
Fig. 27 is a block diagram showing another example structure of the reproducing device shown in Fig. 7.
Fig. 28 is a block diagram showing another example structure of the display device shown in Fig. 7.
Fig. 29 is a flowchart for explaining another example of a transmission processing flow.
Fig. 30 is a flowchart for explaining another example of a reception processing flow.
Fig. 31 is a block diagram showing another example structure of an encoding device of a 3D image system.
Fig. 32 is a diagram showing an example description of compatibility information and parallax image information.
Fig. 33 is a diagram showing an example specific description of the parallax image information shown in Fig. 32.
Fig. 34 is a diagram showing an example description of compatibility information and parallax image information in an auxiliary stream.
Fig. 35 is a diagram showing an example specific description of the parallax image information shown in Fig. 34.
Fig. 36 is a flowchart for explaining an encoding operation by the encoding device shown in Fig. 31.
Fig. 37 is a flowchart for explaining the encoding operation by the encoding device shown in Fig. 31.
Fig. 38 is a diagram showing an example structure of a decoding device corresponding to the encoding device shown in Fig. 31.
Fig. 39 is a flowchart for explaining a decoding operation by the decoding device shown in Fig. 38.
Fig. 40 is a block diagram showing another example structure of an encoding device of a 3D image system.
Fig. 41 is a flowchart for explaining an encoding operation by the encoding device shown in Fig. 40.
Fig. 42 is a flowchart for explaining the encoding operation by the encoding device shown in Fig. 40.
Fig. 43 is a diagram showing an example structure of a decoding device corresponding to the encoding device shown in Fig. 40.
Fig. 44 is a flowchart for explaining a decoding operation by the decoding device shown in Fig. 43.
Fig. 45 is a diagram showing examples of multiplexing patterns for objects to be encoded.
Fig. 46 is a diagram showing the characteristics of the effects of multiplexing.
Fig. 47 is a diagram showing other examples of multiplexing patterns for objects to be encoded.
Fig. 48 is a diagram showing yet other examples of multiplexing patterns for objects to be encoded.
Fig. 49 is a block diagram showing another example structure of an encoding device of a 3D image system.
Fig. 50 is a flowchart for explaining an encoding operation by the encoding device shown in Fig. 49.
Fig. 51 is a flowchart for explaining the encoding operation by the encoding device shown in Fig. 49.
Fig. 52 is a diagram showing an example structure of a decoding device corresponding to the encoding device shown in Fig. 49.
Fig. 53 is a flowchart for explaining a decoding operation by the decoding device shown in Fig. 52.
Fig. 54 is a diagram showing an example structure of a bit stream.
Fig. 55 is a diagram showing an example description of the Subset SPS of the 3DV technique for parallax images shown in Fig. 54.
Fig. 56 is a diagram showing an example description of the extension information for parallax images shown in Fig. 55.
Fig. 57 is a diagram showing an example description of the VUI extension information for parallax images in shown in Fig. 55.
Fig. 58 is a diagram showing an example description of the NAL header of 3DV encoded data.
Fig. 59 is a diagram showing an example description of the header extension information for parallax images shown in Fig. 58.
Fig. 60 is a diagram showing an example description of the SEI of the 3DV technique shown in Fig. 54.
Fig. 61 is a diagram showing another example structure of a bit stream.
Fig. 62 is a diagram showing an example description of the Subset SPS of the 3DV technique for images shown in Fig. 61.
Fig. 63 is a diagram showing an example structure of a bit stream in a case where the 3DV technique is compliant with the HEVC technique.
Fig. 64 is a diagram showing an example description of the SPS shown in Fig. 63.
Fig. 65 is a diagram showing an example description of the Subset SPS shown in Fig. 64.
Fig. 66 is a diagram showing an example description of the VUI information in the Subset SPS shown in Fig. 65.
Fig. 67 is a diagram showing an example description of the SEI of the 3DV technique shown in Fig. 63.
Fig. 68 is a block diagram showing a typical example structure of a computer to which the present technique is applied.
Fig. 69 is a diagram schematically showing the structure of a television apparatus to which the present technique is applied.
Fig. 70 is a diagram schematically showing the structure of a portable telephone device to which the present technique is applied.
Fig. 71 is a diagram schematically showing the structure of a recording/reproducing device to which the present technique is applied.
Fig. 72 is a diagram schematically showing the structure of an imaging device to which the present technique is applied.

### MODE FOR CARRYING OUT THE INVENTION

The following is a description of modes for carrying out the present technique (hereinafter referred to as the embodiments). Explanation will be made in the following order. 1. First Embodiment (Transmission System) 2. Second Embodiment (Transmission System) 3. Third Embodiment (Transmission System) 4. Fourth Embodiment (Transmission System) 5. Fifth Embodiment (Transmission System) 6. Bit Stream in the Embodiment 7. Bit Stream in a Case Where the 3DV Format is Compliant with HEVC Format 8. Sixth Embodiment (Computer) 9. Seventh Embodiment (Television Apparatus) 10. Eighth Embodiment (Portable Telephone Device) 11. Ninth Embodiment (Recording/Reproducing Device) 12. Tenth Embodiment (Imaging Device)

### <1. First Embodiment>

### [Example of a 3D Image System]

First, a system that handles stereoscopic images (3D images) that allow stereoscopic viewing by using the parallax between images. The 3D image system described below is a system that handles 3D images in a multi-view format by generating and displaying multi-view images. In the case of 3D images, a user can stereoscopically view images with the naked eye (without glasses for stereoscopic viewing).

Hereinafter, the multi-view 3D image format in which multi-view images are generated and displayed will be referred to as 3DV. Here, 3DV is a format (a technique) compliant with AVC, MVC, the later described HEVC (High Efficiency Video Coding), or the like.

In the 3DV format, 3D image data in a multi-view format are encoded on the transmission side when the 3D image data is transmitted, and the encoded data is decoded on the reception side. The 3DV format has compatibility with conventional other image formats.

That is, in the 3DV format, multi-view images formed as 3D images include images to be encoded by a conventional encoding technique so as to secure the compatibility with conventional encoding devices, and other images. In the following, each image to be encoded by a conventional encoding technique will be referred to as a compatible image, and other images for generating, by using the compatible images, images each having a larger number of viewpoints than the number of viewpoints of each compatible image will be referred to as auxiliary images.

In the following, examples of the data transmission will be described.

### [Example Structure of an Encoding Device]

First, an example in which 3D images are transmitted in such a format as to secure compatibility with conventional 2D images (Mono Compatible Mode) is described.

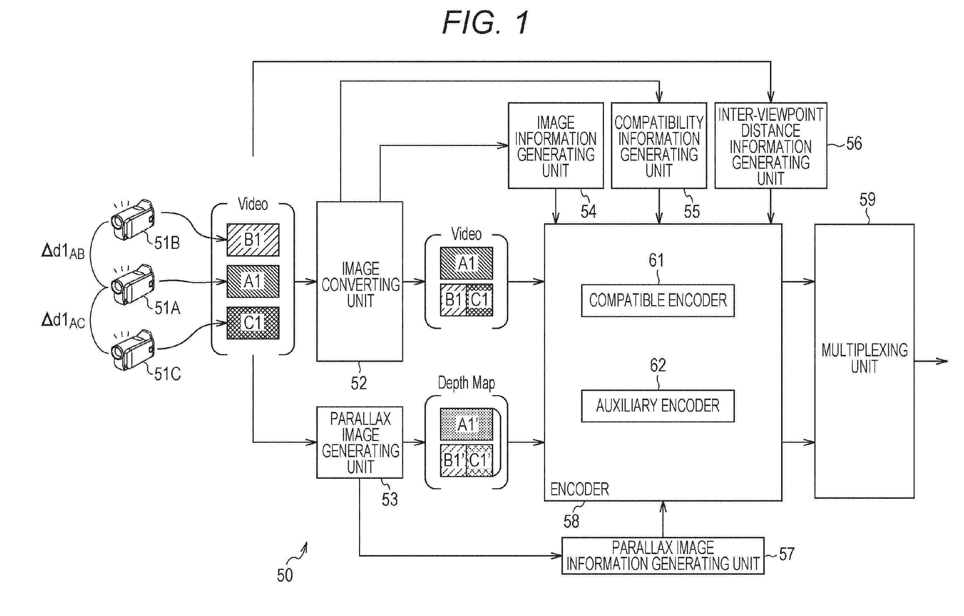

Fig. 1 is a block diagram showing a typical example structure of an encoding device of a 3D image system. The encoding device 50 shown in Fig. 1 is a device on the transmission side of the 3D image system, and encodes 3D images in Mono Compatible Mode.

As shown in Fig. 1, in the encoding device 50, an imaging unit 51A captures a HD (High Definition) image of a predetermined viewpoint as an image A1, and supplies the image A1 to an image converting unit 52, a parallax image generating unit 53, and an inter-viewpoint distance information generating unit 56. In a position at a distance Δd1_{AB} from the imaging unit 51A in a horizontal direction, an imaging unit 51 B captures a HD image, as an image B1, of a different viewpoint from that of the image A1, and supplies the image B1 to the image converting unit 52, the parallax image generating unit 53, and the inter-viewpoint distance information generating unit 56. In a position at a distance Δd1_{AC} from the imaging unit 51A in the opposite horizontal direction from the imaging unit 51 B, an imaging unit 51 C captures a HD image, as an image C1, of a different viewpoint from those of the imageA1 and the image B1, and supplies the image C1 to the image converting unit 52, the parallax image generating unit 53, and the inter-viewpoint distance information generating unit 56.

In the following, the viewpoints corresponding to the image B1 and the image C1 are the outer viewpoints among the viewpoints of an image that can be perceived as a 3D image. Accordingly, using the images A1 through C1, the decoding device corresponding to the encoding device 50 can generate a multi-view image by interpolating an image of a viewpoint that is located further inside compared with the viewpoints of the image B1 and the image C1. As a result, a multi-view image can be generated with higher precision than in a case where an image of an outer viewpoint is interpolated (extrapolated) with the use of images of inner viewpoints.

The decoding device corresponding to the encoding device 50 may of course interpolate (extrapolate) an image of a viewpoint that is located further outside compared with those of the image B1 and the image C1. Also, the distance Δd1_{AB} and the distance Δd1_{AC} may be constant, or may vary with time.

The image converting unit 52 determines the image A1 to be a compatible image, as the image A1 is supplied from the inner imaging unit 51 A of the imaging units 51 A through 51 C in the horizontal direction. The image converting unit 52 supplies information designating the image A1 as the compatible image to a compatibility information generating unit 55. The image converting unit 52 supplies the image A1 as the compatible image as it is to an encoder 58.

The image converting unit 52 also determines the image B1 and the image C1 to be auxiliary images, and multiplexes those images other than the image A1 by a predetermined multiplexing technique. For example, the image converting unit 52 reduces the horizontal resolution of the image B1 and the image C1 by half (hereinafter referred to as the 1/2 resolution image B1 and the 1/2 resolution image C1), and arranges the image B1 and the image C1 having the halved resolution in the horizontal direction, to achieve the original image size of one frame, as shown in Fig. 1. This multiplexing technique is called the Side By Side (SBS) technique.

The image converting unit 52 supplies the multiplexed image obtained as a result of the multiplexing to the encoder 58, and supplies information indicating the multiplexing technique for the auxiliary images to an image information generating unit 54.

Using the images A1 through C1 supplied from the imaging units 51A through 51C, the parallax image generating unit 53 (the parallax image generating unit) detects the parallax of each pixel of the images A1 through C1. The parallax image generating unit 53 generates a parallax image A1' indicating the parallax of each pixel of the image A1 as the compatible image, and supplies the parallax image A1' directly to the encoder 58.

The parallax image generating unit 53 also generates a parallax image B1' indicating the parallax of each pixel of the image B1 as an auxiliary image, and a parallax image C1' indicating the parallax of each pixel of the image C as an auxiliary image. The parallax images B1' and C1' are multiplexed by the same method (the Side By Side technique) as the method used for multiplexing the image B1 and the image C1. The parallax image generating unit 53 supplies the resultant multiplexed image to the encoder 58. The parallax image generating unit 53 supplies information indicating the multiplexing technique for the parallax images of the auxiliary images to a parallax image information generating unit 57.

Based on the information supplied from the image converting unit 52, the image information generating unit 54 generates information indicating the multiplexing technique for the auxiliary images and the like as image information about the compatible image and the auxiliary images, and supplies the image information to the encoder 58.

Based on the information supplied from the image converting unit 52, the compatibility information generating unit 55 (the generating unit) generates information designating the compatible image and a compatible mode as compatibility information about compatibility, and supplies the compatibility information to the encoder 58.

It should be noted that the compatible mode is the mode indicating the encoding method or multiplexing method for the compatible image (or indicating whether or not multiplexing is to be performed, the type of multiplexing technique, or the like). For example, the compatible mode may be a mono mode indicating an encoding method for encoding a compatible image of a single viewpoint by the AVC technique, a frame packing mode indicating an encoding method for multiplexing compatible images of two viewpoints and encoding the multiplexed image by the AVC technique, a stereo mode indicating an encoding method for encoding compatible images of two viewpoints by the MVC technique, or the like.

Using the images A1 through C1 supplied from the imaging unit 51 A through 51C, the inter-viewpoint distance information generating unit 56 (the inter-viewpoint distance information generating unit) detects each distance between two images among the images A1 through C1 (hereinafter referred to as the inter-viewpoint distance). For example, the inter-viewpoint distance information generating unit 56 detects inter-viewpoint distances that are the distance Δd1_{AB} between the imaging unit 51A and the imaging unit 51 B in the horizontal direction, and the distance Δd1_{AC} between the imaging unit 51A and the imaging unit 51C in the horizontal direction. The inter-viewpoint distance information generating unit 56 generates information indicating the inter-viewpoint distances and the like as inter-viewpoint distance information about the inter-viewpoint distances, and supplies the inter-viewpoint distance information to the encoder 58.

Based on the information supplied from the parallax image generating unit 53, the parallax image information generating unit 57 generates information indicating the multiplexing technique for the parallax images of the auxiliary images and the like as parallax image information about parallax images, and supplies the parallax image information to the encoder 58.

The encoder 58 is formed with a compatible encoder 61 and an auxiliary encoder 62. The compatible encoder 61 (the compatible image encoding unit) encodes the image A1 as the compatible image supplied from the image converting unit 52 by the conventional AVC technique, and adds various kinds of information to the encoded image. The resultant encoded stream is supplied as a compatible stream to a multiplexing unit 59.

The auxiliary encoder 62 (the auxiliary image encoding unit) encodes, by a predetermined technique, the multiplexed image of the auxiliary images from the image converting unit 52, and the parallax image A1' of the compatible image and the multiplexed image of the parallax images of the auxiliary images from the parallax image generating unit 53. The encoding technique used by the auxiliary encoder 62 may be the AVC technique, the MVC technique, the MPEG2 (Moving Picture Experts Group phase 2) technique, or the like.

The auxiliary encoder 62 also generates an encoded stream by adding the image information from the image information generating unit 54, the compatibility information from the compatibility information generating unit 55, the inter-viewpoint distance information from the inter-viewpoint distance information generating unit 56, the parallax image information from the parallax image information generating unit 57, and the like, to the encoded images obtained as a result of the encoding. The auxiliary encoder 62 supplies the encoded stream as an auxiliary stream to the multiplexing unit 59.

The multiplexing unit 59 generates TSs (Transport Streams) from the compatible stream supplied from the compatible encoder 61 and the auxiliary stream supplied from the auxiliary encoder 62, and multiplexes the TSs. The multiplexing unit 59 (the transmitting unit) transmits the multiplexed stream obtained as a result of the multiplexing.

### [Example Structure of a Decoding Device]

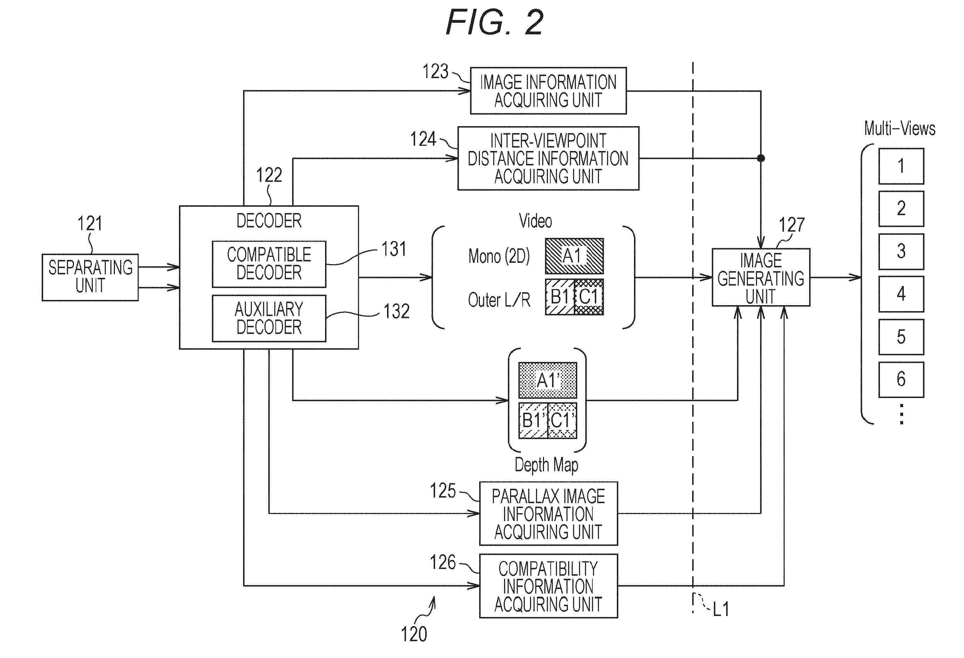

Fig. 2 is a diagram showing an example structure of a decoding device (of Mono Compatible Mode) that decodes the multiplexed stream transmitted from the encoding device 50 shown in Fig. 1.

The decoding device 120 shown in Fig. 2 includes a separating unit 121, a decoder 122, an image information acquiring unit 123, an inter-viewpoint distance information acquiring unit 124, a parallax image information acquiring unit 125, a compatibility information acquiring unit 126, and an image generating unit 127. The decoding device 120 decodes the multiplexed stream transmitted from the encoding device 50, generates a single-view image or a multi-view image, and causes a display device (not shown) to display the generated image.

Specifically, the separating unit 121 (the receiving unit) of the decoding device 120 receives the multiplexed stream transmitted from the encoding device 50, and separates the TSs from each other. The separating unit 121 extracts the compatible stream and the auxiliary stream from the separated TSs, and supplies the extracted streams to the decoder 122.

The decoder 122 is formed with a compatible decoder 131 and an auxiliary decoder 132.
Based on information that is supplied from the auxiliary decoder 132 and is for identifying the compatible stream, the compatible decoder 131 (the compatible image decoding unit) of the decoder 122 distinguishes the compatible stream from the auxiliary stream supplied from the separating unit 121. The compatible decoder 131 decodes the encoded compatible image contained in the compatible stream by a technique corresponding to the AVC technique, and supplies the resultant image A1 to the image generating unit 127.

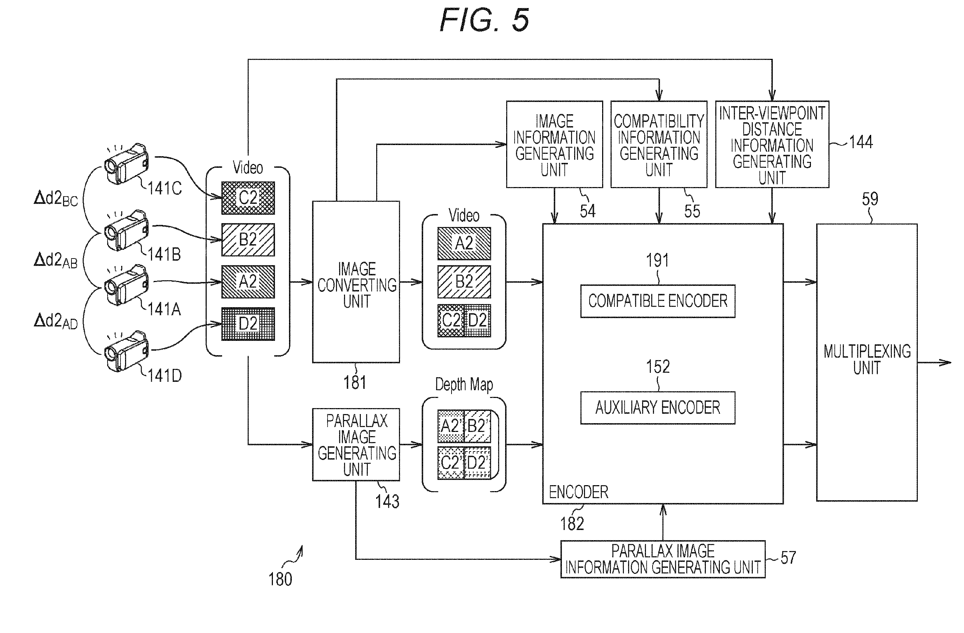

Based on the compatibility information contained in the auxiliary stream supplied from the separating unit 121, the auxiliary decoder 132 supplies information for identifying a compatible stream to the compatible decoder 131. Based on the compatibility information, the auxiliary decoder 132 identifies the auxiliary stream between the compatible stream and the auxiliary stream supplied from the separating unit 121. The auxiliary decoder 132 (the auxiliary image decoding unit) decodes, by a technique corresponding to the auxiliary encoder 62 shown in Fig. 5, the multiplexed image of the encoded auxiliary images, the parallax image A' of the compatible image, and the multiplexed image of the parallax images of the auxiliary images, which are contained in the auxiliary stream supplied from the separating unit 121.

The auxiliary decoder 132 supplies the multiplexed image of the auxiliary images, the parallax image A' of the compatible image, and the multiplexed image of the parallax images of the auxiliary images, which are obtained as a result of the decoding, to the image generating unit 127. Also, the auxiliary decoder 132 supplies the image information contained in the auxiliary stream to the image information acquiring unit 123, and supplies the inter-viewpoint distance information to the inter-viewpoint distance information acquiring unit 124. Further, the auxiliary decoder 132 supplies the parallax image information contained in the auxiliary stream to the parallax image information acquiring unit 125, and supplies the compatibility information to the compatibility information acquiring unit 126.

The image information acquiring unit 123 acquires the image information supplied from the auxiliary decoder 132, and supplies the image information to the image generating unit 127. The inter-viewpoint distance information acquiring unit 124 acquires the inter-viewpoint distance information supplied from the auxiliary decoder 132, and supplies the inter-viewpoint distance information to the image generating unit 127.

The parallax image information acquiring unit 125 acquires the parallax image information supplied from the auxiliary decoder 132, and supplies the parallax image information to the image generating unit 127. The compatibility information acquiring unit 126 acquires the compatibility information supplied from the auxiliary decoder 132, and supplies the compatibility information to the image generating unit 127.

In accordance with a display instruction from a viewer, the image generating unit 127 outputs images, and causes the display device (not shown) to display the images. Specifically, in accordance with a multi-view 3D image display instruction from a viewer, the image generating unit 127 (the generating unit) generates images that are of three or more viewpoints corresponding to the display device (not shown) and have half the resolution of the compatible image and the auxiliary images, using the compatible image, the multiplexed image of the auxiliary images, the parallax image of the compatible image, and the multiplexed image of the parallax images of the auxiliary images, based on the image information from the image information acquiring unit 123, the inter-viewpoint distance information from the inter-viewpoint distance information acquiring unit 124, the parallax image information from the parallax image information acquiring unit 125, the compatibility information from the compatibility information acquiring unit 126, and the like.

More specifically, based on the information that is contained in the parallax image information from the parallax image information acquiring unit 125 and indicates the multiplexing technique for the parallax images of the auxiliary images, the image generating unit 127 separates the parallax image of each of the auxiliary images from the multiplexed image of the parallax images of the auxiliary images, which have been multiplexed by the Side By Side technique, for example. Also, based on the information that is contained in the image information from the image information acquiring unit 123 and indicates the multiplexing technique for the auxiliary images, the image generating unit 127 separates each of the auxiliary images from the multiplexed image of the auxiliary images, which have been multiplexed by the Side By Side technique, for example.

Further, based on the inter-viewpoint distance information and the number of viewpoints corresponding to the display device (not shown), the image generating unit 127 determines the location of each of the viewpoints of the multi-view image to be generated. Using the compatible image, the respective auxiliary images, the parallax image of the compatible image, and the parallax images of the respective auxiliary images, the image generating unit 127 generates images of the respective viewpoints having the locations determined. The image generating unit 127 then converts the resolution of the generated images of the respective viewpoints to the resolution calculated by dividing the resolution of the compatible image and the auxiliary images by the number of viewpoints, and combines the generated images. The resultant image is displayed on the display device (not shown).

At this point, the multi-view image after the combining is displayed in such a manner that the viewable angle varies at each viewpoint, and the viewer can view a 3D image without glasses by seeing the images of any two viewpoints with both eyes.

Also, in accordance with a 2D image display instruction from a viewer, the image generating unit 127 outputs the image A1 as the compatible image supplied from the compatible decoder 131 of the decoder 122, and causes the display device (not shown) to display the image A1. This enables the viewer to view a 2D image.

### [Example Structure of an Encoding Device]

Next, an example in which 3D images are transmitted in such a format as to secure compatibility with conventional frame packing 3D images (Frame Packing Compatible Mode) is described.

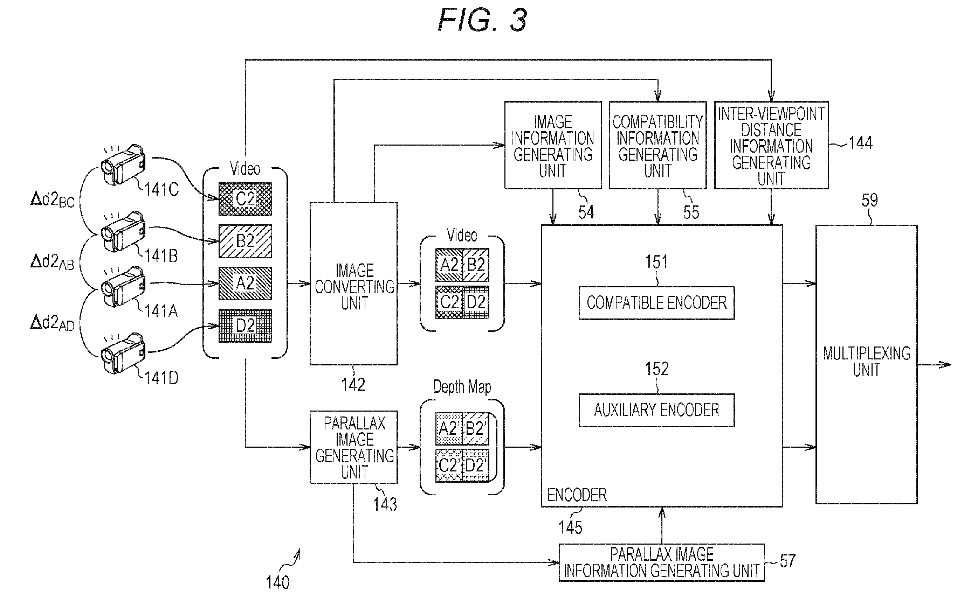

Fig. 3 is a block diagram showing another example structure of an encoding device to which the present technique is applied. In the structure illustrated in Fig. 3, the same components as those in Fig. 1 are denoted by the same reference numerals as those in Fig. 1. The explanations that have already been made will not be repeated. The encoding device 140 shown in Fig. 3 is basically the same as the encoding device 50 shown in Fig. 1, except that one set of compatible images and one set of auxiliary images are generated from four images in this Frame Packing Compatible Mode. Like the auxiliary images, the compatible images are also multiplexed by the Side By Side technique, for example.

The structure of the encoding device 140 shown in Fig. 3 differs from the structure shown in Fig. 5 mainly in that the imaging units 51A through 51C, the image converting unit 52, the parallax image generating unit 53, the inter-viewpoint distance information generating unit 56, and the encoder 58 are replaced with imaging units 141A through 141 D, an image converting unit 142, a parallax image generating unit 143, an inter-viewpoint distance information generating unit 144, and an encoder 145.

The encoding device 140 determines images of two viewpoints among images of a large number of viewpoints to be compatible images, and encodes the compatible images by the AVC technique, to secure compatibility with encoding devices that encode 3D images in a conventional two-view format.

Specifically, the imaging unit 141A of the encoding device 140 captures a HD image of a predetermined viewpoint as an image A2, and supplies the image A2 to the image converting unit 142, the parallax image generating unit 143, and the inter-viewpoint distance information generating unit 144. In a position at a distance Δd2_{AB} from the imaging unit 141A in a horizontal direction, the imaging unit 141 B captures a HD image, as an image B2, of a different viewpoint from that of the image A2, and supplies the image B2 to the image converting unit 142, the parallax image generating unit 143, and the inter-viewpoint distance information generating unit 144.

In a position at a distance Δd2_{BC} from the imaging unit 141 B in the opposite horizontal direction from the imaging unit 141A, the imaging unit 141C captures a HD image, as an image C2, of a different viewpoint from those of the image A2 and the image B2, and supplies the image C2 to the image converting unit 142, the parallax image generating unit 143, and the inter-viewpoint distance information generating unit 144. In a position at a distance Δd2_{AD} from the imaging unit 141A in the opposite horizontal direction from the imaging unit 141B, the imaging unit 141 D captures a HD image, as an image D2, of a different viewpoint from those of the images A2 through C2, and supplies the image D2 to the image converting unit 142, the parallax image generating unit 143, and the inter-viewpoint distance information generating unit 144.

In the following, the viewpoints corresponding to the image C2 and the image D2 are the outer viewpoints among the viewpoints of the image that can be perceived as a 3D image. Accordingly, using the images A2 through D2, the decoding device corresponding to the encoding device 140 can generate a multi-view image by interpolating an image of a viewpoint that is located further inside compared with the viewpoints of the image C2 and the image D2. As a result, a multi-view image can be generated with higher precision than in a case where an image of an outer viewpoint is interpolated with the use of images of inner viewpoints. The image interpolation may of course be extrapolation, as in the case illustrated in Fig. 1. The distance Δd2_{AB}, the distance Δd2_{BC}, and the distance Δd2_{AD} may be constant, or may vary with time.

The image converting unit 142 determines the image A2 and the image B2 to be compatible images, as the image A2 and the image B2 are supplied from the imaging unit 141A and the imaging unit 141B, which are located in inner positions among the imaging units 141A through 141 D in the horizontal direction. The image converting unit 142 multiplexes the image A2 and the image B2 as the compatible images by a predetermined multiplexing technique, and supplies the multiplexed image to the encoder 145.

For example, the image converting unit 142 multiplexes the image A2 and the image B2 by the Side By Side technique, as shown in Fig. 3. The image converting unit 142 also supplies information designating the image A2 and the image B2 as the compatible images to the compatibility information generating unit 55.

The image converting unit 142 also determines the image C2 and the image D2 to be auxiliary images, and multiplexes those images other than the image A2 and the image B2 by a predetermined multiplexing technique. For example, the image converting unit 142 may also multiplex the image C2 and the image D2 by the Side By Side technique.

The image converting unit 142 supplies the multiplexed images obtained as a result of the multiplexing to the encoder 145. The image converting unit 142 supplies information indicating the multiplexing techniques for the compatible images and the auxiliary images to the image information generating unit 54.

Using the images A2 through D2 supplied from the imaging units 141A through 141D, the parallax image generating unit 143 detects the parallax of each pixel of the images A2 through D2. The parallax image generating unit 143 generates a parallax image A2' indicating the parallax of each pixel of the image A2 as a compatible image and a parallax image B2' indicating the parallax of each pixel of the image B2 as a compatible image, and multiplexes those parallax images by a predetermined multiplexing technique. For example, the parallax image generating unit 143 multiplexes the parallax image A2' and the parallax image B2' by the Side By Side technique. The parallax image generating unit 143 supplies the resultant multiplexed image to the encoder 145.

The parallax image generating unit 143 also generates a parallax image C2' indicating the parallax of each pixel of the image C2 as an auxiliary image and a parallax image D2' indicating the parallax of each pixel of the image D2 as an auxiliary image, and multiplexes those parallax images by a predetermined multiplexing technique. For example, the parallax image generating unit 143 multiplexes the parallax image C2' and the parallax image D2' by the Side By Side technique. The parallax image generating unit 143 supplies the resultant multiplexed image to the encoder 145. The parallax image generating unit 143 supplies information indicating the multiplexing techniques for the parallax images of the compatible images and the auxiliary images to the parallax image information generating unit 57.

Using the images A2 through D2 supplied from the imaging units 141 A through 141D, the inter-viewpoint distance information generating unit 144 detects the inter-viewpoint distances among the images A2 through D2. For example, the inter-viewpoint distance information generating unit 144 detects inter-viewpoint distances that are the distance Δd2_{AB} between the imaging unit 141A and the imaging unit 141 B in the horizontal direction, the distance Δd2_{BC} between the imaging unit 141 B and the imaging unit 141C in the horizontal direction, and the distance Δd2_{AD} between the imaging unit 141A and the imaging unit 141 D in the horizontal direction. The inter-viewpoint distance information generating unit 144 generates information indicating the inter-viewpoint distances and the like as inter-viewpoint distance information, and supplies the inter-viewpoint distance information to the encoder 145.

The encoder 145 is formed with a compatible encoder 151 and an auxiliary encoder 152. The compatible encoder 151 encodes the multiplexed image of the compatible images supplied from the image converting unit 142 by the conventional AVC technique, and adds various kinds of information to the encoded image. The resultant encoded stream is supplied as a compatible stream to the multiplexing unit 59.

The auxiliary encoder 152 encodes, by a predetermined technique, the multiplexed image of the auxiliary images from the image converting unit 142, and the multiplexed image of the parallax images of the compatible images and the multiplexed image of the parallax images of the auxiliary images from the parallax image generating unit 143. The encoding technique used by the auxiliary encoder 152 may be the AVC technique, the MVC technique, or the like.

The auxiliary encoder 152 also generates an encoded stream by adding the image information from the image information generating unit 54, the compatibility information from the compatibility information generating unit 55, the inter-viewpoint distance information from the inter-viewpoint distance information generating unit 144, the parallax image information from the parallax image information generating unit 57, and the like, to the encoded images obtained as a result of the encoding. The auxiliary encoder 152 supplies the encoded stream as an auxiliary stream to the multiplexing unit 59.

### [Example Structure of a Decoding Device]

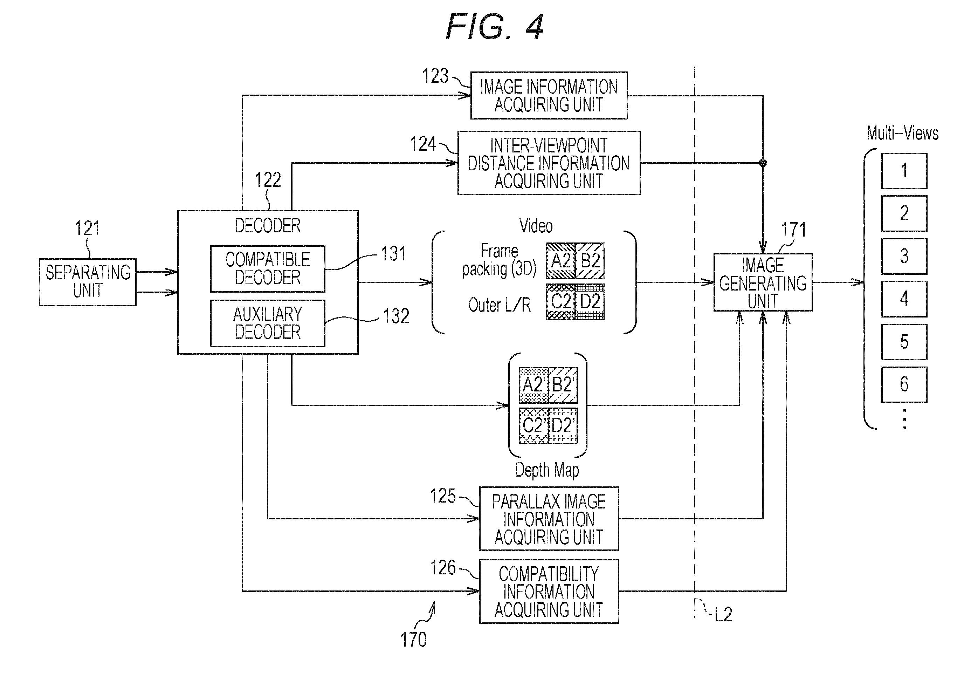

Fig. 4 is a diagram showing an example structure of a decoding device (of Frame Packing Compatible Mode) that decodes the multiplexed stream transmitted from the encoding device 140 shown in Fig. 3. In the structure illustrated in Fig. 4, the same components as those in Fig. 2 are denoted by the same reference numerals as those in Fig. 2. The explanations that have already been made will not be repeated.

The structure of the decoding device 170 shown in Fig. 4 differs from the structure shown in Fig. 2 mainly in that the image generating unit 127 is replaced with an image generating unit 171. The decoding device 170 decodes the multiplexed stream of the Frame Packing Compatible Mode transmitted from the encoding device 140, generates a double-viewpoint image or a multi-view image, and causes a display device (not shown) to display the generated image.

Specifically, in accordance with a display instruction from a viewer, the image generating unit 171 of the decoding device 170 outputs images, and causes the display device (not shown) to display the images. Particularly, in accordance with a multi-view 3D image display instruction from a viewer, the image generating unit 171 generates images that are of three or more viewpoints corresponding to the display device (not shown) and have half the resolution of the compatible images and the auxiliary images, using the multiplexed image of the compatible images, the multiplexed image of the auxiliary images, the multiplexed image of the parallax images of the compatible images, and the multiplexed image of the parallax images of the auxiliary images, based on the image information from the image information acquiring unit 123, the inter-viewpoint distance information from the inter-viewpoint distance information acquiring unit 124, the parallax image information from the parallax image information acquiring unit 125, the compatibility information from the compatibility information acquiring unit 126, and the like.

More specifically, based on the information that is contained in the parallax image information from the parallax image information acquiring unit 125 and indicates the multiplexing technique for the parallax images of the auxiliary images, the image generating unit 171 separates the parallax image of each of the auxiliary images from the multiplexed image of the parallax images of the auxiliary images. In a case where the parallax images of the auxiliary images have been multiplexed by the Side By Side technique, for example, the image generating unit 171 separates the parallax images into two images lying side by side.

Also, based on the information that is contained in the parallax image information and indicates the multiplexing technique for the parallax images of the compatible images, the image generating unit 171 separates the parallax image of each of the compatible images from the multiplexed image of the parallax images of the compatible images. In a case where the parallax images of the compatible images have been multiplexed by the Side By Side technique, for example, the image generating unit 171 separates the parallax images into two images lying side by side.

Further, based on the information that is contained in the image information from the image information acquiring unit 123 and indicates the multiplexing technique for the auxiliary images, the image generating unit 171 separates each of the auxiliary images from the multiplexed image of the auxiliary images. In a case where the auxiliary images have been multiplexed by the Side By Side technique, for example, the image generating unit 171 separates the auxiliary images into two images lying side by side.

Also, based on the information that is contained in the image information and indicates the multiplexing technique for the compatible images, the image generating unit 171 separates each of the compatible images from the multiplexed image of the compatible images. In a case where the compatible images have been multiplexed by the Side By Side technique, for example, the image generating unit 171 separates the compatible images into two images lying side by side.

Also, based on the inter-viewpoint distance information and the number of viewpoints corresponding to the display device (not shown), the image generating unit 171 determines the location of each of the viewpoints of the multi-view image to be generated. Using the respective compatible images, the respective auxiliary images, the parallax images of the respective compatible images, and the parallax images of the respective auxiliary images, the image generating unit 171 generates images of the respective viewpoints having the locations determined. The image generating unit 171 then converts the resolution of the generated images of the respective viewpoints to the resolution calculated by dividing the resolution of the compatible images and the auxiliary images by the number of viewpoints, and combines the generated images. The resultant image is displayed on the display device (not shown).

At this point, the multi-view image after the combining is displayed in such a manner that the viewable angle varies at each viewpoint, and the viewer can view a 3D image without glasses by seeing the images of any two viewpoints with both eyes.

In accordance with a two-view 3D image display instruction from a viewer, the image generating unit 171 separates the multiplexed image of the compatible images supplied from the decoder 122 into the image A2 and the image B2 with half the resolution of the compatible images, based on the image information from the image information acquiring unit 123. The image generating unit 171 alternately outputs the image A2 and the image B2 with half the resolution of the separated compatible images, and causes the display device (not shown) to display those images. At this point, the viewer puts on glasses that open one of the shutter for the left eye and the shutter for the right eye when the image A2 is displayed, and open the other one of the shutters when the image B2 is displayed. Wearing the glasses, the viewer sees the image A2 and the image B2 that are alternately displayed on the display device. In this manner, the viewer can view a 3D image.

In the examples illustrated in Figs. 3 and 4, the compatible images, the auxiliary images, and the parallax images of the compatible and auxiliary images may be multiplexed by TAB (Top And Bottom) technique (also referred to as Top Over Bottom (TOB) technique), instead of the Side By Side technique.

The TAB (Top And Bottom) technique is a multiplexing technique for halving the vertical resolution of two images to be multiplexed, arranging the two images having the halved resolution in the vertical direction, and achieving the original image size of one frame.

### [Example Structure of an Encoding Device]

Next, an example in which 3D images are transmitted in such a format as to secure compatibility with conventional stereoscopic 3D images (Stereo Scopic Compatible Mode) is described. In the case of a conventional stereoscopic 3D image, an image for the left eye and an image for the right eye, which form parallaxes, are alternately displayed.

Fig. 5 is a block diagram showing another example structure of an encoding device to which the present technique is applied. In the structure illustrated in Fig. 5, the same components as those in Fig. 1 are denoted by the same reference numerals as those in Fig. 1. The explanations that have already been made will not be repeated. The encoding device 140 shown in Fig. 5 is basically the same as the encoding device 50 shown in Fig. 1, except that two compatible images and one set of auxiliary images are generated from four images in this Stereo Scopic Compatible Mode. The compatible images are not multiplexed, and the auxiliary images are multiplexed by the Side By Side technique, for example.

The structure of the encoding device 180 shown in Fig. 5 differs from the structure shown in Fig. 3 mainly in that the image converting unit 142 and the encoder 145 are replaced with an image converting unit 181 and an encoder 182. The encoding device 180 determines images of two viewpoints among images of a large number of viewpoints to be compatible images, and encodes the compatible images by the MVC technique, to secure compatibility with encoding devices that encode 3D images in a conventional two-view format.

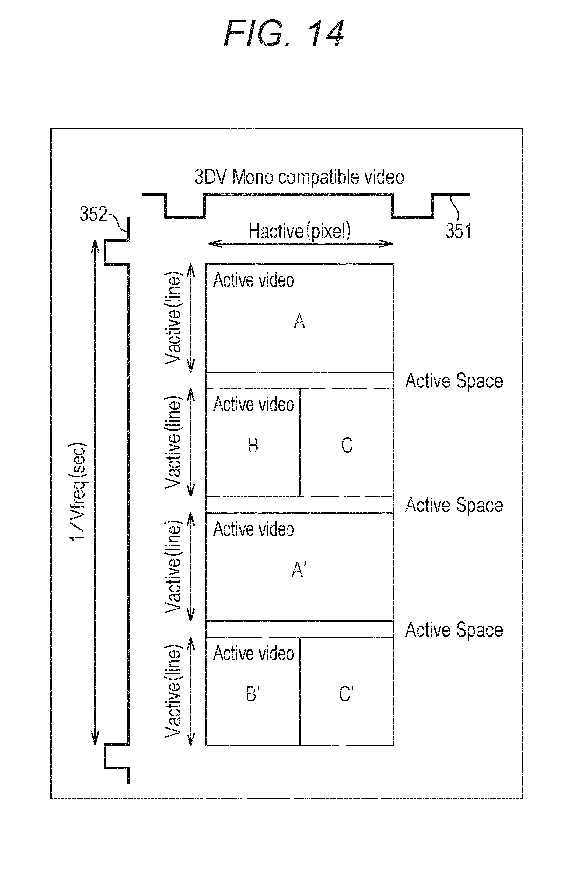

Specifically, like the image converting unit 142 shown in Fig. 14, the image converting unit 181 of the encoding device 180 determines the image A2 and the image B2 to be compatible images, as the image A2 and the image B2 are supplied from the imaging unit 141A and the imaging unit 141B, which are located in inner positions among the imaging units 141A through 141 D in the horizontal direction. For example, the image A2 is the image for the left eye, and the image B2 is the image for the right eye.

The image converting unit 181 then supplies the image A1 and the image A2 as the compatible images directly (without multiplexing the compatible images) to the encoder 182. Like the image converting unit 142, the image converting unit 181 also supplies information designating the image A2 and the image B2 as the compatible images to the compatibility information generating unit 55.

Like the image converting unit 142, the image converting unit 181 also determines the image C2 and the image D2 to be auxiliary images, and multiplexes those images other than the image A2 and the image B2 by a predetermined multiplexing technique. For example, the image converting unit 142 may multiplex the image C2 and the image D2 by the Side By Side technique.

The image converting unit 181 supplies the multiplexed image obtained as a result of the multiplexing to the encoder 182, and supplies information indicating the multiplexing technique for the auxiliary images to the image information generating unit 54.

The encoder 182 is formed with a compatible encoder 191 and the auxiliary encoder 152. The compatible encoder 191 of the encoder 182 determines the image A2 of the compatible images supplied from the image converting unit 181 to be a base image, and encodes the base image by the conventional AVC technique. The encoder 182 determines the image B2 to be a dependent image, and encodes the dependent image by the conventional MVC technique. The compatible encoder 191 generates an encoded stream by adding various kinds of information to the resultant encoded images, and supplies the encoded stream as a compatible stream to the multiplexing unit 59.

It should be noted that parallax information is generated in the same manner as in the case of the encoding device 140 shown in Fig. 3.

### [Example Structure of a Decoding Device]

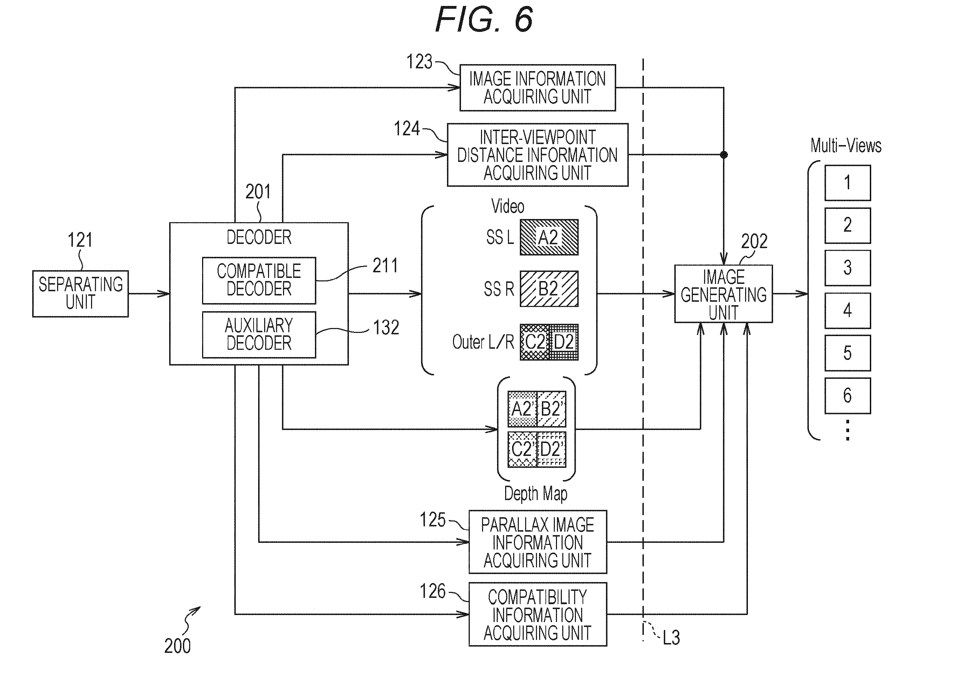

Fig. 6 is a diagram showing an example structure of a decoding device (of Frame Packing Compatible Mode) that decodes the multiplexed stream transmitted from the encoding device 180 shown in Fig. 5. In the structure illustrated in Fig. 6, the same components as those in Fig. 4 are denoted by the same reference numerals as those in Fig. 4. The explanations that have already been made will not be repeated.

The structure of the decoding device 200 shown in Fig. 6 differs from the structure shown in Fig. 2 mainly in that the decoder 122 and the image generating unit 127 are replaced with a decoder 201 and an image generating unit 202. The decoding device 200 decodes the multiplexed stream transmitted from the encoding device 180, generates a two-view image or a multi-view image, and causes a display device (not shown) to display the generated image.

Specifically, the decoder 201 of the decoding device 200 is formed with a compatible decoder 211 and the auxiliary decoder 132. Based on information that is supplied from the auxiliary decoder 132 and is for identifying the compatible stream, the compatible decoder 211 of the decoder 201 distinguishes the compatible stream from the auxiliary stream supplied from the separating unit 121, like the compatible decoder 131 shown in Fig. 2. The compatible decoder 211 decodes the encoded compatible images contained in the compatible stream by a technique corresponding to the MVC technique, and supplies the resultant images A2 and B2 to the image generating unit 202.

In accordance with a display instruction from a viewer, the image generating unit 202 outputs images, and causes the display device (not shown) to display the images. Specifically, in accordance with a multi-view 3D image display instruction from a viewer, the image generating unit 202 generates images that are of three or more viewpoints corresponding to the display device (not shown) and have half the resolution of the compatible images and the auxiliary images, using the compatible images, the multiplexed image of the auxiliary images, the multiplexed image of the parallax images of the compatible images, and the multiplexed image of the parallax images of the auxiliary images, based on the image information from the image information acquiring unit 123, the inter-viewpoint distance information from the inter-viewpoint distance information acquiring unit 124, the parallax image information from the parallax image information acquiring unit 125, the compatibility information from the compatibility information acquiring unit 126, and the like.

More specifically, based on the information that is contained in the parallax image information from the parallax image information acquiring unit 125 and indicates the multiplexing technique for the parallax images of the auxiliary images, the image generating unit 202 separates the parallax image of each of the auxiliary images from the multiplexed image of the parallax images of the auxiliary images. In a case where the parallax images of the auxiliary images have been multiplexed by the Side By Side technique, for example, the image generating unit 202 separates the parallax images of the auxiliary images into two images lying side by side.

Also, based on the information that is contained in the parallax image information and indicates the multiplexing technique for the parallax images of the compatible images, the image generating unit 202 separates the parallax image of each of the compatible images from the multiplexed image of the parallax images of the compatible images. In a case where the parallax images of the compatible images have been multiplexed by the Side By Side technique, for example, the image generating unit 202 separates the parallax images of the compatible images into two images lying side by side.

Further, based on the information that is contained in the image information from the image information acquiring unit 123 and indicates the multiplexing technique for the auxiliary images, the image generating unit 202 separates each of the auxiliary images from the multiplexed image of the auxiliary images. In a case where the compatible images have been multiplexed by the Side By Side technique, for example, the image generating unit 202 separates the compatible images into two images lying side by side.

Also, based on the inter-viewpoint distance information and the number of viewpoints corresponding to the display device (not shown), the image generating unit 202 determines the location of each of the viewpoints of the multi-view image to be generated. Using the respective compatible images, the respective auxiliary images, the parallax images of the respective compatible images, and the parallax images of the respective auxiliary images, the image generating unit 202 generates images of the respective viewpoints having the locations determined. The image generating unit 202 then converts the resolution of the generated images of the respective viewpoints to the resolution calculated by dividing the resolution of the compatible images and the auxiliary images by the number of viewpoints, and combines the generated images, like the image generating unit 127. The resultant image is displayed on the display device (not shown).

At this point, the multi-view image after the combining is displayed in such a manner that the viewable angle varies at each viewpoint, and the viewer can view a 3D image without glasses by seeing the images of any two viewpoints with both eyes.

Also, in accordance with a two-view 3D image display instruction from a viewer, the image generating unit 202 alternately outputs the image A2 and the image B2 as the compatible images supplied from the decoder 122, and causes the display device (not shown) to display those images. At this point, the viewer puts on glasses that open one of the shutter for the left eye and the shutter for the right eye when the image A2 is displayed, and open the other one of the shutters when the image B2 is displayed. Wearing the glasses, the viewer sees the image A2 and the image B2 that are alternately displayed on the display device. In this manner, the viewer can view a 3D image.

### [Baseband Data Transmission]

In the above described decoding device 120 shown in Fig. 2, for example, the left side (the separating unit 121 and the decoder 122) of the dashed line L1 is designed as a reproducing device, and the right side (the image generating unit 127) of the dashed line L1 is designed as a display device.

The reproducing device may be a player or a recorder (with a playback function) that reads and reproduces 3D image data recorded on a recording medium, for example. Also, the reproducing device may be a network device such as a set-top box that obtains 3D image data from outside and reproduces the obtained image data. The display device may be a CRT display, a LCD, an organic EL display, a projector, or the like.

The compatible image, the auxiliary images, and the parallax images of those images need to be transmitted as baseband data from the reproducing device to the display device in this case.

The same applies to the case of the decoding device 170 shown in Fig. 4. The structure on the left side of the dashed line L2 is the reproducing device, and the structure on the right side is the display device. In this case, the compatible images, the auxiliary images, and the parallax images of those images need to be transmitted as baseband data between the reproducing device and the display device.

The same applies to the case of the decoding device 200 shown in Fig. 6. The structure on the left side of the dashed line L3 is the reproducing device, and the structure on the right side is the display device. In this case, the compatible images, the auxiliary images, and the parallax images of those images need to be transmitted as baseband data between the reproducing device and the display device.

There are many standards for communications between audio-visual devices such as the reproducing device and the display device. However, there have been no baseband transmission methods for transmitting data in a 3D image format compliant with the 3DV format described with reference to Figs. 1 through 6 between audio-visual devices.

For example, there is HDMI (High Definition Multimedia Interface) as an interface that connects digital devices.

HDMI is an interface for digital appliances, and was developed by modifying DVI (Digital Visual Interface), which is a standard for connections between PCs (Personal Computers) and displays. HDMI was developed for audio-visual appliances by adding a voice transmitting function, a copyright protecting function (a function to prevent unauthorized copying of digital content and the like), and a color-difference transmitting function, to DVI. The HDMI 1.0 specification was formulated in December, 2002.

HDMI has the advantage that uncompressed digital sound and video are transmitted without image and sound quality degradation. HDMI is currently based on the function with the full-spec high definition (full HD: the resolution being 1920 pixels in a horizontal line and 1080 pixels in a vertical line). As uncompressed video and sound can be transferred from a player to a television device, there is no need to prepare a special-purpose chip such as a decoder or software. HDMI also has an intelligent function to make connected devices recognize each other.

Also, video, audio, and control signals are transmitted through a single cable. Accordingly, the wiring in audio-visual devices can be advantageously simplified. As control signals and the like can also be transmitted, coordination between audio-visual devices is easy.

HDMI is currently compatible with conventional 3D image formats such as the frame packing and stereoscopic formats.

However, 3DV format data contains information that is not specified in conventional 3D image formats, as described above. Therefore, there is a possibility that 3DV format data cannot be correctly transmitted even in accordance with the HDMI standard.

### [Structure of a Transmission System]

In view of this, the transmission of (decoded) 3D image data in the 3DV format between a reproducing device and a display device is described below.

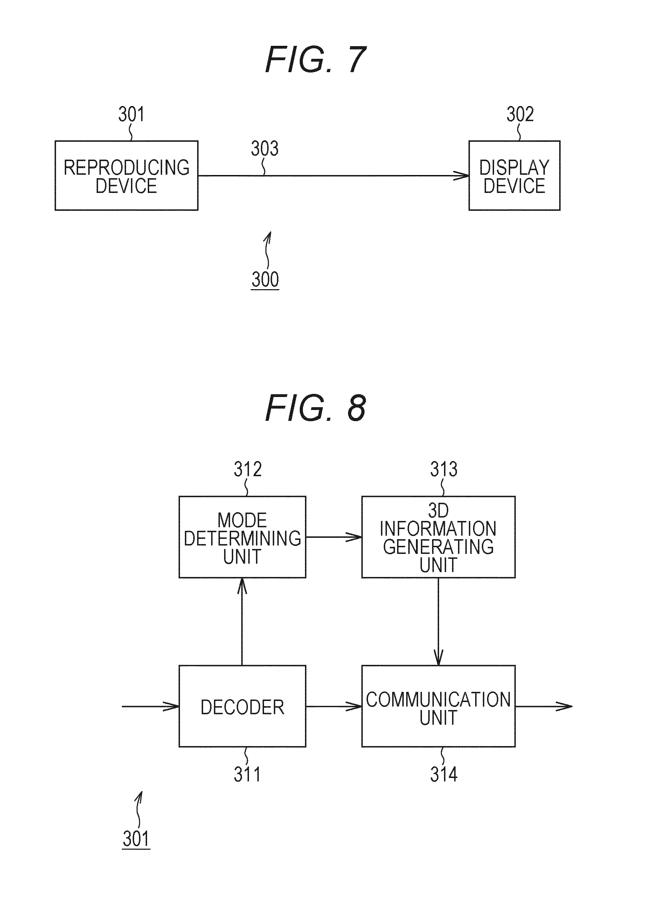

Fig. 7 is a block diagram showing a typical example structure of a transmission system to which the present technique is applied. The transmission system 300 shown in Fig. 7 is a system that transmits decoded 3D image data in the 3DV format as described above.

As shown in Fig. 7, the transmission system 300 includes a reproducing device 301 and a display device 302, which are connected by a HDMI cable 303 in such a manner that data transmission can be performed.

The reproducing device 301 reproduces 3D image data that is read from a recording medium or is obtained from another device, and supplies the data to the display device 302 via the HDMI cable 303. The reproducing device 301 has the structure (the structure for the compatible image(s), the auxiliary images, and the parallax images of those images) on the left side of one of the dashed lines L1 through L3 in the above described decoding devices.

The display device 302 generates a multi-view image for display from the 3D image data transmitted from the reproducing device 301 via the HDMI cable 303, and displays the multi-view image. The display device 302 has the structure (the structure for the compatible image(s), the auxiliary images, and the parallax images of those images) on the right side of one of the dashed lines L1 through L3 in the above described decoding devices.

In the transmission system 300, 3D image data is transmitted from the reproducing device 301 to the display device 302 via the HDMI cable 303 in accordance with the HDMI standard.

### [Structure of the Reproducing Device]

Fig. 8 is a diagram showing a typical example structure of the part involved in data transmission in the reproducing device 301, which is a transmitting-end device in data transmission in accordance with the HDMI standard.

As shown in Fig. 8, the reproducing device 301 includes a decoder 311, a mode determining unit 312, a 3D information generating unit 313, and a communication unit 314.

The decoder 311 decodes encoded 3D image data, and supplies the baseband 3D image data to the mode determining unit 312 and the communication unit 314.

The mode determining unit 312 examines the structure (format) of the supplied 3D image data, and determines whether the mode of the 3D image data is Mono Compatible Mode, Frame Packing (Side By Side) Compatible Mode, Frame Packing (Top and Bottom) Compatible Mode, or Stereo Scopic Compatible Mode. The determination result is supplied to the 3D information generating unit 313.

The 3D information generating unit 313 generates 3D information that contains information indicating that the 3D image data is image data in the 3DV format, and information indicating the compatibility-related mode determined by the mode determining unit 312. The 3D information is inserted to a predetermined portion of the 3D image data to be transmitted. For example, the 3D information generating unit 313 extends VSIFPC (Vendor Specific infoFrame Packet Contents) of the HDMI standard, and stores the 3D information thereinto.

The communication unit 314 performs communications with the display device 302 in accordance with the HDMI standard. For example, the communication unit 314 transmits the 3D image data supplied from the decoder 311 to the display device 302.

### [Structure of the Display Device]

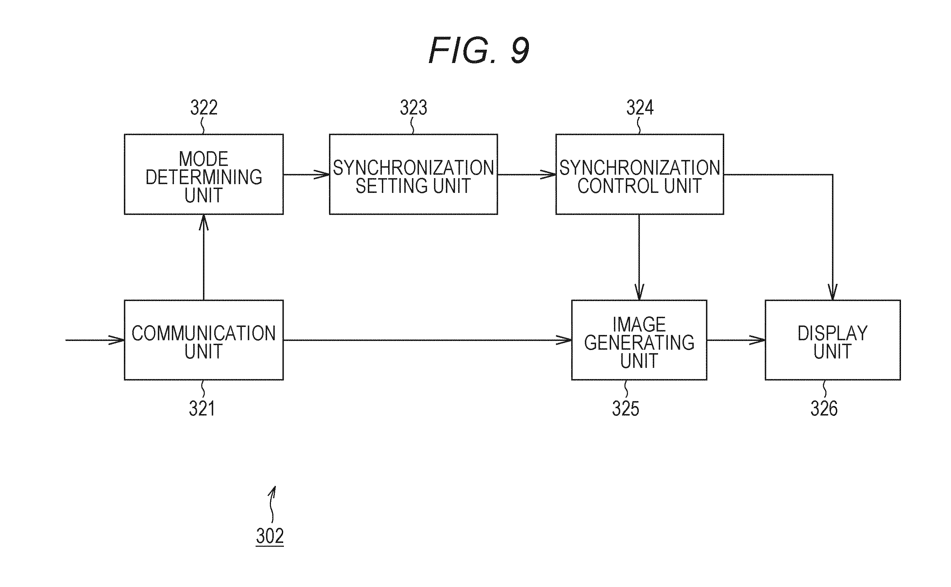

Fig. 9 is a diagram showing a typical example structure of the part involved in data transmission in the display device 302, which is a receiving-end device in data transmission in accordance with the HDMI standard.

As shown in Fig. 9, the display device 302 includes a communication unit 321, a mode determining unit 322, a synchronization setting unit 323, a synchronization control unit 324, an image generating unit 325, and a display unit 326.

The communication unit 321 performs communications with the reproducing device 301 in accordance with the HDMI standard. For example, the communication unit 321 receives the 3D image data transmitted from the reproducing device 301, and supplies the received data to the mode determining unit 322 and the image generating unit 325.

The mode determining unit 322 refers to the 3D image information contained in the 3D image data supplied from the communication unit 321, and determines the mode of the 3D image data. For example, the mode determining unit 322 determines whether the mode of the 3D image data is Mono Compatible Mode, Frame Packing (Side By Side) Compatible Mode, Frame Packing (Top and Bottom) Compatible Mode, or Stereo Scopic Compatible Mode. The synchronization setting unit 323 is notified of the determination result.

The synchronization setting unit 323 sets a synchronization method in accordance with the determined mode. In accordance with the synchronization method set by the synchronization setting unit 323, the synchronization control unit 324 supplies a synchronization signal to the image generating unit 325 and the display unit 326, to control the operating timings of the image generating unit 325 and the display unit 326.

Using the 3D image data (the compatible image(s), the auxiliary images, and the parallax images of those images) supplied via the communication unit 321, the image generating unit 325 generates a display multi-view image having a number of viewpoints that is designated by a user or the like or can be handled by the display unit 326. The multi-view image is supplied to the display unit 326, which then displays the multi-view image.

The display unit 326 includes a display such as a CRT display or a LCD, and displays the display multi-view image supplied from the image generating unit 325 toward the respective viewpoints.

### [HDMI Data Transmission]

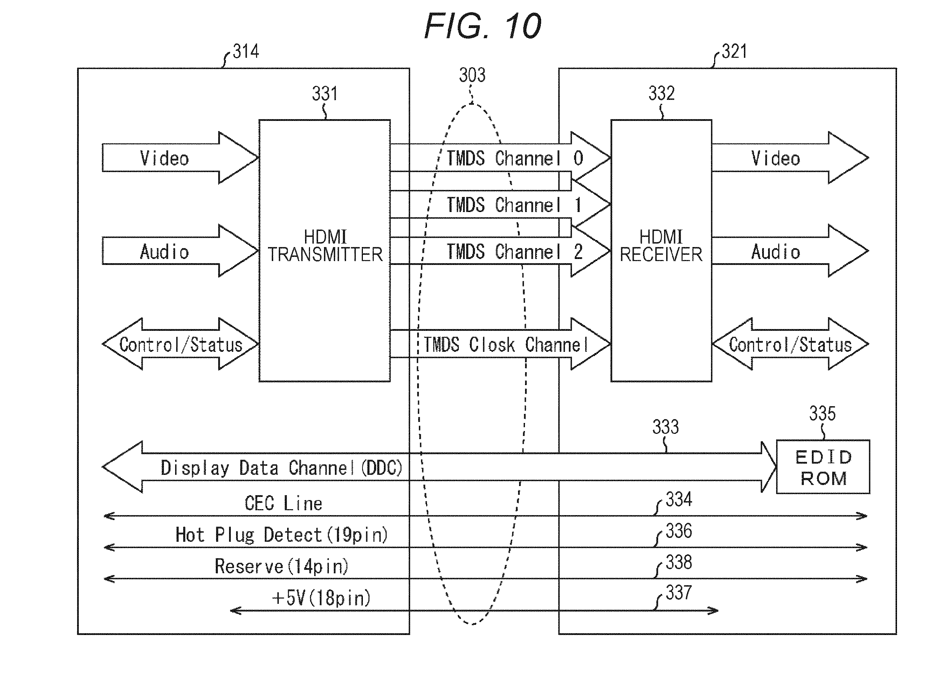

Next, the communication unit 314 (the HDMI transmitting unit) of the reproducing device 301 and the communication unit 321 (the HDMI receiving unit) of the display device 302 are described. Fig. 10 is a block diagram showing specific example structures of the communication unit 314 and the communication unit 321.

In an effective image interval (hereinafter also referred to as the active video interval, where appropriate) that is an interval calculated by subtracting a horizontal blanking interval and a vertical blanking interval from the interval of a predetermined number of vertical synchronization signals, the communication unit 314 serving as the HDMI transmitting unit unidirectionally transmits a differential signal corresponding to uncompressed pixel data of an image of one screen to the communication unit 321 serving as the HDMI receiving unit through channels. In the horizontal blanking interval or the vertical blanking interval, the communication unit 314 also unidirectionally transmits a differential signal corresponding to the audio data accompanying at least the image, control data, other auxiliary data, and the like, to the communication unit 321 through the channels.

That is, the communication unit 314 includes a HDMI transmitter 331. The HDMI transmitter 331 converts encoded data into the corresponding differential signal, and unidirectionally and serially transmits the differential signal to the communication unit 321 connected thereto via the HDMI cable 303, through the channels, which are three TMDS channels #0, #1, and #2.

Also, the HDMI transmitter 331 converts the audio data accompanying the encoded data, as well as necessary control data, other auxiliary data, and the like, into the corresponding differential signal, and unidirectionally and serially transmits the differential signal to the communication unit 321 connected thereto via the HDMI cable 303, through the three TMDS channels #0, #1, and #2.

Further, the HDMI transmitter 331 transmits pixel clocks synchronized with the pixel data being transmitted through the three TMDS channels #0, #1, and #2, to the communication unit 321 connected thereto via the HDMI cable 303, through a TMDS clock channel. Here, in one TMDS channel #i (i = 0, 1, 2), 10-bit data is transmitted in one clock of the pixel clocks, for example.

In the active video interval, the communication unit 321 receives the differential signal corresponding to the pixel data transmitted unidirectionally from the communication unit 314 through the channels. In the horizontal blanking interval or the vertical blanking interval, the communication unit 321 also receives the differential signal corresponding to the audio data and the control data transmitted unidirectionally from the communication unit 314 through the channels.

That is, the communication unit 321 includes a HDMI receiver 332. Through the TMDS channels #0, #1, and #2, the HDMI receiver 332 receives the differential signal corresponding to the pixel data and the differential signal corresponding to the audio data and the control data, which are transmitted unidirectionally from the communication unit 314 connected thereto via the HDMI cable 303, in synchronization with the pixel clocks also transmitted from the communication unit 314 through the TMDS clock channel.

The transmission channels in the HDMI system formed with the communication unit 314 and the communication unit 321 include transmission channels such as a DDC (Display Data Channel) 333 and a CEC line 334, as well as the three TMDS channels #0 through #2 serving as the transmission channels for unidirectionally and serially transmitting encoded data and audio data from the communication unit 314 to the communication unit 321 in synchronization with the pixel clocks, and the TMDS clock channel serving as the transmission channel for transmitting the pixel clocks.

The DDC 333 is formed with two signal lines (not shown) included in the HDMI cable 303, and is used by the communication unit 314 to read E-EDID from the communication unit 321 connected thereto via the HDMI cable 303.

That is, the communication unit 321 includes not only the HDMI receiver 332 but also an EDID ROM (Read Only Memory) 335 storing the E-EDID, which is performance information about the performance (configuration/capability) thereof. Through the DDC 333, the communication unit 314 reads the E-EDID of the communication unit 321 from the communication unit 321 connected thereto via the HDMI cable 303. Based on the E-EDID, the communication unit 314 recognizes the image format (profile) with which the electronic device including the communication unit 321 is compatible, such as RGB, YCbCr 4:4:4, YCbCr 4:2:2, or YCbCr 4:2:0.

The CEC line 334 is formed with one signal line (not shown) included in the HDMI cable 303, and is used for bidirectional communication of control data between the communication unit 314 and the communication unit 321.

The HDMI cable 303 also includes a line 336 connected to a pin called HPD (Hot Plug Detect). A source device can use the line 336 to detect a connection with a sink device. The HDMI cable 303 also includes a line 337 that is used for supplying power from a source device to a sink device. The HDMI cable 303 further includes a reserve line 338 for extensions.

### [3D Information Description]

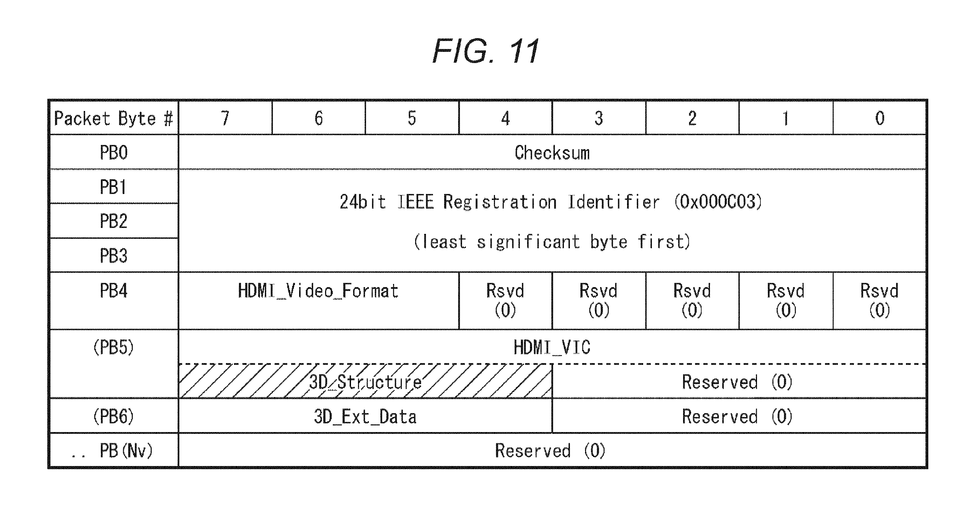

In the HDMI standard data transmission described above, the 3D information generating unit 313 extends Vendor Specific infoFrame Packet Contents of the HDMI standard as shown in Fig. 11, for example, and writes 3D information indicating a mode.

Vendor Specific infoFrame Packet Contents shown in Fig. 11 is information that is transmitted, together with data, from a transmitting end to a receiving end, and indicates what kind of data is now being transmitted. A receiving-end device can easily recognize what kind of data is now being transmitted, by referring to this Vendor Specific infoFrame Packet Contents.

As shown in Fig. 11, the shaded portion of Vendor Specific infoFrame Packet Contents is a field for a description of the information about 3D image data (3D_Structure). The 3D information generating unit 313 extends the value of this region (3D_Structure), and writes 3D information.

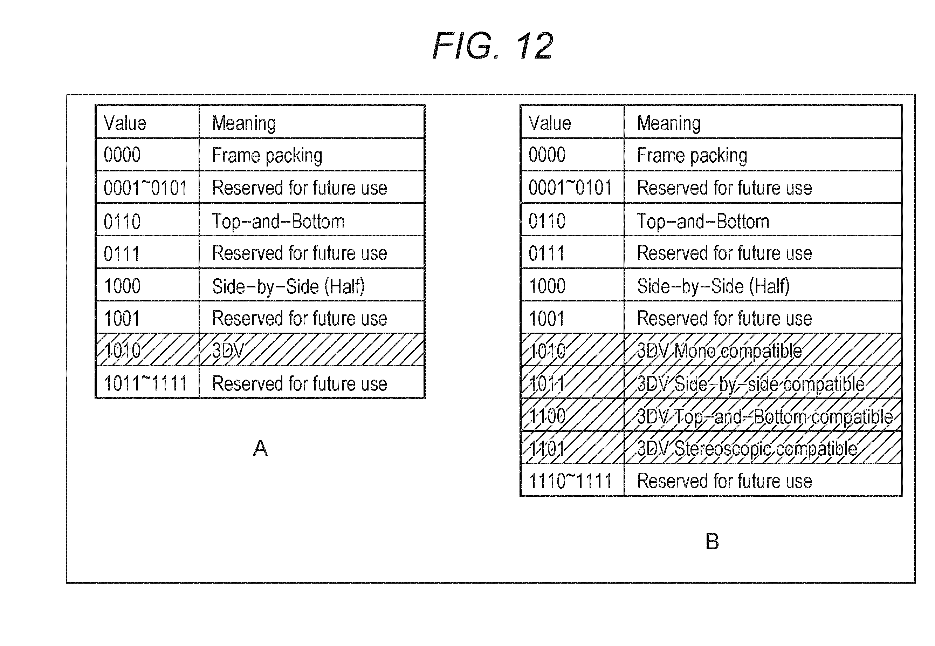

For example, a value such as "0000", "0110", "0111", "1000", or "1001" can be normally set in the field of 3D_Structure, as shown in the table in Fig. 12A. The 3D information generating unit 313 uses the space (reserve) of 3D_Structure, to set a value "1010" as the value indicating the 3DV format, for example, as shown in Fig. 12A.

The mode determining unit 322 on the receiving end only has to know in advance that the value "1010" indicates the 3DV format. For example, in a case where the mode determining unit 322 has referred to 3D_Structure of this Vendor Specific infoFrame Packet Contents and has determined the value of to be "1010", the mode determining unit 322 can recognize that the image data to be transmitted is in the 3DV format.

Also, as shown in Fig. 12B, designating respective modes of the 3DV format may be allowed, for example. In the example case shown in Fig. 12B, the value "1010" is assigned to Mono Compatible Mode, the value "1011" is assigned to Frame Packing (Side by Side) Compatible Mode, the value "1100" is assigned to Frame Packing (Top and Bottom) Compatible Mode, and the value "1101" is assigned to Stereo Scopic Compatible Mode.

The 3D information generating unit 313 sets the value corresponding to the mode determined by the mode determining unit 312 in 3D_Structure of Vendor Specific infoFrame Packet Contents. Knowing those values in advance, the mode determining unit 322 can easily determine each mode by referring to 3D_Structure at the time of data reception.

### [Synchronization Method Extension]

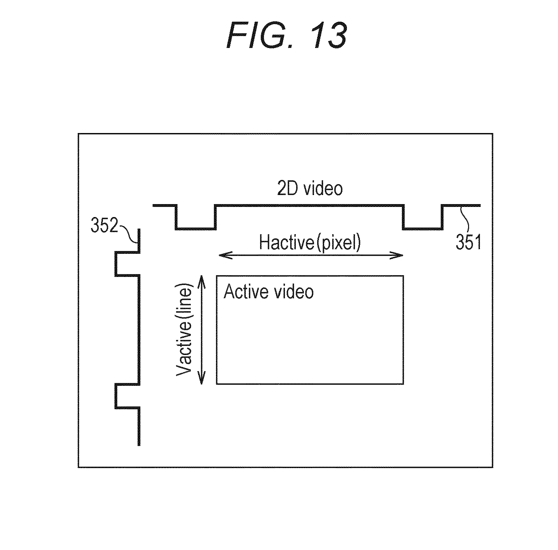

In HDMI data transmission, image data of one frame is normally transmitted in an active video interval that is equivalent to one cycle of a horizontal synchronization signal 351 and one cycle of a vertical synchronization signal 352, as shown in Fig. 13.

When transmitting 3D image data, the communication unit 314 extends such a synchronization method in accordance with each mode, for example.

In the case of Mono Compatible Mode, a compatible image, auxiliary images, and parallax images of those images are transmitted, and therefore, data of four frames in total needs to be transmitted as 3D image data of one frame, for example, as shown in Fig. 14.

Accordingly, as shown in Fig. 14, the communication unit 314 may transmit the data of those four frames in an active video interval equivalent to one cycle of the horizontal synchronization signal 351 and one cycle of the vertical synchronization signal 352, for example.

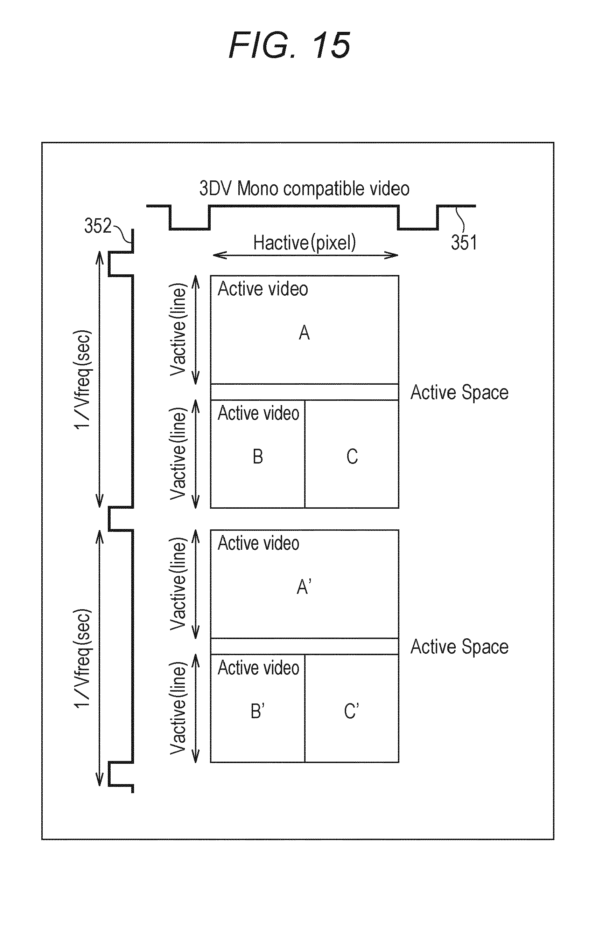

Alternatively, as shown in Fig. 15, the communication unit 314 may use an active video interval equivalent to two cycles of the vertical synchronization signal in the transmission of the data of those four frames, for example. It is of course possible to use an active video interval equivalent to three or more cycles of the vertical synchronization signal. However, to maintain correct synchronization, both the reproducing device 301 and the display device 302 need to know in advance how many cycles of the vertical synchronization signal is required in the active video interval to be used in transmission of 3D image data of one frame.

As 3D image data of one frame is transmitted in an active video interval equivalent to cycles of the vertical synchronization signal, more advanced transmission control can be easily performed. In a case where only part of information is transmitted, data transmission is suspended in the other cycles, for example.

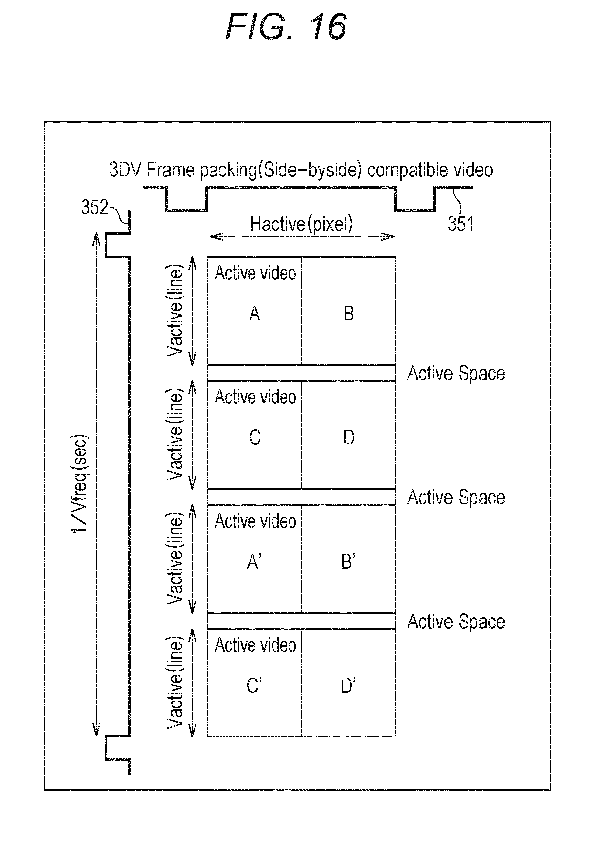

In the case of Frame Packing (Side by Side) Compatible Mode, compatible images, auxiliary images, and parallax images of those images are transmitted, and therefore, data of four frames in total needs to be transmitted as 3D image data of one frame, for example, as shown in Fig. 16.

Accordingly, as shown in Fig. 16, the communication unit 314 may transmit the data of those four frames in an active video interval equivalent to one cycle of the horizontal synchronization signal and one cycle of the vertical synchronization signal, for example. In the case of this Frame Packing (Side by Side) Compatible Mode, 3D image data of one frame may of course be transmitted by using an active video interval equivalent to cycles of the vertical synchronization signal, as in the above described case of Mono Compatible Mode.

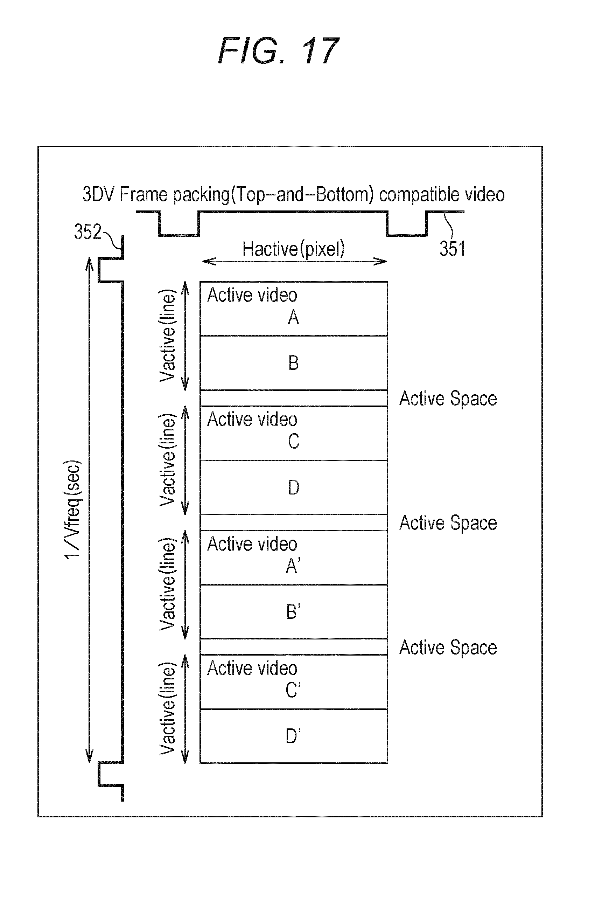

In the case of Frame Packing (Top and Bottom) Compatible Mode, compatible images, auxiliary images, and parallax images of those images are transmitted, and therefore, data of four frames in total needs to be transmitted as 3D image data of one frame, for example, as shown in Fig. 17.

Accordingly, as shown in Fig. 17, the communication unit 314 may transmit the data of those four frames in an active video interval equivalent to one cycle of the horizontal synchronization signal and one cycle of the vertical synchronization signal, for example. In the case of this Frame Packing (Top and Bottom) Compatible Mode, 3D image data of one frame may of course be transmitted by using an active video interval equivalent to cycles of the vertical synchronization signal, as in the above described case of Mono Compatible Mode.

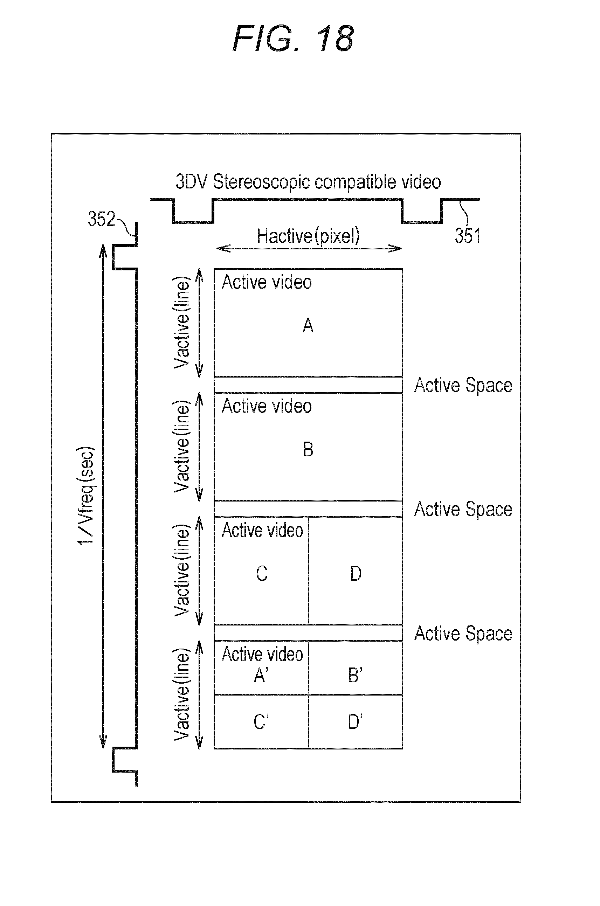

In the case of Stereo Scopic Compatible Mode, compatible images, auxiliary images, and parallax images of those images are transmitted, and therefore, data of four frames in total needs to be transmitted as 3D image data of one frame, for example, as shown in Fig. 18.

Accordingly, as shown in Fig. 18, the communication unit 314 may transmit the data of those four frames in an active video interval equivalent to one cycle of the horizontal synchronization signal and one cycle of the vertical synchronization signal, for example.

In accordance with the current HDMI standard (Ver. 1.4), image data with a resolution of 4 K x 2 K or higher cannot be transmitted in an active video interval equivalent to one cycle of a vertical synchronization signal. However, this restriction may be extended so that 5 K x 2 K image data can be transmitted in an active video interval equivalent to one cycle of a vertical synchronization signal.

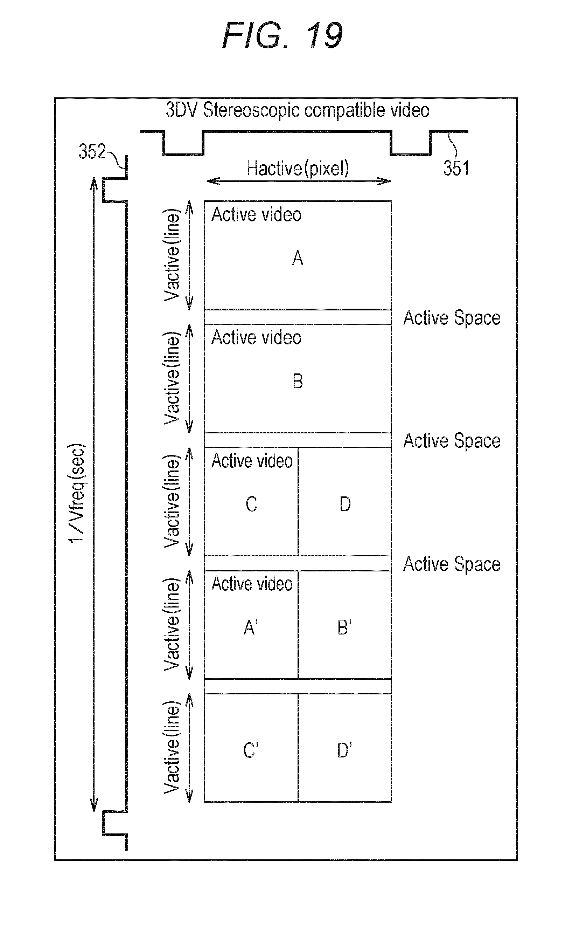

Fig. 19 shows an example of Stereo Scopic Compatible Mode transmission in that case. In this manner, parallax information with a higher resolution than in the example case shown in Fig. 18 can be transmitted. Accordingly, in an image for display, a sense of depth can be created with higher precision.

In the case of this Stereo Scopic Compatible Mode, 3D image data of one frame may of course be transmitted by using an active video interval equivalent to cycles of the vertical synchronization signal, as in the above described case of Mono Compatible Mode.

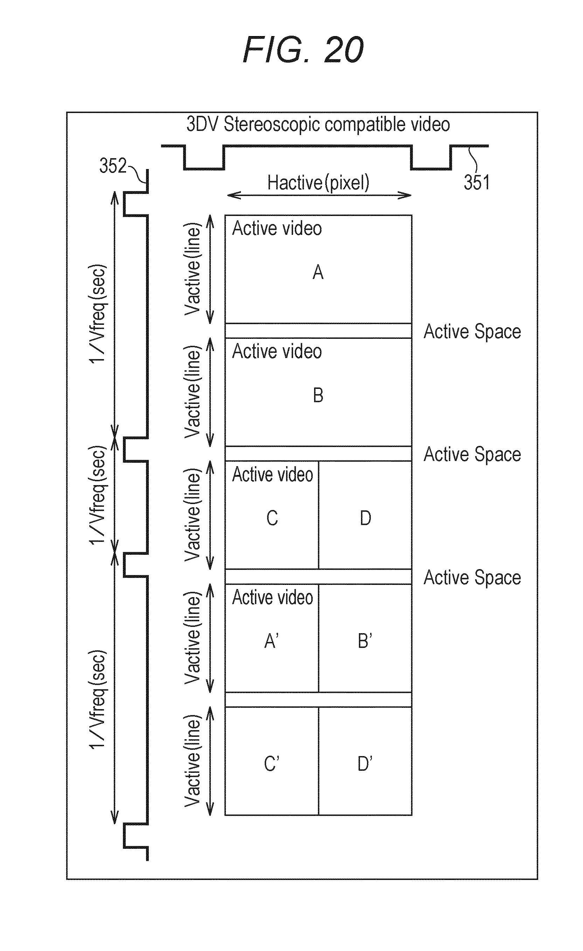

Further, as shown in Fig. 20, the cycles (frequency) of the vertical synchronization signal may not be constant but may be irregular, for example. In the example case shown in Fig. 20, the first cycle of the vertical synchronization signal has a length equivalent to 2 K, the second cycle has a length equivalent to 1 K, which is half the length of the first cycle, and the third cycle has a length equivalent to 2 K, which is the same as the first cycle.

As described above, the frequency of the vertical synchronization signal is appropriately changed to a frequency suitable for the structure of 3D image data to be transmitted. In this manner, more advanced transfer control can be easily performed. In a case where only compatibility information is transmitted, for example, data transmission in the second cycle and the third cycle are suspended.

The cycle pattern in a case where the vertical synchronization signal has irregular cycles is of course not limited, and any pattern other than the example shown in Fig. 20 may be used. The method that utilizes a vertical synchronization signal having irregular cycles can also be applied to Stereo Scopic Compatible Mode.

### [Transmission Processing Flow]

Various processes to be performed in the above described 3D image data transmission are now described.

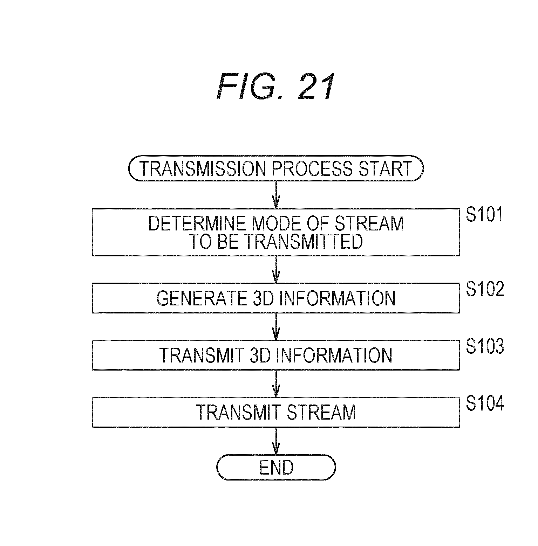

Referring to the flowchart shown in Fig. 21, an example flow of a transmission process to be performed by the reproducing device 301 shown in Fig. 8 is described.

When the transmission process is started, the mode determining unit 312 of the reproducing device 301 in step S101 determines the mode of the stream (3D image data) to be transmitted. In step S102, based on the determination result of step S101, the 3D information generating unit 313 generates the 3D information indicating the mode of the stream.

In step S103, the communication unit 314 transmits the 3D information generated in step S103 to the display device 302. In step S104, the communication unit 314 transmits the stream to the display device 302.

By performing the above process, the reproducing device 301 can supply the 3D information containing the mode of the 3D image data to be transmitted, to the display device 302 on the receiving end. Accordingly, the reproducing device 301 can correctly transmit image data in a format such as the above described 3DV format in which a multi-view image can be generated.

### [Reception Processing Flow]

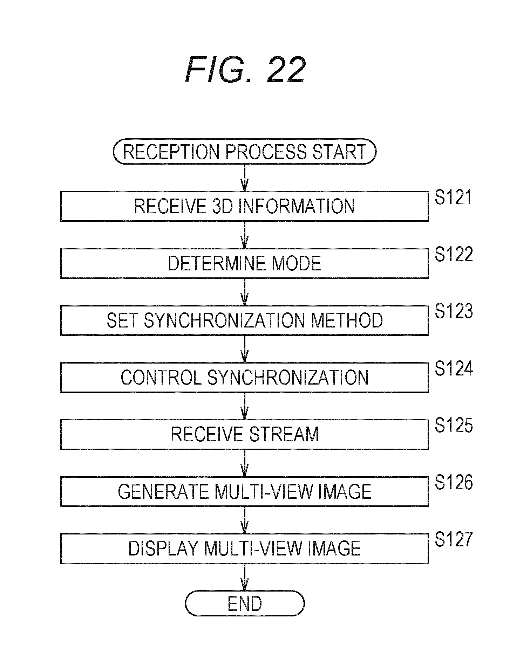

Referring now to the flowchart shown in Fig. 22, an example flow of a reception process to be performed by the display device 302 shown in Fig. 9 is described.

When the reception process is started, the communication unit 321 of the display device 302 in step S121 receives 3D information transmitted from the reproducing device 301. In step S122, the mode determining unit 322 refers to the 3D information, and determines the mode of the stream (3D image data) to be transmitted.

In step S123, based on the mode determination result of step S122, the synchronization setting unit 323 sets the synchronization method described above with reference to Figs. 14 through 20, for example. In step S124, according to the synchronization method set in step S123, the synchronization control unit 324 controls the synchronization of the image generating unit 325 and the display unit 326.

In step S125, the communication unit 321 receives the stream (3D image data) transmitted from the reproducing device 301. In step S126, the image generating unit 325 generates a multi-view image for display, using the 3D image data received in step S125.

In step S127, the display unit 326 displays the multi-view image for display generated through the procedure in step S126.

By performing the above process, the display device 302 can receive transmitted 3D image data, and 3D information containing the mode of the 3D image data. Further, the display device 302 easily determines the mode of the 3D image data from the 3D information, and can set an appropriate synchronization method in accordance with the mode. Accordingly, the display device 302 can correctly transmit image data in a format such as the above described 3DV format in which a multi-view image can be generated.

Although data transmission in accordance with the HDMI standard has been described above, the data transmission can be performed in accordance with transmission standards other than the HDMI standard.

Also, in the above described example, the reproducing device 301 is used as the device on the transmitting end in data transmission of 3D image data, and the display device 302 is used as the device on the receiving end. However, any kinds of devices can be used as the device on the transmitting end and the device on the receiving end, as long as they can transmit and receive 3D image data.

### <2. Second Embodiment>

### [E-EDID Extension]

In the above described embodiment, 3D information about the mode of 3D image data is transmitted together with the 3D image data, so that 3DV data transmission is realized. The present invention is not limited to that, and the information about modes with which the display device 302 on the receiving end is compatible may be provided to the reproducing device 301 on the transmitting end prior to the start of 3D image data transmission, for example.

With this, the reproducing device 301 obtains information about the capability of the display device 302, and, based on the information, can set a mode of 3D image data. That is, the reproducing device 301 can transmit 3D image data in a more appropriate manner.

Through the HDMI cable 303, the communication unit 314 (the HDMI transmitting unit) of the reproducing device 301 reads the E-EDID (Enhanced Extended Display Identification Data) of the communication unit 321 from the communication unit 321 (the HDMI receiving unit) of the display device 302 via the DDC (Display Data Channel). This E-EDID contains information about the capability of the display device 302, such as resolutions, decoding delay time, bit depths, and frame rates that can be handled in the display device 302.

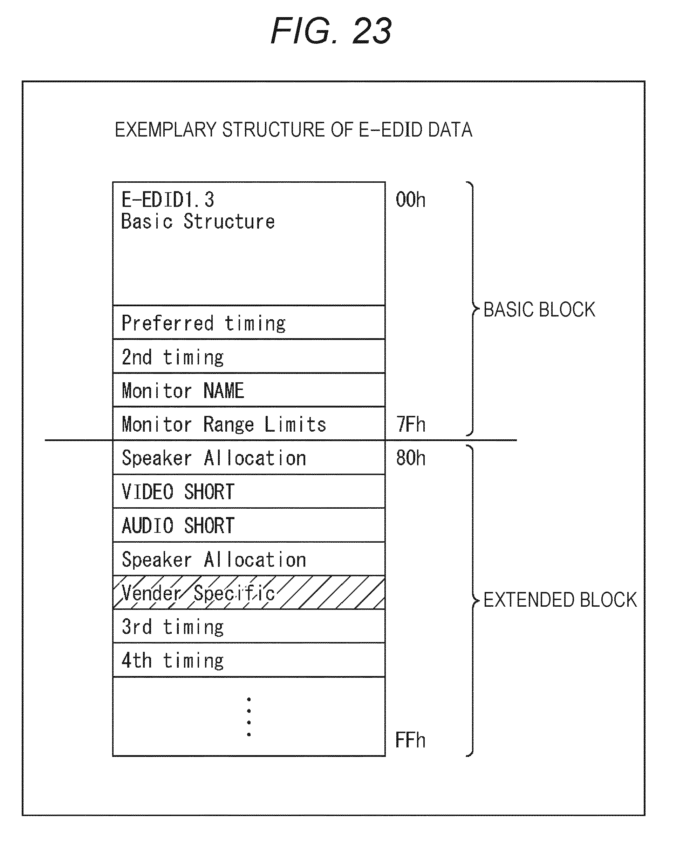

Fig. 23 shows an example data structure of the E-EDID. This E-EDID is formed with a basic block and an extended block. At the top of the basic block, data that is represented by "E-EDID1.3 Basic Structure" and is specified in the E-EDID 1.3 standard is provided, followed by timing information that is represented by "Preferred timing" and is used for maintaining compatibility with the conventional EDID, and timing information that is represented by "2nd timing", is used for maintaining compatibility with the conventional EDID, and differs from "Preferred timing".

In the basic block, "2nd timing" is followed sequentially by information that is represented by "Monitor NAME" and indicates the name of the display device, and information that is represented by "Monitor Range Limits" and indicates the number of pixels that can be displayed in a case where the aspect ratio is 4:3 or 16:9.

At the top of the extended block, information that is represented by "Speaker Allocation" and concerns right and left speakers is provided, sequentially followed by data that is represented by "VIDEO SHORT" and contains displayable image sizes (resolutions), frame rates, information indicating whether it is of an interlace type or a progressive type, information about aspect ratios, and the like, data that is represented by "AUDIO SHORT" and contains information about reproducible audio codec formats, sampling frequencies, cutoff bands, the number of codec bits, and the like, and information that is represented by "Speaker Allocation" and concerns the right and left speakers.

In the extended block, "Speaker Allocation" is followed by data that is represented by "Vendor Specific" and is uniquely defined for each maker, timing information that is represented by "3rd timing" and is used for maintaining compatibility with the conventional EDID, and timing information that is represented by "4th timing" and is used for maintaining the compatibility with the conventional EDID.

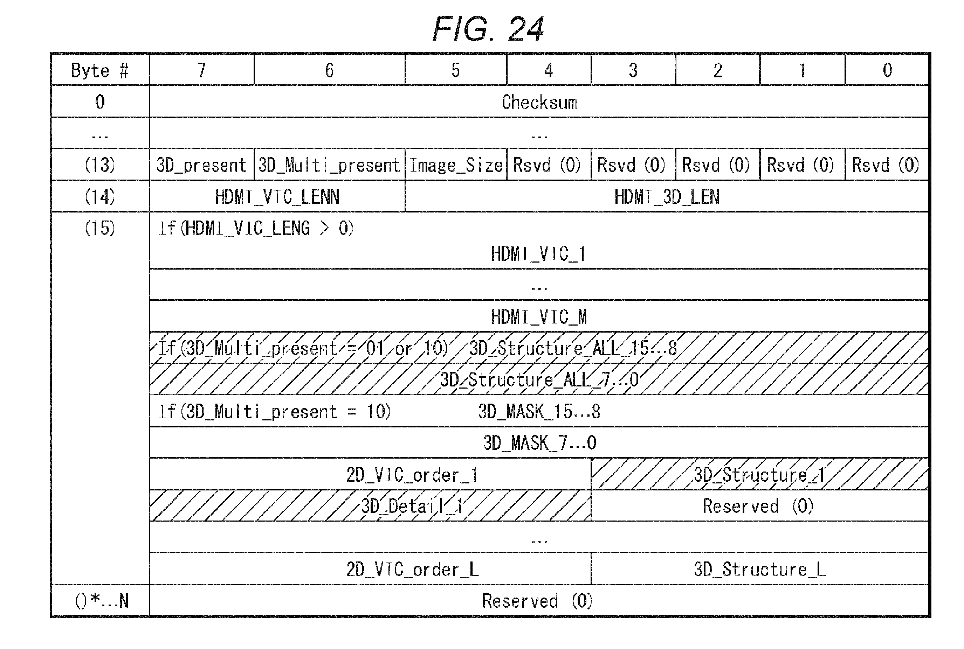

Fig. 24 shows an example structure of the data in the shaded Vendor Specific region (Vendor Specific Data Block) shown in Fig. 23. In this Vendor Specific region, 0th through Nth blocks each being a 1-byte block are provided.

In the blocks after the 13th block in this Vendor Specific region, the reserve region is extended, and information about 3D formats with which the display device 302 is compatible is written. Using the reserve region, the display device 302 extends 3D_Structure_ALL_X, 3D_Structure_X, and 3D_Detaile_X of this Vendor Specific Data Block, and defines the unit and cycles of a 3DV stream and a vertical synchronization signal.

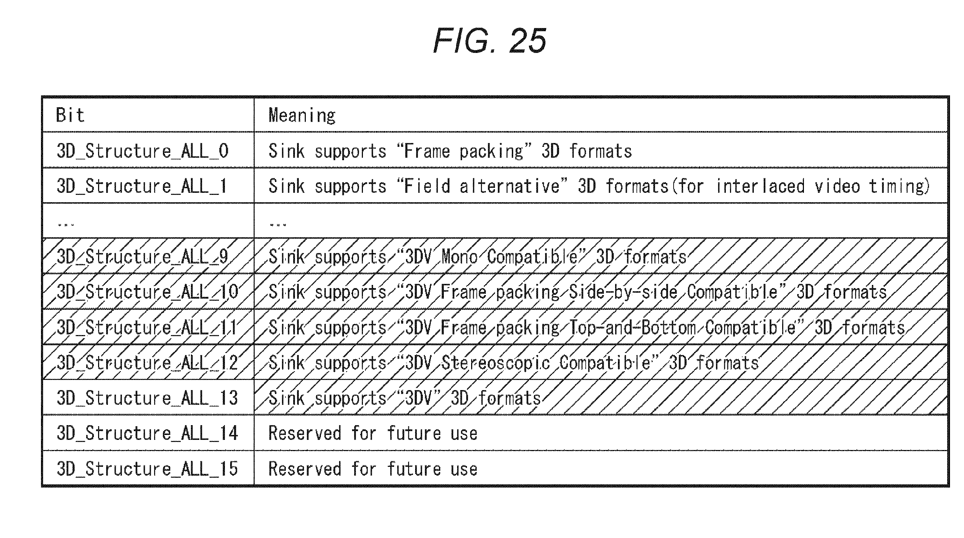

For example, the value of 3D_Structure_ALL_X may be extended as in the table shown in Fig. 25, and respective modes may be assigned to the 9th through 13th blocks.

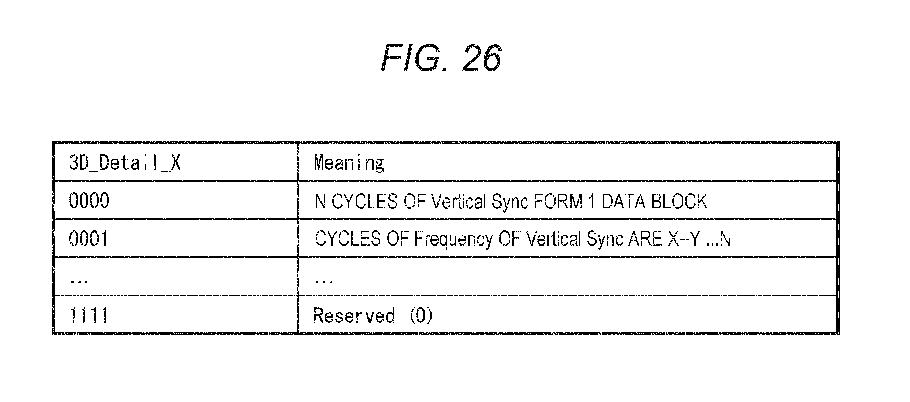

Also, the value of 3D_Structure_X may be extended as in the table shown in Fig. 12, and further, the value of 3D_Detail_X may be extended as in the table shown in Fig. 26. Transmission of 3D image data of one frame using an active video interval equivalent to cycles of a vertical synchronization signal, the vertical synchronization signal having irregular cycles, and the like may be defined therein.

### [Structure of the Reproducing Device]

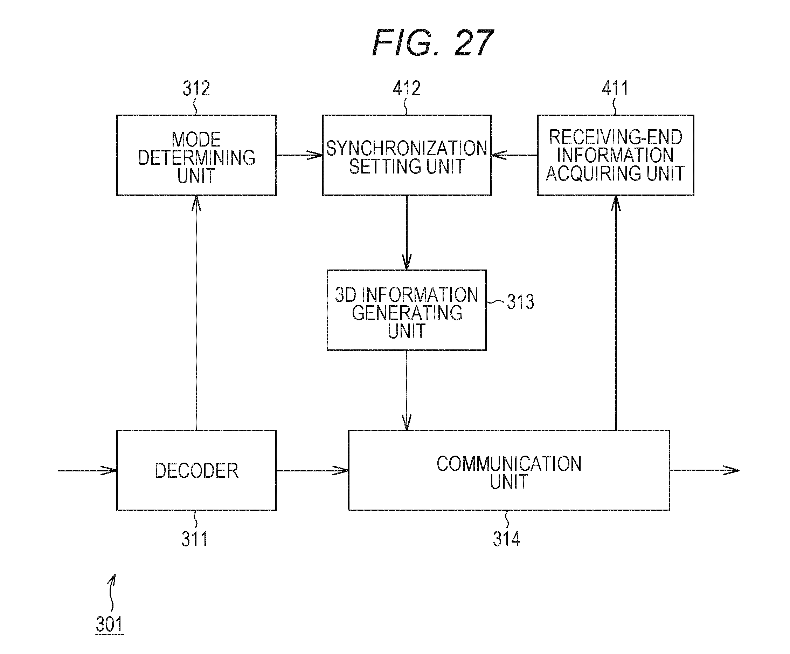

Fig. 27 is a block diagram showing a typical example structure of the reproducing device 301 in the above case. As shown in Fig. 27, the reproducing device 301 in this case includes a receiving-end information acquiring unit 411 and a synchronization setting unit 412, as well as the components shown in Fig. 8.

Before transmission of 3D image data is started, the receiving-end information acquiring unit 411 acquires, via the communication unit 314, receiving-end information that is supplied from the display device 302 and indicates the capability of the receiving-end device. For example, the receiving-end information acquiring unit 411 receives the E-EDID data shown in Fig. 23 as the receiving-end information. As described above, Vendor Specific Data Block of this E-EDID data is extended as shown in Fig. 24, and the values of 3D_Structure_ALL_X, 3D_Structure_X, 3D_Detaile_X, and the like are extended as in the tables shown in Figs. 25 and 26, so that modes that can be handled by the display device 302 are indicated.

After acquiring the receiving-end information, the receiving-end information acquiring unit 411 supplies the receiving-end information to the synchronization setting unit 412. In accordance with the receiving-end information acquired by the receiving-end information acquiring unit 411 and the mode determined by the mode determining unit 312, the synchronization setting unit 412 sets a synchronization method that can be implemented by the display device 302, and notifies the 3D information generating unit 313 of the synchronization method.

The 3D information generating unit 313 generates 3D information indicating the synchronization method set by the synchronization setting unit 412, and inserts the 3D information into the 3D image data.

### [Structure of the Display Device]

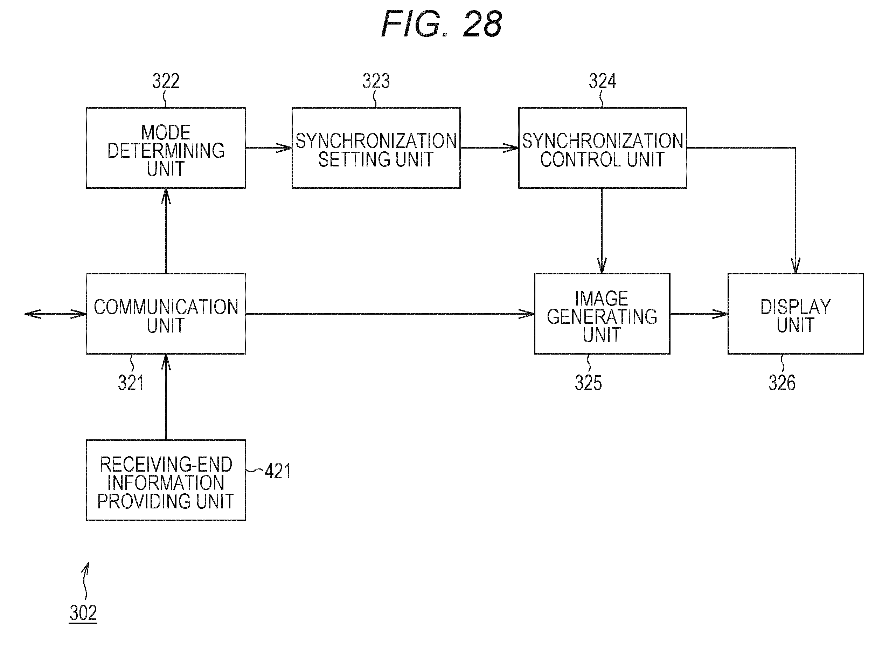

Fig. 28 is a block diagram showing a typical example structure of the display device 302 in the above case. As shown in Fig. 28, the display device 302 in this case includes a receiving-end information providing unit 421, as well as the components shown in Fig. 9.

The receiving-end information providing unit 421 stores the E-EDID shown in Fig. 23, for example. Before transmission of 3D image data is started, the receiving-end information providing unit 421 transmits the E-EDID as negotiation information to the reproducing device 301 on the transmitting end via the communication unit 321.

The receiving-end information providing unit 421 may be formed inside the communication unit 321, like the EDID ROM 335 shown in Fig. 10.

### [Transmission Processing Flow]

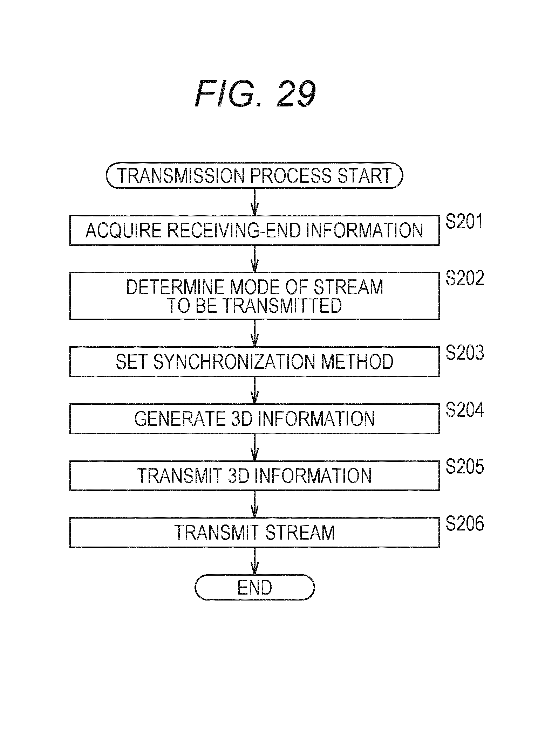

Referring now to the flowchart shown in Fig. 29, an example flow of a transmission process to be performed by the reproducing device 301 shown in Fig. 27 is described.

When the transmission process is started, the receiving-end information acquiring unit 411 in step S201 acquires the receiving-end information. In step S202, the mode determining unit 312 determines the mode of the stream (3D image data) to be transmitted.

In step S203, based on the receiving-end information acquired in step S201 and the mode of the stream determined in step S202, the synchronization setting unit 412 sets a synchronization method that can be implemented by the display device 302 and is compatible with the mode of the stream.

In step S204, the 3D information generating unit 313 generates the 3D information indicating the synchronization method set in step S203. In step S205, the communication unit 314 transmits the 3D information generated in step S204 to the display device 302. In step S206, the communication unit 314 also transmits the stream to the display device 302.

By performing the above process, the reproducing device 301 can set a synchronization method in accordance with the capability of the display device 302, and can supply the 3D information about the method to the display device 302. Accordingly, the reproducing device 301 can correctly transmit image data in a format such as the above described 3DV format in which a multi-view image can be generated.

### [Reception Processing Flow]

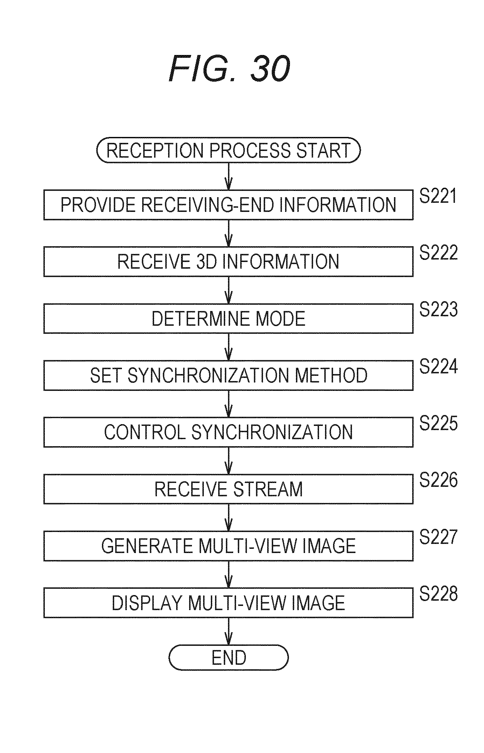

Referring now to the flowchart shown in Fig. 30, an example flow of a reception process to be performed by the display device 302 shown in Fig. 28 is described.

When the reception process is started, the receiving-end information providing unit 421 of the display device 302 in step S221 provides the receiving-end information to the reproducing device 301 via the communication unit 321.

In step S222, the communication unit 321 receives 3D information from the reproducing device 301. In step S223, the mode determining unit 322 refers to the 3D information, and determines the mode of the stream (3D image data) to be transmitted.

In step S224, based on the mode determination result of step S223, the synchronization setting unit 323 sets a synchronization method. In step S225, according to the synchronization method set in step S224, the synchronization control unit 324 controls the synchronization of the image generating unit 325 and the display unit 326.

In step S226, the communication unit 321 receives the stream (3D image data) transmitted from the reproducing device 301. In step S227, the image generating unit 325 generates a multi-view image for display, using the 3D image data received in step S226.

In step S228, the display unit 326 displays the multi-view image for display generated through the procedure in step S227.

By performing the above process, the display device 302 can provide the receiving-end information indicating the processing capability thereof to the reproducing device 301 on the transmitting end, and can cause the reproducing device 301 to set a synchronization method in accordance with the capability of the display device 302. The display device 302 can appropriately set the synchronization method. Accordingly, the display device 302 can correctly transmit image data in a format such as the above described 3DV format in which a multi-view image can be generated.

Although data transmission in accordance with the HDMI standard has been described above, the data transmission can be performed in accordance with transmission standards other than the HDMI standard.

Also, in the above described example, the reproducing device 301 is used as the device on the transmitting end in data transmission of 3D image data, and the display device 302 is used as the device on the receiving end. However, any kinds of devices can be used as the device on the transmitting end and the device on the receiving end, as long as they can transmit and receive 3D image data.

### <3. Third Embodiment>

### [Example Structure of an Encoding Device]

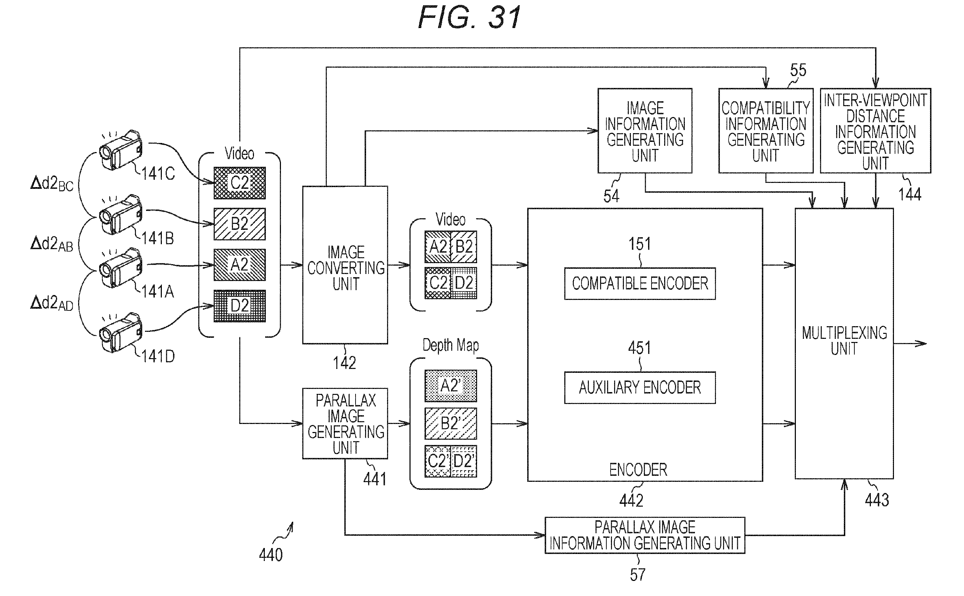

Fig. 31 is a block diagram showing an example structure of an encoding device that encodes 3D images transmitted in a third embodiment of a transmission system to which the present technique is applied.

In the structure illustrated in Fig. 31, the same components as those in Fig. 3 are denoted by the same reference numerals as those in Fig. 3. The explanations that have already been made will not be repeated.

The structure of the encoding device 440 shown in Fig. 31 differs from the structure shown in Fig. 3 mainly in that the parallax image generating unit 143, the encoder 145, and the multiplexing unit 59 are replaced with a parallax image generating unit 441, an encoder 442, and a multiplexing unit 443. The encoding device 440 performs encoding by multiplexing parallax images of compatible images in a temporal direction, instead of a spatial direction.

Specifically, using images A2 through D2 supplied from imaging units 141A through 141 D, the parallax image generating unit 441 of the encoding device 440 detects the parallax of each pixel of the images A2 through D2. Based on the detection results, the parallax image generating unit 441 generates a parallax image A2' of the image A2 as a compatible image, a parallax image B2' of the image B2 as a compatible image, a parallax image C2' of the image C2 as an auxiliary image, and a parallax image D2' of the image D2 as an auxiliary image.

Like the parallax image generating unit 143 shown in Fig. 3, the parallax image generating unit 441 also multiplexes the parallax image C2' and the parallax image D2' in a spatial direction by a predetermined multiplexing technique. Further, the parallax image generating unit 441 multiplexes the parallax image A2', the parallax image B2', and the multiplexed image of the parallax images of the auxiliary images in a temporal direction. The parallax image generating unit 441 supplies the resultant multiplexed image as a temporal multiplexed image to the encoder 442. In the temporal multiplexed image, the parallax image A2', the parallax image B2', and the multiplexed image of the parallax images of the auxiliary images of one frame exist in one frame time.

Also, the parallax image generating unit 441 supplies information indicating the multiplexing technique for the parallax images of the auxiliary images and a technique for multiplexing images in a temporal direction (hereinafter referred to as the frame sequential technique) as the multiplexing technique for the parallax images of the compatible images and the auxiliary images, to a parallax image information generating unit 57.

The encoder 442 is formed with a compatible encoder 151 and an auxiliary encoder 451. The auxiliary encoder 451 of the encoder 442 encodes a multiplexed image of the auxiliary images from an image converting unit 142, and the temporal multiplexed image from the parallax image generating unit 441, by the 3DV technique. The auxiliary encoder 451 supplies the resultant encoded stream as an auxiliary stream to the multiplexing unit 443.

The multiplexing unit 443 generates TSs, using a compatible stream from the compatible encoder 151, the auxiliary stream from the auxiliary encoder 451, image information from an image information generating unit 54, compatibility information from a compatibility information generating unit 55, inter-viewpoint distance information from an inter-viewpoint distance information generating unit 56, parallax image information from the parallax image information generating unit 57, and the like. The multiplexing unit 443 multiplexes the generated TSs, and transmits the resultant multiplexed stream.

In the following, the image information, the compatibility information, the inter-viewpoint distance information, and the parallax image information will be collectively referred to as auxiliary information.

### [Example Description of Auxiliary Information]

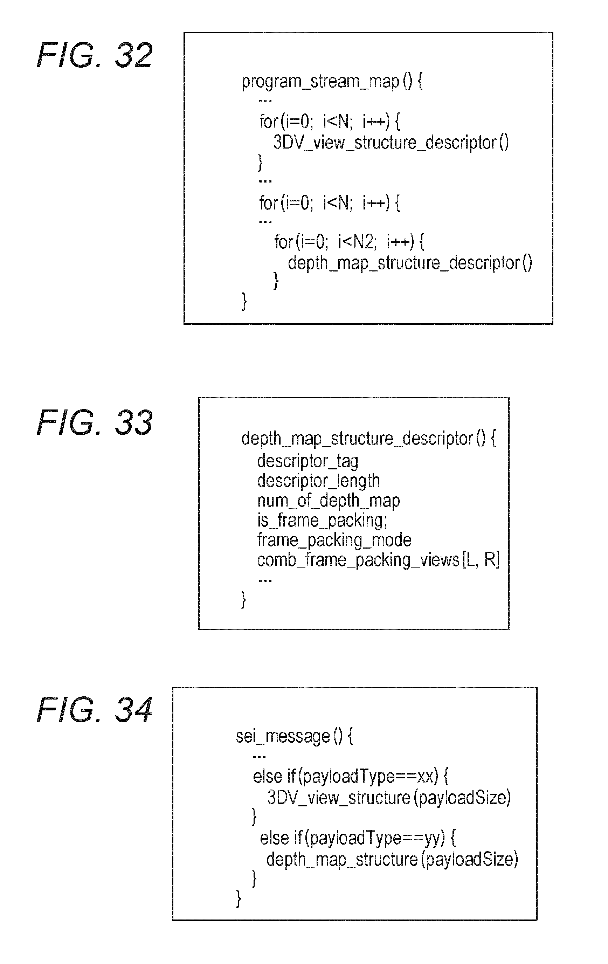

Fig. 32 is a diagram showing an example description of the compatibility information and the parallax image information in a case where the auxiliary information is written into PMT descriptors.

As shown in Fig. 32, in a case where the auxiliary information is written into PMT descriptors, a descriptor to which the compatibility information is set (3DV_view_structure_descriptor), a descriptor to which the parallax image information is set (depth_map_structure_descriptor), and the like are provided as the PMT descriptors.

In the descriptor (depth_map_structure_descriptor), a descriptor tag (descriptor_tag) and a descriptor length (descriptor_length) are followed by the number of parallax images (num_of_depth_map), a flag indicating whether the parallax images are multiplexed (is_frame_packing), the multiplexing technique for the parallax images (frame_packing_mode), information designating multiplexed parallax images (comb_frame_packing_views), and the like, which are written as the parallax image information, as shown in Fig. 33.

The multiplexing technique may be Side By Side (SBS) technique, Top and Bottom (TOB) technique, the frame sequential technique, or the like.

Although the auxiliary information is contained in the TSs in the encoding device 440, the auxiliary information may be contained in the auxiliary stream.

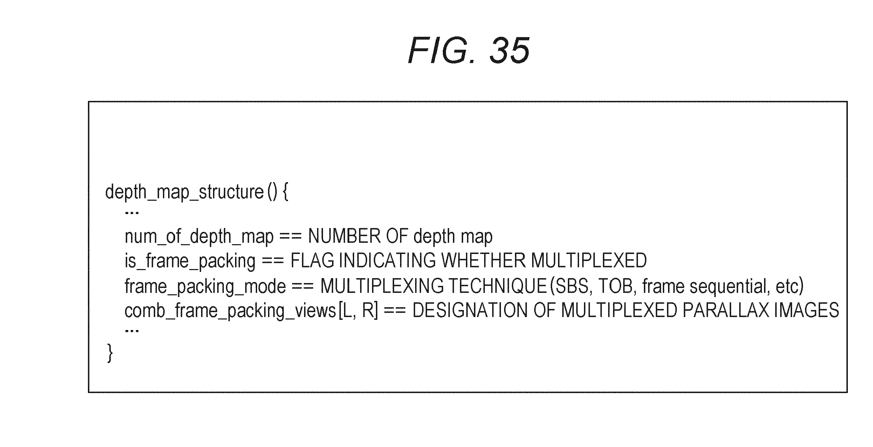

Figs. 34 and 35 are diagrams showing example descriptions of the compatibility information and the parallax image information in the auxiliary stream in a case where the auxiliary information is contained in the auxiliary stream.

As shown in Fig. 34, the compatibility information (3DV_view_structure) and the parallax image information (depth_map_structure) are set in SEI (Supplemental Enhancement Information) in the auxiliary stream, for example.

As the parallax image information (depth_map_structure), the number (num_of_depth_map) of parallax images (depth map), the flag indicating whether the parallax images are multiplexed (is_frame_packing), the multiplexing technique for the parallax images (frame_packing_mode), and the information designating multiplexed parallax images (comb_frame_packing_views), and the like are written as shown in Fig. 35.

Although not shown in the drawings, the image information is the same as the parallax image information, except for being the information about the compatible images and the auxiliary images, instead of the parallax images.

### [Description of an Operation of the Encoding Device]

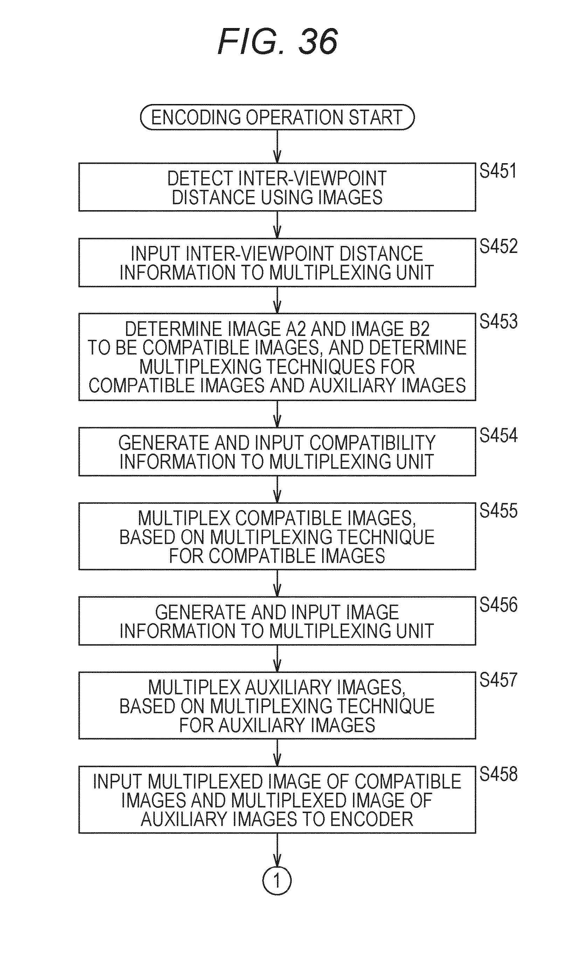

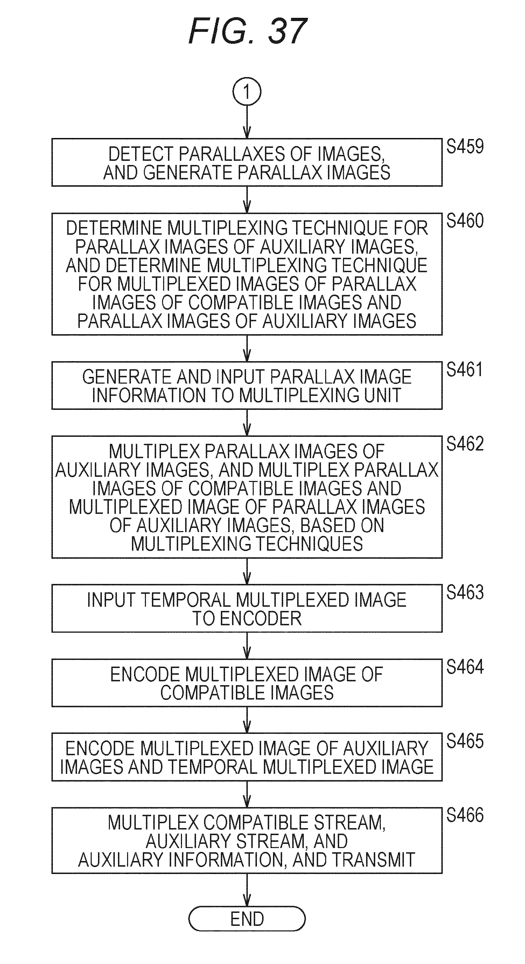

Figs. 36 and 37 are flowcharts for explaining an encoding operation by the encoding device 440 shown in Fig. 31. This encoding operation is started when the images A2 through D2 are output from the imaging units 141A through 141 D, for example.

In step S451 in Fig. 36, an inter-viewpoint distance information generating unit 144 detects a distance Δd2_{AB}, a distance Δd2_{BC}, and a distance Δd2_{AD} as inter-viewpoint distances, using the images A2 through D2 supplied from the imaging units 141A through 141 D.

In step S452, the inter-viewpoint distance information generating unit 144 generates information indicating the inter-viewpoint distances detected in step S451 and the like as the inter-viewpoint distance information, and supplies the inter-viewpoint distance information to the multiplexing unit 443.

In step S453, the image converting unit 142 determines the image A2 and the image B2 to be compatible images, as the image A2 and the image B2 are supplied from the imaging unit 141A and the imaging unit 141B, which are located in inner positions among the imaging units 141A through 141 D in the horizontal direction. The image converting unit 142 also determines the multiplexing techniques for the compatible images and the auxiliary images. The image converting unit 142 supplies information designating the image A2 and the image B2 as the compatible images to the compatibility information generating unit 55, and supplies the multiplexing techniques for the compatible images and the auxiliary images to the image information generating unit 54.

In step S454, based on the information supplied from the image converting unit 142, the compatibility information generating unit 55 generates the compatibility information containing the information designating the image A2 and the image B2 as the compatible images, the frame packing mode as a compatible mode, and the like, and inputs the compatibility information to the multiplexing unit 443.

In step S455, based on the multiplexing technique for the compatible images determined in step S453, the image converting unit 142 multiplexes the image A2 and the image B2 as the compatible images, and supplies the multiplexed image to the encoder 442.

In step S456, based on the information supplied from the image converting unit 142, the image information generating unit 54 generates information indicating the multiplexing techniques for the compatible images and the auxiliary images and the like as image information, and supplies the image information to the multiplexing unit 443.

In step S457, the image converting unit 142 determines the image C2 and the image D2 to be the auxiliary images other than the image A2 and the image B2, and, based on the multiplexing technique for the auxiliary images determined in step S453, multiplexes the auxiliary images, to obtain a multiplexed image of the auxiliary images.

In step S458, the image converting unit 142 inputs the multiplexed image of the compatible images and the multiplexed image of the auxiliary images to the encoder 442.

In step S459 in Fig. 37, using the images A2 through D2 supplied from the imaging units 141A through 141D, the parallax image generating unit 441 detects the parallax of each pixel of the images A2 through D2, and generates the parallax images A2' through D2'.

In step S460, the parallax image generating unit 441 determines the multiplexing technique for the parallax images of the auxiliary images, and the multiplexing technique for the multiplexed images of the parallax images of the compatible images and the parallax images of the auxiliary images, and supplies information indicating the multiplexing techniques to the parallax image information generating unit 57.

In step S461, based on the information supplied from the parallax image generating unit 441, the parallax image information generating unit 57 generates information indicating the multiplexing technique for the parallax images of the auxiliary images and the multiplexing technique for the multiplexed images of the parallax images of the compatible images and the parallax images of the auxiliary images as the parallax image information, and inputs the parallax image information to the multiplexing unit 443.

In step S462, based on the multiplexing technique determined in step S460, the parallax image generating unit 441 multiplexes the parallax image C2' and the parallax image D2' of the auxiliary images in a spatial direction, and multiplexes the parallax image A2' and the parallax image B2' of the compatible images and the multiplexed image of the parallax images of the auxiliary images in a temporal direction.

In step S463, the parallax image generating unit 441 inputs the temporal multiplexed image obtained as a result of the multiplexing in step S462, to the encoder 442.

In step S464, the compatible encoder 151 of the encoder 442 encodes the multiplexed image of the compatible images supplied from the image converting unit 142 by the conventional AVC technique, and adds various kinds of information to the encoded image. The resultant encoded stream is supplied as the compatible stream to the multiplexing unit 443.

In step S465, the auxiliary encoder 451 encodes the multiplexed image of the auxiliary images from the image converting unit 142, and the temporal multiplexed image from the parallax image generating unit 441, by the 3DV technique. The auxiliary encoder 451 supplies the encoded stream as the auxiliary stream obtained as a result of the encoding to the multiplexing unit 443.

In step S466, the multiplexing unit 443 generates TSs from the compatible stream supplied from the compatible encoder 151, the auxiliary stream supplied from the auxiliary encoder 451, and the auxiliary information, and multiplexes the TSs. The resultant multiplexed stream is then transmitted. This multiplexed stream is recorded on a BD or the like, or is transmitted as a stream for broadcasting, for example. The operation then comes to an end.

### [Example Structure of a Decoding Device]

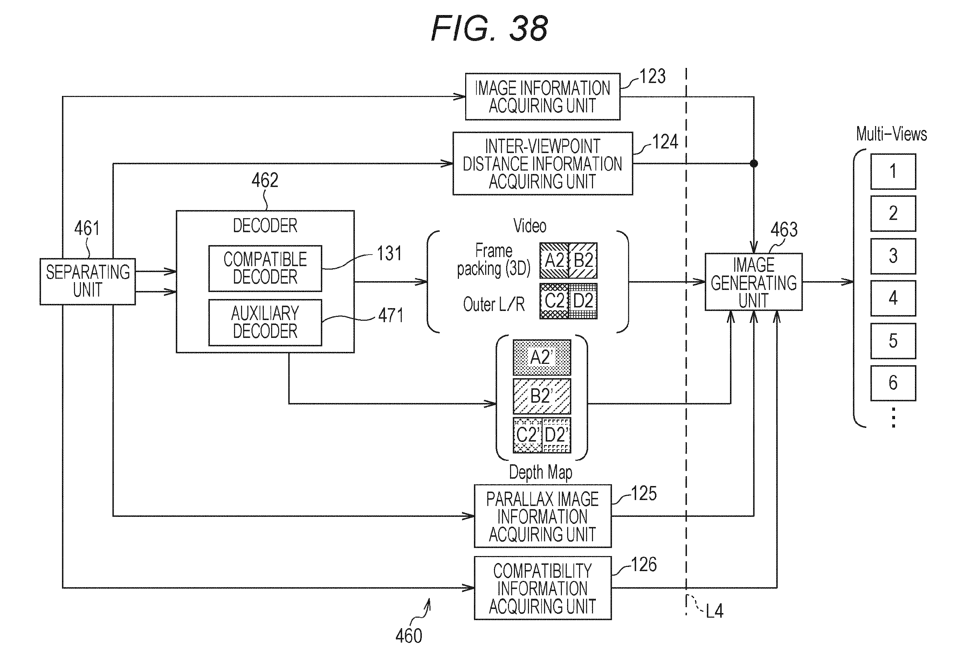

Fig. 38 is a diagram showing an example structure of a decoding device that decodes the multiplexed stream transmitted from the encoding device 440 shown in Fig. 31.

In the structure illustrated in Fig. 38, the same components as those in Fig. 4 are denoted by the same reference numerals as those in Fig. 4. The explanations that have already been made will not be repeated.

The structure of the decoding device 460 shown in Fig. 38 differs from the structure shown in Fig. 4 mainly in that the separating unit 121, the decoder 122, and the image generating unit 171 are replaced with a decoder 462 and an image generating unit 463. The decoding device 460 decodes the multiplexed stream transmitted from the encoding device 440, generates a two-view image or a multi-view image, and causes a display device (not shown) to display the generated image.

Specifically, the separating unit 461 of the decoding device 460 receives the multiplexed stream transmitted from the encoding device 440, and separates the TSs from each other. The separating unit 461 extracts the compatible stream contained in the TSs and the auxiliary stream contained in the TSs, and supplies the extracted streams to the decoder 462. The separating unit 461 also extracts the auxiliary information contained in the TSs, supplies the image information in the auxiliary information to an image information acquiring unit 123, and supplies the inter-viewpoint distance information to an inter-viewpoint distance information acquiring unit 124. Further, the separating unit 461 supplies the parallax image information in the auxiliary information to a parallax image information acquiring unit 125, and supplies the compatibility information to a compatibility information acquiring unit 126.

The decoder 462 is formed with a compatible decoder 131 and an auxiliary decoder 471. The auxiliary decoder 471 of the decoder 462 decodes the multiplexed image of the auxiliary images and the temporal multiplexed image contained in the auxiliary stream supplied from the separating unit 461, by a technique corresponding to the auxiliary encoder 451 shown in Fig. 31. The auxiliary decoder 471 supplies the multiplexed image of the auxiliary images and the temporal multiplexed image obtained as a result of the decoding, to the image generating unit 463.

In accordance with a display instruction from a viewer, the image generating unit 463 outputs images, and causes the display device (not shown) to display the images. Specifically, in accordance with a multi-view 3D image display instruction from a viewer, the image generating unit 463 generates images that are of three or more viewpoints corresponding to the display device (not shown) and have half the resolution of the compatible images and the auxiliary images, using the multiplexed image of the compatible images, the multiplexed image of the auxiliary images, and the temporal multiplexed image, based on the image information from the image information acquiring unit 123, the inter-viewpoint distance information from the inter-viewpoint distance information acquiring unit 124, the parallax image information from the parallax image information acquiring unit 125, the compatibility information from the compatibility information acquiring unit 126, and the like.

More specifically, based on the information that is contained in the parallax image information from the parallax image information acquiring unit 125 and indicates the frame sequential technique as the multiplexing technique for multiplexed images of the parallax images of the compatible images and the parallax images of the auxiliary images, the image generating unit 463 separates the parallax image A2' and the parallax image B2', which are the parallax images of the compatible images, and the multiplexed image of the parallax images of the auxiliary images, from the temporal multiplexed image. Based on the information that is contained in the parallax image information and indicates the multiplexing technique for the parallax images of the auxiliary images, the image generating unit 463 separates the parallax image C2' and the parallax image D2' from the multiplexed image of the parallax images of the auxiliary images.

Further, based on the information that is contained in the image information from the image information acquiring unit 123 and indicates the multiplexing technique for the auxiliary images, the image generating unit 463 separates each of the auxiliary images from the multiplexed image of the auxiliary images, like the image generating unit 171 shown in Fig. 4. Also, based on the information that is contained in the image information and indicates the multiplexing technique for the compatible images, the image generating unit 463 separates each of the compatible images from the multiplexed image of the compatible images, like the image generating unit 171.

Also, based on the inter-viewpoint distance information and the number of viewpoints corresponding to the display device (not shown), the image generating unit 463 determines the location of each of the viewpoints of the multi-view image to be generated, like the image generating unit 171. Using the respective compatible images, the respective auxiliary images, the parallax images of the respective compatible images, and the parallax images of the respective auxiliary images, the image generating unit 463 generates images of the respective viewpoints having the locations determined, like the image generating unit 171. The image generating unit 463 then converts the resolution of the generated images of the respective viewpoints to the resolution calculated by dividing the resolution of the compatible images and the auxiliary images by the number of viewpoints, and combines the generated images, like the image generating unit 171. The resultant image is then displayed on the display device (not shown).

At this point, the multi-view image after the combining is displayed in such a manner that the viewable angle varies at each viewpoint, and the viewer can view a 3D image without glasses by seeing the images of any two viewpoints with both eyes.

In accordance with a two-view 3D image display instruction from a viewer, the image generating unit 463 separates the multiplexed image of the compatible images supplied from the decoder 462 into the image A2 and the image B2 with half the resolution of the compatible images, based on the image information from the image information acquiring unit 123, like the image generating unit 171. Like the image generating unit 171, the image generating unit 463 alternately outputs the image A2 and the image B2 with half the resolution of the separated compatible images, and causes the display device (not shown) to display those images. At this point, the viewer puts on glasses that open one of the shutter for the left eye and the shutter for the right eye when the image A2 is displayed, and open the other one of the shutters when the image B2 is displayed. Wearing the glasses, the viewer sees the image A2 and the image B2 that are alternately displayed on the display device. In this manner, the viewer can view a 3D image.

### [Description of a Decoding Operation]

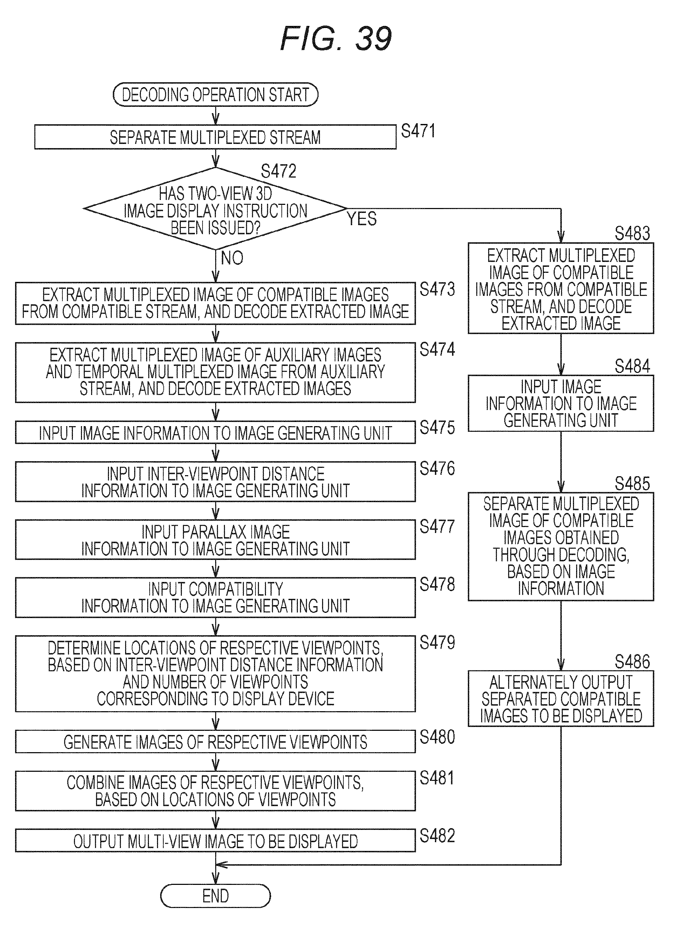

Fig. 39 is a flowchart for explaining a decoding operation by the decoding device 460 shown in Fig. 38. This decoding operation is started when the multiplexed stream transmitted from the encoding device 440 shown in Fig. 31 is input to the decoding device 460, for example.

In step S471 in Fig. 39, the separating unit 461 of the decoding device 460 acquires the multiplexed stream transmitted from the encoding device 50, and separates the multiplexed stream into the respective TSs. The separating unit 461 extracts the compatible stream and the auxiliary stream contained in the TSs, and supplies the extracted streams to the decoder 462. The separating unit 461 also extracts the auxiliary information contained in the TSs, supplies the image information in the auxiliary information to the image information acquiring unit 123, and supplies the inter-viewpoint distance information to the inter-viewpoint distance information acquiring unit 124. Further, the separating unit 461 supplies the parallax image information in the auxiliary information to the parallax image information acquiring unit 125, and supplies the compatibility information to the compatibility information acquiring unit 126.

In step S472, the image generating unit 463 determines whether a two-view 3D image display instruction has been issued from a viewer. If it is determined in step S472 that a two-view 3D image display instruction has not been issued from a viewer, or that a multi-view 3D image display instruction has been issued, the operation moves on to step S473.

In step S473, the compatible decoder 131 of the decoder 462 extracts the encoded compatible images from the compatible stream supplied from the separating unit 461, and decodes the compatible images by a technique corresponding to the AVC technique. The compatible decoder 131 supplies the image A1 obtained as a result of the decoding to the image generating unit 463.

In step S474, the auxiliary decoder 471 extracts the encoded multiplexed image of the auxiliary images and the temporal multiplexed image from the auxiliary stream, and decodes the multiplexed image of the auxiliary images and the temporal multiplexed image by a technique corresponding to the auxiliary encoder 451 shown in Fig. 31. The auxiliary decoder 471 supplies the multiplexed image of the auxiliary images and the temporal multiplexed image obtained as a result of the decoding, to the image generating unit 127, and the operation moves on to step S475.

In step S475, the image information acquiring unit 123 acquires the image information supplied from the separating unit 461, and inputs the image information to the image generating unit 463. In step S476, the inter-viewpoint distance information acquiring unit 124 acquires the inter-viewpoint distance information supplied from the separating unit 461, and supplies the inter-viewpoint distance information to the image generating unit 463.

In step S477, the parallax image information acquiring unit 125 acquires the parallax image information supplied from the separating unit 461, and inputs the parallax image information to the image generating unit 463. In step S478, the compatibility information acquiring unit 126 acquires the compatibility information supplied from the separating unit 461, and supplies the compatibility information to the image generating unit 463.

In step S479, based on the inter-viewpoint distance information from the inter-viewpoint distance information acquiring unit 124 and the number of viewpoints corresponding to the display device (not shown), the image generating unit 463 determines the location of each of the viewpoints of the multi-view image to be generated.

In step S480, the image generating unit 463 generates images of the respective viewpoints that have half the resolution of the compatible images and the auxiliary images, using the multiplexed image of the compatible images, the multiplexed image of the auxiliary images, and the temporal multiplexed image, based on the locations of the respective viewpoints determined in step S479, the image information from the image information acquiring unit 123, the parallax image information from the parallax image information acquiring unit 125, the compatibility information from the compatibility information acquiring unit 126, and the like.

In step S481, the image generating unit 463 converts the resolution of the images of the respective viewpoints generated in step S480 to the resolution calculated by dividing the resolution of the compatible images and the auxiliary images by the number of viewpoints, and combines the images of the respective viewpoints after the conversion, based on the locations of the viewpoints.

In step S482, the image generating unit 463 outputs the multi-view image obtained through the combining process in step S481 to the display device (not shown), and causes the display device to display the multi-view image so that the viewable angle varies at each viewpoint. The operation then comes to an end.

If it is determined in step 472 that a two-view 3D image display instruction has been issued from a viewer, on the other hand, the operation moves on to step S483.

In step S483, the compatible decoder 131 of the decoder 462 extracts the encoded multiplexed image of the compatible images from the compatible stream supplied from the separating unit 461, and decodes the multiplexed image by a technique corresponding to the AVC technique. The compatible decoder 131 supplies the multiplexed image of the compatible images obtained as a result of the decoding to the image generating unit 463.

In step S484, the image information acquiring unit 123 acquires the image information supplied from the separating unit 461, and inputs the image information to the image generating unit 463.

In step S485, based on the information that is contained in the image information supplied from the image information acquiring unit 123 and indicates the multiplexing technique for the compatible images, the image generating unit 463 separates the multiplexed image of the compatible images obtained as a result of the decoding by the compatible decoder 131.

In step S486, the image generating unit 463 alternately outputs the image A2 and the image B2 with half the resolution of the separated compatible images to the display device, and causes the display device (not shown) to display those images. The operation then comes to an end.

In a decoding device that can decode only the compatible stream having compatibility with the decoding device 460, the auxiliary stream is ignored, and the procedures of steps S483, S485, and S486 are carried out. In this case, however, in the procedure in step S485, the multiplexed image of the compatible images is separated, based on the multiplexing technique determined in advance.

### [Baseband Data Transmission]

In the above described decoding device 460 shown in Fig. 38, if the left side (the separating unit 461 and the decoder 462) of the dashed line L4 is designed as a reproducing device, and the right side (the image generating unit 463) of the dashed line L3 is designed as a display device, the reproducing device and the display device have the same structures as those of the above described reproducing device 301 and the reproducing device 302, respectively.

### <4. Fourth Embodiment>

### [Example Structure of an Encoding Device]

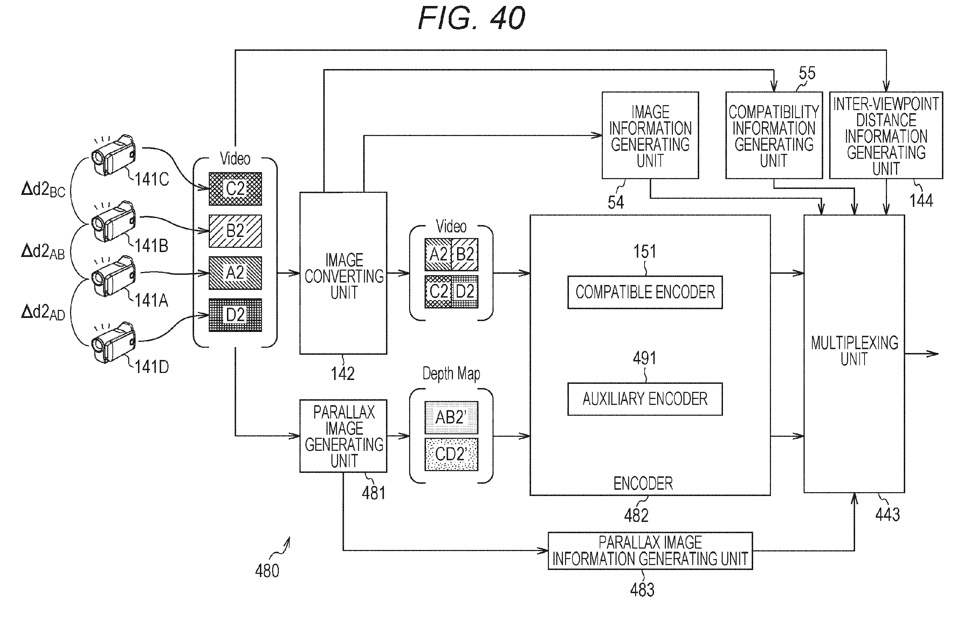

Fig. 40 is a block diagram showing an example structure of an encoding device that encodes 3D images transmitted in a fourth embodiment of a transmission system to which the present technique is applied.

In the structure illustrated in Fig. 40, the same components as those in Fig. 31 are denoted by the same reference numerals as those in Fig. 31. The explanations that have already been made will not be repeated.

The structure of the encoding device 480 shown in Fig. 40 differs from the structure shown in Fig. 31 mainly in that the parallax image generating unit 143, the encoder 145, and the parallax image information generating unit 57 are replaced with a parallax image generating unit 481, an encoder 482, and a parallax image information generating unit 483. The encoding device 480 encodes a common parallax image indicating parallax values common to compatible images and a common parallax image of auxiliary images.

Specifically, using images A2 through D2 supplied from imaging units 141A through 141D, the parallax image generating unit 481 of the encoding device 480 detects the parallax of each pixel between the image A2 and the image B2, and the parallax of each pixel between the image C2 and the image D2. The parallax image generating unit 481 generates a parallax image formed with parallax values representing the parallaxes of the respective pixels between the image A2 and the image B2, and supplies the parallax image as a common parallax image AB2' of the compatible images to the encoder 482. The parallax image generating unit 481 also generates a parallax image formed with parallax values representing the parallaxes of the respective pixels between the image C2 and the image D2, and supplies the parallax image as a common parallax image CD2' of the auxiliary images to the encoder 482.

The parallax image generating unit 481 supplies information indicating that the parallax images of the compatible images and the auxiliary images are common parallax images, to the parallax image information generating unit 483.

The encoder 482 is formed with a compatible encoder 151 and an auxiliary encoder 491. The auxiliary encoder 491 encodes a multiplexed image of the auxiliary images from an image converting unit 142, and the common parallax image AB2' of the compatible images and the common parallax image CD2' of the auxiliary images from the parallax image generating unit 481, by the 3DV technique. The auxiliary encoder 491 supplies the resultant encoded stream as an auxiliary stream to a multiplexing unit 443.

Based on the information supplied from the parallax image generating unit 53, the parallax image information generating unit 483 generates information indicating that the parallax images of the compatible images and the auxiliary images are common parallax images and the like as parallax image information, and supplies the parallax image information to the multiplexing unit 443.

### [Description of an Operation of the Encoding Device]

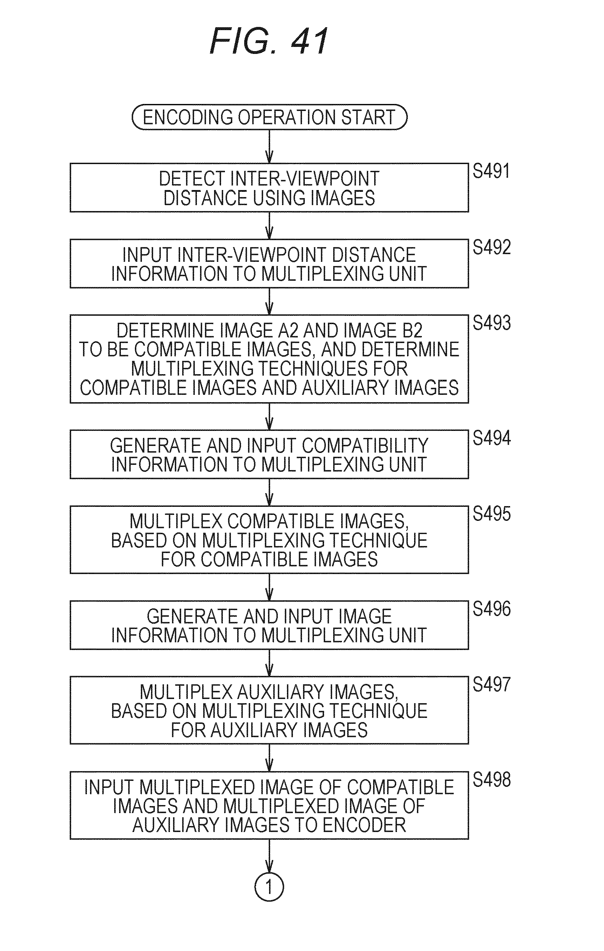

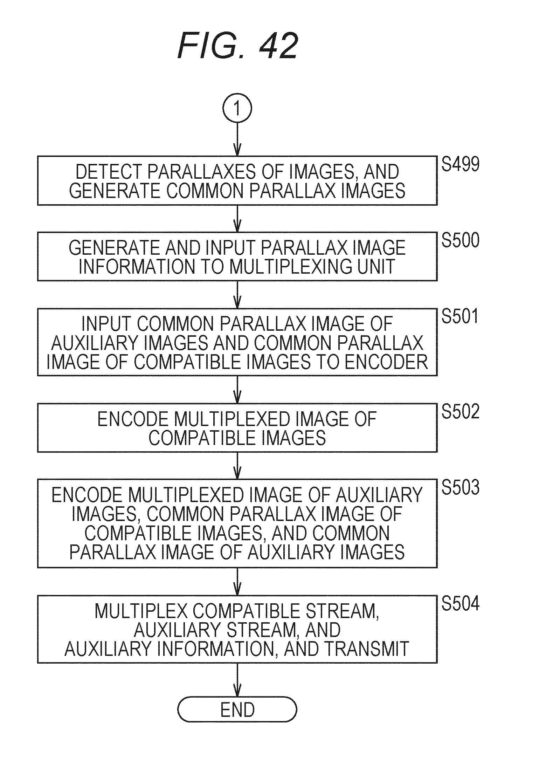

Figs. 41 and 42 are flowcharts for explaining an encoding operation by the encoding device 480 shown in Fig. 40. This encoding operation is started when the images A2 through D2 are output from the imaging units 141A through 141D, for example.

The procedures in steps S491 through S498 in Fig. 41 are the same as the procedures in steps S451 through S458 in Fig. 36, and therefore, explanation of them is not repeated herein.

In step S499 in Fig. 42, using images A2 through D2 supplied from imaging units 141A through 141D, the parallax image generating unit 481 detects the parallax of each pixel between the image A2 and the image B2, and the parallax of each pixel between the image C2 and the image D2. The parallax image generating unit 481 then generates the common parallax image AB2' formed with parallax values representing the parallaxes of the respective pixels between the image A2 and the image B2, and the common parallax image CD2' formed with parallax values representing the parallaxes of the respective pixels between the image C2 and the image D2.

In step S500, based on the information supplied from the parallax image generating unit 481, the parallax image information generating unit 483 generates information indicating that the parallax images of the compatible images and the auxiliary images are common parallax images and the like as parallax image information, and inputs the parallax image information to the multiplexing unit 443.

In step S501, the parallax image generating unit 481 inputs the common parallax image CD2' of the auxiliary images and the common parallax image AB2' of the compatible images generated in step S499, to the encoder 482.

In step S502, the compatible encoder 151 of the encoder 482 encodes a multiplexed image of the compatible images supplied from the image converting unit 142 by the conventional AVC technique, and supplies the resultant encoded stream as a compatible stream to the multiplexing unit 443.

In step S503, the auxiliary encoder 491 encodes the multiplexed image of the auxiliary images from the image converting unit 142, and the common parallax image of the compatible images and the common parallax image of the auxiliary images from the parallax image generating unit 481, by the 3DV technique. The auxiliary encoder 491 supplies the encoded stream as the auxiliary stream obtained as a result of the encoding to the multiplexing unit 443.

In step S504, the multiplexing unit 443 generates TSs from the compatible stream supplied from the compatible encoder 151, the auxiliary stream supplied from the auxiliary encoder 491, and auxiliary information, and multiplexes the TSs. The resultant multiplexed stream is then transmitted. This multiplexed stream is recorded on a BD or the like, or is transmitted as a stream for broadcasting, for example. The operation then comes to an end.

### [Example Structure of a Decoding Device]

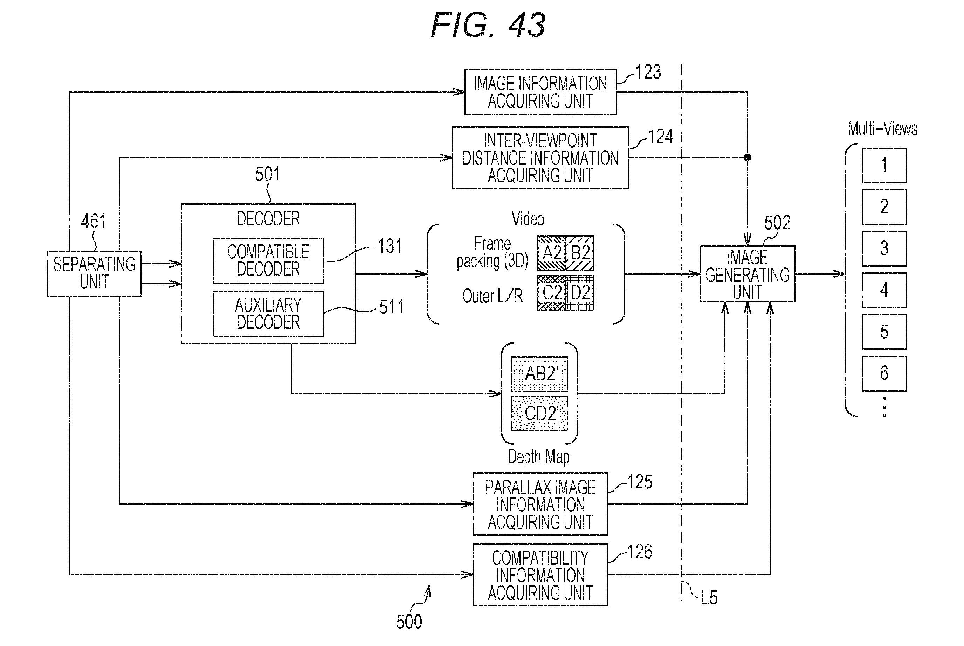

Fig. 43 is a diagram showing an example structure of a decoding device that decodes the multiplexed stream transmitted from the encoding device 480 shown in Fig. 40.

In the structure illustrated in Fig. 43, the same components as those in Fig. 38 are denoted by the same reference numerals as those in Fig. 38. The explanations that have already been made will not be repeated.

The structure of the decoding device 500 shown in Fig. 43 differs from the structure shown in Fig. 38 mainly in that the decoder 122 and the image generating unit 171 are replaced with a decoder 501 and an image generating unit 502. The decoding device 500 decodes the multiplexed stream transmitted from the encoding device 480, generates a two-view image or a multi-view image, and causes a display device (not shown) to display the generated image.

Specifically, the decoder 501 of the decoding device 500 is formed with a compatible decoder 131 and an auxiliary decoder 511. The auxiliary decoder 511 of the decoder 501 decodes the multiplexed image of the auxiliary images, the common parallax image AB2' of the compatible images, and the common parallax image CD2' of the auxiliary images, which are contained in the auxiliary stream supplied from the separating unit 461, by a technique corresponding to the auxiliary encoder 491 shown in Fig. 40. The auxiliary decoder 511 supplies the multiplexed image of the auxiliary images, the common parallax image AB2', and the common parallax image CD2' obtained as a result of the decoding, to the image generating unit 502.

In accordance with a display instruction from a viewer, the image generating unit 502 outputs images, and causes the display device (not shown) to display the images. Specifically, in accordance with a multi-view 3D image display instruction from a viewer, the image generating unit 502 generates images that are of three or more viewpoints corresponding to the display device (not shown) and have half the resolution of the compatible images and the auxiliary images, using the multiplexed image of the compatible images, the multiplexed image of the auxiliary images, the common parallax image AB2', and the common parallax image CD2', based on image information from an image information acquiring unit 123, inter-viewpoint distance information from an inter-viewpoint distance information acquiring unit 124, parallax image information from a parallax image information acquiring unit 125, compatibility information from a compatibility information acquiring unit 126, and the like.

More specifically, based on the information that is contained in the parallax image information from the parallax image information acquiring unit 125 and indicates that the parallax images of the compatible images and the auxiliary images are common parallax images, the image generating unit 502 maintains the common parallax image AB2' and the common parallax image CD2' as they are.

Also, based on the information that is contained in the image information from the image information acquiring unit 123 and indicates the multiplexing technique for the auxiliary images, the image generating unit 502 separates each of the auxiliary images from the multiplexed image of the auxiliary images, like the image generating unit 171 shown in Fig. 3. Further, based on the information that is contained in the image information and indicates the multiplexing technique for the compatible images, the image generating unit 502 separates each of the compatible images from the multiplexed image of the compatible images, like the image generating unit 171.

Also, based on the inter-viewpoint distance information and the number of viewpoints corresponding to the display device (not shown), the image generating unit 502 determines the location of each of the viewpoints of the multi-view image to be generated, like the image generating unit 171. Using the respective compatible images, the respective auxiliary images, the common parallax image AB2', and the common parallax image CD2', the image generating unit 502 generates images of the respective viewpoints having the locations determined. Like the image generating unit 171, the image generating unit 502 then converts the resolution of the generated images of the respective viewpoints to the resolution calculated by dividing the resolution of the compatible images and the auxiliary images by the number of viewpoints, and combines the generated images. The resultant image is then displayed on the display device (not shown).

At this point, the multi-view image after the combining is displayed in such a manner that the viewable angle varies at each viewpoint, and the viewer can view a 3D image without glasses by seeing the images of any two viewpoints with both eyes.

In accordance with a two-view 3D image display instruction from a viewer, the image generating unit 502 separates the multiplexed image of the compatible images supplied from the decoder 501 into the image A2 and the image B2 with half the resolution of the compatible images, based on the image information from the image information acquiring unit 123, like the image generating unit 171. Like the image generating unit 171, the image generating unit 502 alternately outputs the image A2 and the image B2 with half the resolution of the separated compatible images, and causes the display device (not shown) to display those images. At this point, the viewer puts on glasses that open one of the shutter for the left eye and the shutter for the right eye when the image A2 is displayed, and open the other one of the shutters when the image B2 is displayed. Wearing the glasses, the viewer sees the image A2 and the image B2 that are alternately displayed on the display device. In this manner, the viewer can view a 3D image.

### [Description of an Operation of the Decoding Device]

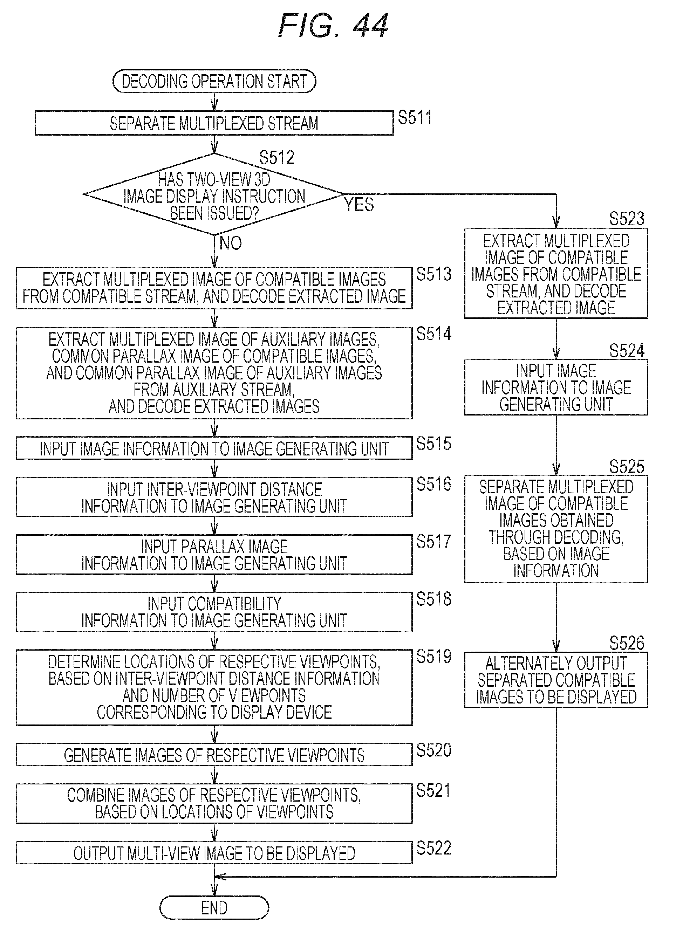

Fig. 44 is a flowchart for explaining a decoding operation by the decoding device 500 shown in Fig. 43. This decoding operation is started when the multiplexed stream transmitted from the encoding device 480 shown in Fig. 40 is input to the decoding device 500, for example.

The procedures in steps S511 through S513 in Fig. 44 are the same as the procedures in steps S471 through S473 in Fig. 39, and therefore, explanation of them is not repeated herein.

In step S514, the auxiliary decoder 511 extracts the encoded multiplexed image of the auxiliary images, the encoded common parallax image AB2' of the compatible images, and the encoded common parallax image CD2' of the auxiliary images from the auxiliary stream, and decodes the extracted images by a technique corresponding to the encoding technique used in the auxiliary encoder 491 shown in Fig. 40. The auxiliary decoder 511 supplies the multiplexed image of the auxiliary images, the common parallax image AB2', and the common parallax image CD2' obtained as a result of the decoding, to the image generating unit 502.

The procedures in steps S515 through S519 are the same as the procedures in steps S475 through S479 in Fig. 39, and therefore, explanation of them is not repeated herein.

After the procedure in step S519, the image generating unit 502 in step S520 generates images of the respective viewpoints that have half the resolution of the compatible images and the auxiliary images, using the compatible images, the multiplexed image of the auxiliary images, the common parallax image AB2', and the common parallax image CD2', based on the locations of the respective viewpoints determined in step S519, the image information from the image information acquiring unit 123, the parallax image information from the parallax image information acquiring unit 125, the compatibility information from the compatibility information acquiring unit 126, and the like.

The procedures in steps S521 through S526 are the same as the procedures in steps S481 through S486 in Fig. 39, and therefore, explanation of them is not repeated herein.

### [Baseband Data Transmission]

In the above described decoding device 500 shown in Fig. 43, if the left side (the separating unit 461 and the decoder 501) of the dashed line L5 is designed as a reproducing device, and the right side (the image generating unit 502) of the dashed line L3 is designed as a display device, the reproducing device and the display device have the same structures as those of the above described reproducing device 301 and the reproducing device 302, respectively.

The encoding device 440 and the encoding device 480 encode compatible images of two viewpoints after multiplexing those compatible images, like the encoding device 140. However, the encoding device 440 and the encoding device 480 may encode the compatible images of two viewpoints without multiplexing the compatible images, like the encoding device 180 shown in Fig. 5. Also, the encoding device 440 and the encoding device 480 may encode a compatible image of one viewpoint, like the encoding device 50 shown in Fig. 1.

Also, the encoding device 140 and the encoding device 180 may encode parallax images of compatible images and auxiliary images, without multiplexing those parallax images. Further, the encoding device 50 may encode parallax images of auxiliary images, without multiplexing those parallax images.

### <Examples of Multiplexing Patterns for Objects to be Encoded>

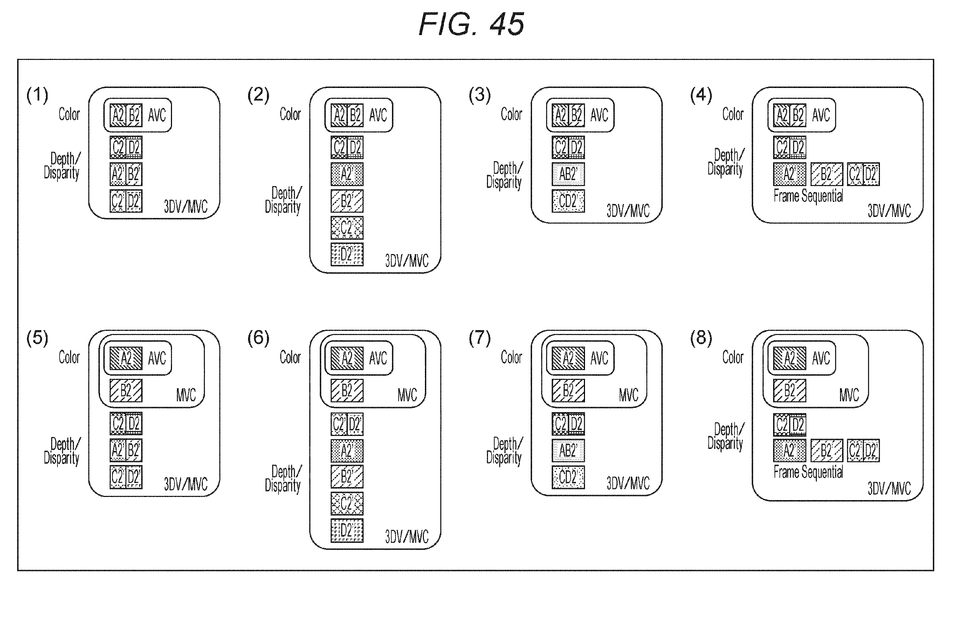

Fig. 45 is a diagram showing examples of multiplexing patterns for objects to be encoded in cases where the number of compatible image viewpoints is 2, and the number of auxiliary image viewpoints is 2.

As shown in (1) in Fig. 45, the encoding device 140 shown in Fig. 3 multiplexes the image A2 and the image B2 as compatible images in a spatial direction, and encodes those images by the AVC technique. The encoding device 140 also multiplexes, in a spatial direction, the image C2 and the image D2 as the auxiliary images, the parallax image A2' and the parallax image B2' as the parallax images of the compatible images, and the parallax image C2' and the parallax image D2' as the parallax images of the auxiliary images, and encodes those multiplexed images by the 3DV technique compliant with the MVC technique.

As shown in (2) in Fig. 45, the encoding device 140 may not multiplex the parallax images A2' through D2', and may encode those parallax images by the 3DV technique compliant with the MVC technique. Further, as shown in (3) in Fig. 45, the encoding device 480 shown in Fig. 40 encodes the common parallax image AB2', instead of the parallax image A2' and the parallax image B2' of the parallax images of the compatible images, and encodes the common parallax image CD2', instead of the parallax image C2' and the parallax image D2' of the parallax images of the auxiliary images.

Also, as shown in (4) in Fig. 45, the encoding device 440 shown in Fig. 31 does not multiplex the parallax image A2' and the parallax image B2' as the parallax images of the compatible images in a spatial direction, but multiplexes the parallax image A2', the parallax image B2', and the multiplexed image of the parallax images of the auxiliary images by the frame sequential technique, and then encodes the multiplexed image by the 3DV technique compliant with the MVC technique.

Further, as shown in (5) in Fig. 45, the encoding device 180 shown in Fig. 5 does not multiplex the image A2 and the image B2 as the compatible images, but encodes the image A2 by the AVC technique, and encodes the image B2 by the MVC technique using the image A2 as the base view. The encoding device 180 also multiplexes, in a spatial direction, the image C2 and the image D2 as the auxiliary images, the parallax image A2' and the parallax image B2' as the parallax images of the compatible images, and the parallax image C2' and the parallax image D2' as the parallax images of the auxiliary images, and encodes those multiplexed images by the 3DV technique compliant with the MVC technique.

As shown in (6) in Fig. 45, the encoding device 180 may not multiplex the parallax images A2' through D2', and may encode those parallax images by the 3DV technique compliant with the MVC technique. As shown in (7) in Fig. 45, the encoding device 180 may encode the common parallax image AB2', instead of the parallax image A2' and the parallax image B2', and encode the common parallax image CD2', instead of the parallax image C2' and the parallax image D2', like the encoding device 480.

Further, as shown in (8) in Fig. 45, the encoding device 180 may not multiplex the parallax image A2' and the parallax image B2' in a spatial direction, but may multiplex the parallax image A2', the parallax image B2', and the multiplexed image of the parallax images of the auxiliary images by the frame sequential technique, and encode the multiplexed image by the 3DV technique compliant with the MVC technique, like the encoding device 440.

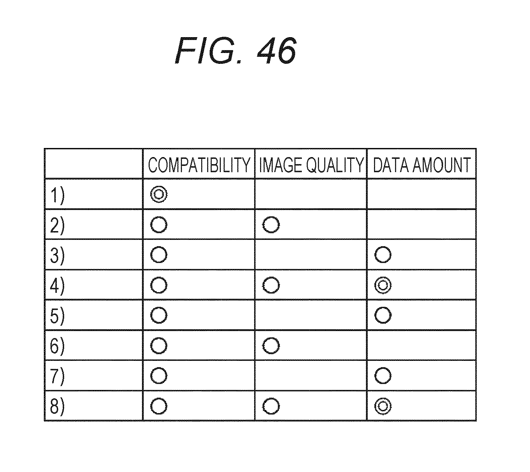

Fig. 46 is a diagram showing the characteristics of the effects of the multiplexing using the multiplexing patterns shown in (1) through (8) in Fig. 45.

In the table in Fig. 46, the items of effects, "compatibility", "image quality", and "data amount", are provided to indicate the levels of effects in the respective items of the multiplexing patterns shown in (1) through (8) in Fig. 45. It should be noted that, in the table in Fig. 46, single circles represent "good", and double circles represent "excellent".

In a case where multiplexing is performed in the multiplexing pattern shown in (1) in Fig. 45, the multiplexing technique and the encoding technique for the compatible images are the same as conventional techniques, and compatibility is secured. Also, as the parallax images are multiplexed in a spatial direction like the compatible images, the parallax images can be separated by using the separating unit that is prepared on the decoding device side and separates the compatible images, for example. Accordingly, separation of the parallax images on the decoding device side is guaranteed. Thus, this case is particularly effective in terms of the compatibility, and a double circle is put in the "compatibility" column in Fig. 46.

In a case where multiplexing is performed in the multiplexing pattern shown in (2) in Fig. 45, the multiplexing technique and the encoding technique for the compatible images are also the same as conventional techniques, and compatibility is secured. As the resolution of the parallax images is the same as the resolution of the pre-multiplex images, high precision is achieved. As a result, the precision of the images of predetermined viewpoints generated by using the parallax images is increased in the decoding device. Accordingly, this case is effective in terms of the compatibility and the image quality of the images generated by using the parallax images. Thus, single circles are put in the "compatibility" and "image quality" columns in Fig. 46.

Further, in a case where multiplexing is performed in the multiplexing pattern shown in (3) in Fig. 45, the encoding technique and the multiplexing technique for the compatible images are the same as conventional techniques, and compatibility is secured. Also, the data amount of the parallax images of the compatible images and the auxiliary images, the resolution of which is the same as the resolution of the pre-multiplex images, is reduced to the data amount of parallax images of two viewpoints. Accordingly, this case is effective in terms of the compatibility and the data amount, and single circles are put in the "compatibility" and "data amount" columns in Fig. 46.

In a case where multiplexing is performed in the multiplexing pattern shown in (4) in Fig. 45, the encoding technique and the multiplexing technique for the compatible images are also the same as conventional techniques, and compatibility is secured. Also, as the parallax images are multiplexed in a temporal direction, the data amount of the parallax images at each time becomes smaller than in the case (3) in Fig. 45, and the transmittable data amount increases. Accordingly, even in a situation where the transmission band is not wide enough to transmit parallax images having the same resolution as pre-multiplex images, parallax images having the same resolution as pre-multiplex images can be transmitted. Accordingly, the precision of the images of predetermined viewpoints generated by using the parallax images becomes higher in the decoding device. This case is effective in terms of the compatibility and the image quality of the images generated by using the parallax images, and is particularly effective in terms of the data amount. Thus, single circles are put in the "compatibility" and "image quality" columns, and a double circuit is put in the "data amount" column in Fig. 46.

Multiplexing in the multiplexing patterns shown in (1) through (4) in Fig. 45 is performed when encoding is performed on images for broadcasting such as next-generation broadcasting combined with the IP (Internet Protocol) compliant with the ATSC (Advanced Television Systems Committee) 2.0 standard or the like, or images for applications distributed via the Internet, for example.

Further, in a case where multiplexing is performed in the multiplexing pattern shown in (5) in Fig. 45, the encoding technique and the multiplexing technique for the compatible images are the same as conventional techniques, and compatibility is secured. Also, as the resolution of the respective parallax images is half the resolution of the images, the data amount of the parallax images of the compatible images and the auxiliary images is reduced to the data amount of parallax images of two viewpoints. Accordingly, this case is effective in terms of the compatibility and the data amount, and single circles are put in the "compatibility" and "data amount" columns in Fig. 46.

In a case where multiplexing is performed in the multiplexing pattern shown in (6) in Fig. 45, compatibility is secured, and the precision of the images of predetermined viewpoints generated by using the parallax images is increased in the decoding device, as in (2) in Fig. 45. Accordingly, this case is effective in terms of the compatibility and the image quality of the images generated by using the parallax images. Thus, single circles are put in the "compatibility" and "image quality" columns in Fig. 46.

In a case where multiplexing is performed in the multiplexing pattern shown in (7) in Fig. 45, compatibility is secured, and the data amount of the parallax images is reduced, as in (3) in Fig. 45. Accordingly, this case is effective in terms of the compatibility and the data amount, and single circles are put in the "compatibility" and "data amount" columns in Fig. 46.

In a case where multiplexing is performed in the multiplexing pattern shown in (8) in Fig. 45, compatibility is secured, as in (4) in Fig. 45. Also, as in (4) in Fig. 45, the data amount of the parallax images at each time is made smaller than in the case (7) in Fig. 45. As a result, the precision of the images of predetermined viewpoints generated by using the parallax images in the decoding device becomes higher. This case is effective in terms of the compatibility and the image quality of the images generated by using the parallax images, and is particularly effective in terms of the data amount. Thus, single circles are put in the "compatibility" and "image quality" columns, and a double circuit is put in the "data amount" column in Fig. 46.

Multiplexing in the multiplexing patterns shown in (5), (7), and (8) in Fig. 45 is performed when encoding is performed on images for BDs, broadcasting, next-generation broadcasting, or applications distributed via the Internet, for example. Further, multiplexing in the multiplexing pattern shown in (6) in Fig. 45 is performed when encoding is performed on images for BDs, next-generation broadcasting, or applications distributed via the Internet, for example.

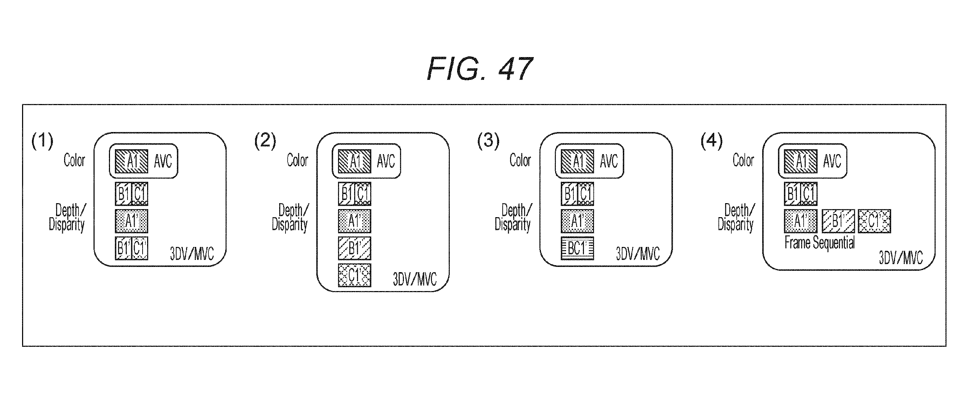

Fig. 47 is a diagram showing examples of multiplexing patterns for objects to be encoded in cases where the number of compatible image viewpoints is 1, and the number of auxiliary image viewpoints is 2.

As shown in (1) in Fig. 47, the encoding device 50 shown in Fig. 1 encodes the image A1 as the compatible image by the AVC technique. The encoding device 50 also multiplexes, in a temporal direction, the image B1 and the image C1 as the auxiliary images, and the parallax image B1' and the parallax image C1' as the parallax images of the auxiliary images. The encoding device 50 then encodes the parallax image A1' as the parallax image of the compatible image, the multiplexed image of the auxiliary images, and the multiplexed image of the parallax images of the auxiliary images by the 3DV technique compliant with the MVC technique.

As shown in (2) in Fig. 47, the encoding device 50 may not multiplex the parallax images A1' through C1', and may encode those parallax images by the 3DV technique compliant with the MVC technique. Also, as shown in (3) in Fig. 47, the encoding device 50 may encode the common parallax image BC1' of the image B and the image C as the auxiliary images, instead of the multiplexed image of the parallax images of the auxiliary images, like the encoding device 480.

Further, as shown in (4) in Fig. 47, the encoding device 50 may not multiplex the parallax image B1' and the parallax image C1' in a spatial direction, but may multiplex the parallax images A1' through C1' by the frame sequential technique, and encode the multiplexed image by the 3DV technique compliant with the MVC technique, like the encoding device 440.

The effects of the multiplexing in the multiplexing patterns shown in (1) through (4) in Fig. 47, and the objects to be encoded when the multiplexing is performed in the multiplexing patterns are the same as the effects of the multiplexing and the objects to be encoded in the multiplexing patterns shown in (5) through (8) in Fig. 45, respectively. However, in the multiplexing in the multiplexing pattern shown in (1) in Fig. 47, the resolution of the parallax image of the compatible image is the same as the resolution of the compatible image, and therefore, only the data amount of the parallax images of the auxiliary images can be effectively reduced by virtue of the multiplexing.

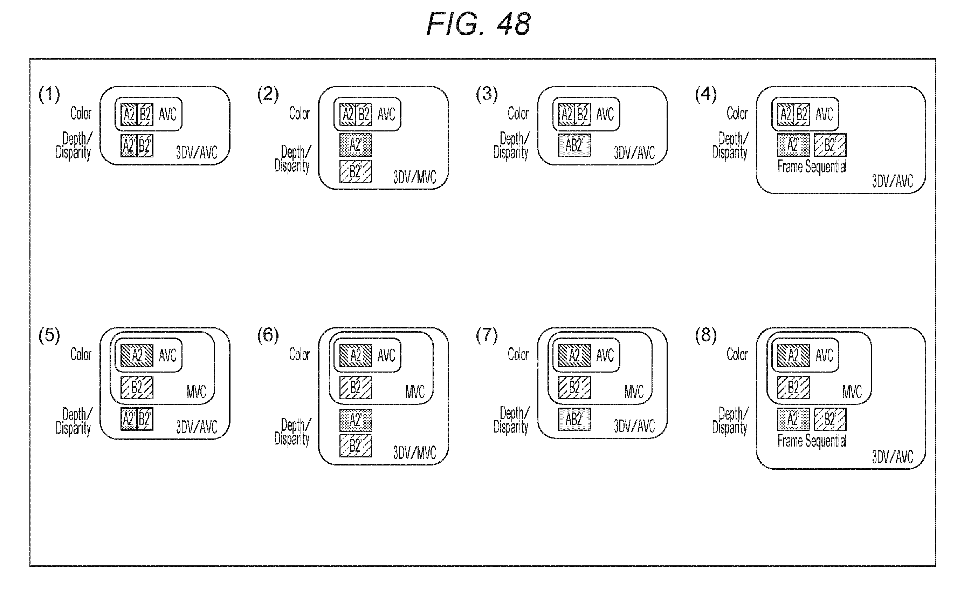

Fig. 48 is a diagram showing examples of multiplexing patterns for objects to be encoded in cases where the number of compatible image viewpoints is 2, and the number of auxiliary image viewpoints is 0.

In a case where the number of compatible image viewpoints is 2 while the number of auxiliary image viewpoints is 0, the image A2 and the image B2 as the compatible images are multiplexed in a spatial direction shown in (1) in Fig. 48, and are encoded by the AVC technique, as in the case of the encoding device 140 shown in Fig. 3. Also, the parallax image A2' and the parallax image B2' as the parallax images of the compatible images are multiplexed in a spatial direction, and are encoded by the 3DV technique compliant with the AVC technique.

As shown in (2) in Fig. 48, the parallax image A2' and the parallax image B2' may not be multiplexed, but may be encoded by the 3DV technique compliant with the MVC technique. Also, as shown in (3) in Fig. 48, the common parallax image AB2' may be encoded, instead of the parallax image A2' and the parallax image B2', as in the case of the encoding device 480.

Also, as shown in (4) in Fig. 48, the parallax image A2' and the parallax image B2' may not be multiplexed in a temporal direction, but may be multiplexed by the frame sequential technique and be then encoded, as in the case of the encoding device 440.

Further, as shown in (5) in Fig. 48, the image A2 and the image B2 as the compatible images may not be multiplexed, but the image A2 may be encoded by the AVC technique, and the image B2 may be encoded by the MVC technique using the image A2 as the base view, as in the case of the encoding device 180.

In this case, the parallax images may not be multiplexed as shown in (6) in Fig. 48, but may be encoded, as in (2) in Fig. 48. Also, as shown in (7) in Fig. 48, the common parallax image AB2' may be encoded instead, as in (3) in Fig. 48. Also, as shown in (8) in Fig. 48, the parallax images of the compatible images may be multiplexed by the frame sequential technique, and be then encoded, as in (4) in Fig. 48.

The effects of the multiplexing in the multiplexing patterns shown in (1) through (8) in Fig. 47, and the objects to be encoded when the multiplexing is performed in the multiplexing patterns are the same as the effects of the multiplexing and the objects to be encoded in the multiplexing patterns shown in (1) through (8) in Fig. 45, respectively.

In the above described examples, the resolution of the parallax images multiplexed by the frame sequential technique is the same as the resolution of the pre-multiplex images. However, the resolution of those parallax images may be lower than the resolution of the pre-multiplex images. Also, the auxiliary images may be multiplexed by the frame sequential technique, like the parallax images.

Further, in the above described examples, the information indicating the multiplexing technique for the images and the information indicating the multiplexing technique for the parallax images are transmitted in the encoding devices. However, information for identifying the multiplexing patterns shown in Figs. 45, 47, and 48 may be transmitted.

Also, the encoding devices may transmit a flag for identifying an application suitable for the images to be encoded.

### <5. Fifth Embodiment>

### [Example Structure of an Encoding Device]

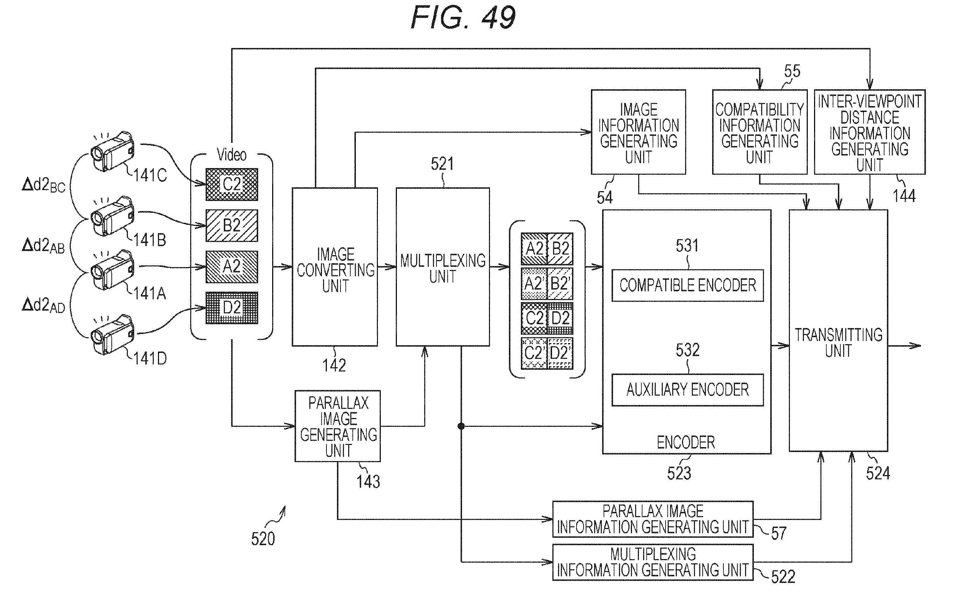

Fig. 49 is a block diagram showing an example structure of an encoding device that encodes 3D images transmitted in a fifth embodiment of a transmission system to which the present technique is applied.

In the structure illustrated in Fig. 49, the same components as those in Fig. 3 are denoted by the same reference numerals as those in Fig. 3. The explanations that have already been made will not be repeated.

The structure of the encoding device 520 shown in Fig. 49 differs from the structure shown in Fig. 3 mainly in that the encoder 145 and the multiplexing unit 443 are replaced with an encoder 523 and a transmitting unit 524, and a multiplexing unit 521 and a multiplexing information generating unit 522 are added.

The encoding device 520 multiplexes a multiplexed image of compatible images, a multiplexed image of auxiliary images, a multiplexed image of parallax images of the compatible images, and a multiplexed image of parallax images of the auxiliary images by the frame sequential technique, and then encodes the resultant multiplexed image.

Specifically, the multiplexing unit 521 of the encoding device 520 multiplexes, by the frame sequential technique, the multiplexed images of the compatible images and the auxiliary images obtained as a result of multiplexing performed by an image converting unit 142, and the multiplexed images of the parallax images of the compatible images and the auxiliary images obtained as a result of multiplexing performed by a parallax image generating unit 143.

The multiplexing unit 521 then supplies the multiplexed image obtained as a result of the multiplexing as a temporal-direction multiplexed image to the encoder 523. In this temporal-direction multiplexed image, the multiplexed image of the compatible images, the multiplexed image of the parallax images of the compatible images, the multiplexed image of the auxiliary images, and the multiplexed image of the parallax images of the auxiliary images sequentially exist in one frame time.

The multiplexing unit 521 also supplies information to the multiplexing information generating unit 522 and the encoder 523. The information indicates that the multiplexed images of the compatible images and the auxiliary images, and the multiplexed images of the parallax images of the compatible images and the auxiliary images are multiplexed by the frame sequential technique, and also indicates the sequential order of the images in the temporal multiplexed image.

Based on the information supplied from the multiplexing unit 521, the multiplexing information generating unit 522 generates the information and the like as overall multiplexing information about the multiplexing of the compatible images and the auxiliary images, and the multiplexing of the parallax images of the compatible images and the auxiliary images. The overall multiplexing information is supplied to the transmitting unit 524.

The encoder 523 is formed with a compatible encoder 531 and an auxiliary encoder 532. Based on the information supplied from the multiplexing unit 521, the encoder 523 supplies the multiplexed image of the compatible images in the temporal multiplexed image supplied from the multiplexing unit 521, to the compatible encoder 531. Based on the information supplied from the multiplexing unit 521, the encoder 523 also supplies the multiplexed image of the auxiliary images and the multiplexed images of the parallax images of the compatible images and the auxiliary images in the temporal multiplexed image, to the auxiliary encoder 532.

The compatible encoder 531 of the encoder 523 encodes the multiplexed image of the compatible images in the temporal multiplexed image by the conventional AVC technique. The auxiliary encoder 532 encodes the multiplexed image of the auxiliary images and the multiplexed images of the parallax images of the compatible images and the auxiliary images in the temporal multiplexed image, by the 3DV technique. At this point, the multiplexed image of the auxiliary images is encoded by referring to the multiplexed image of the compatible images, and the multiplexed image of the parallax images of the auxiliary images is encoded by referring to the multiplexed image of the parallax images of the compatible images.

The encoder 523 supplies a bit stream to the transmitting unit 524. The bit stream is formed with encoded data of the temporal multiplexed image obtained as a result of the encoding performed by the compatible encoder 531 or the auxiliary encoder 532.

Using the bit stream supplied from the encoder 523, image information from an image information generating unit 54, compatibility information from a compatibility information generating unit 55, inter-viewpoint distance information from an inter-viewpoint distance information generating unit 144, parallax image information from a parallax image information generating unit 57, the overall multiplexing information from the multiplexing information generating unit 522, and the like, the transmitting unit 524 generates TSs. The multiplexing unit 443 then transmits the generated TSs.

### [Description of an Operation of the Encoding Device]

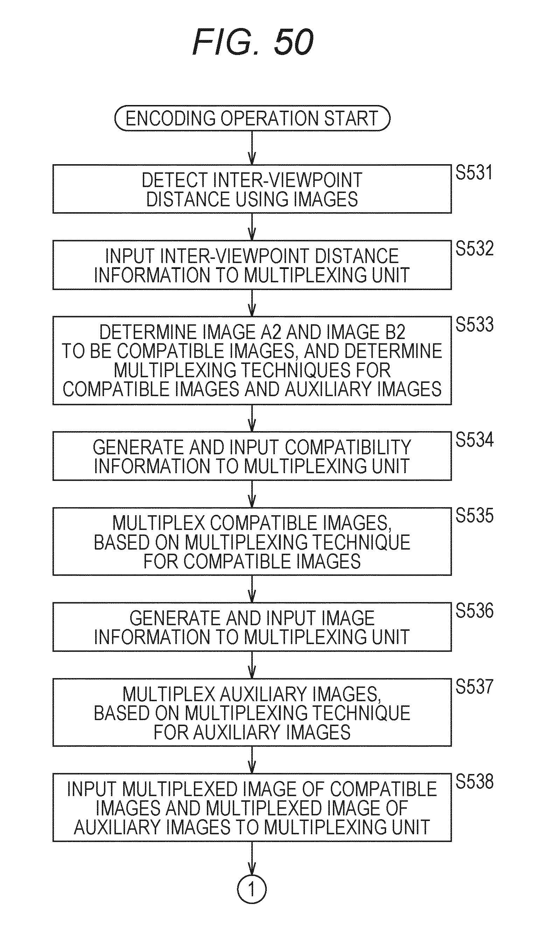

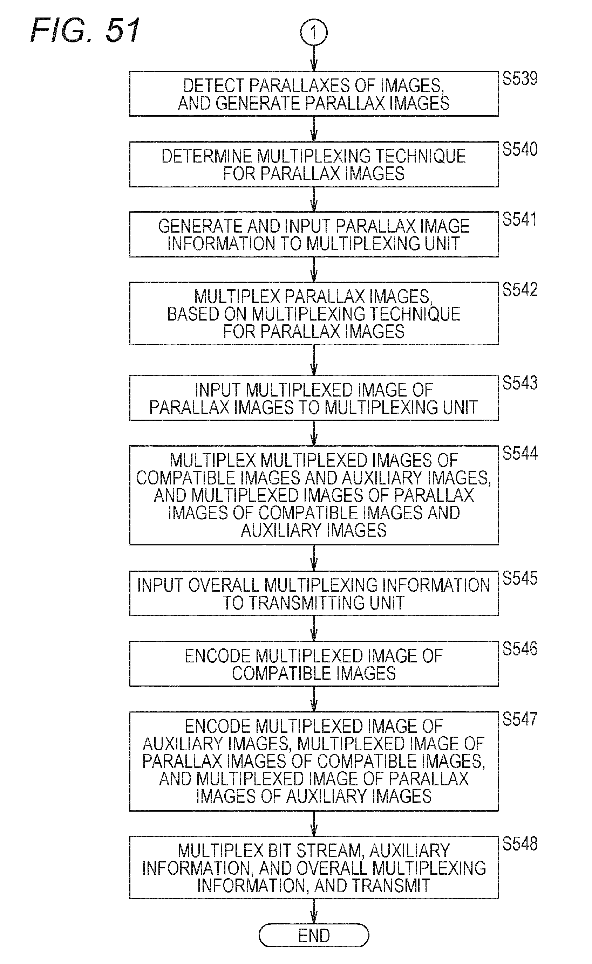

Figs. 50 and 51 are flowcharts for explaining an encoding operation by the encoding device 520 shown in Fig. 49. This encoding operation is started when images A2 through D2 are output from imaging units 141A through 141D, for example.

The procedures in steps S531 through S537 in Fig. 50 are the same as the procedures in steps S451 through S457 in Fig. 36, and therefore, explanation of them is not repeated herein.

After the procedure in step S537, the image converting unit 142 in step S538 inputs the multiplexed image of the compatible images and the multiplexed image of the auxiliary images to the multiplexing unit 521, and the operation moves on to step S539 in Fig. 51.

In step S539 in Fig. 51, using the images A2 through D2 supplied from the imaging units 141A through 141D, the parallax image generating unit 143 detects the parallax of each pixel of the images A2 through D2, and generates parallax images A2' through D2'.

In step S540, the parallax image generating unit 143 determines the multiplexing techniques for the parallax images of the compatible images and the parallax images of the auxiliary images, and supplies information indicating the multiplexing technique to the parallax image information generating unit 57.

In step S541, based on the information supplied from the parallax image generating unit 143, the parallax image information generating unit 57 generates information indicating the multiplexing techniques for the parallax images of the compatible images and the parallax images of the auxiliary images and the like as the parallax image information, and inputs the parallax image information to the transmitting unit 524.

In step S542, based on the multiplexing technique for the parallax images of the compatible images determined in step S540, the parallax image generating unit 143 multiplexes the parallax image A2' and the parallax image B2' of the compatible images. Also, based on the multiplexing technique for the parallax images of the auxiliary images, the parallax image generating unit 143 multiplexes the parallax image C2' and the parallax image D2' of the auxiliary images.

After the procedure in step S543, the multiplexing unit 521 in step S544 multiplexes, by the frame sequential technique, the multiplexed images of the compatible images and the auxiliary images obtained as a result of the multiplexing performed by the image converting unit 142, and the multiplexed images of the parallax images of the compatible images and the auxiliary images obtained as a result of the multiplexing performed by the parallax image generating unit 143. The multiplexing unit 521 supplies the multiplexed image obtained as a result of the multiplexing as the temporal-direction multiplexed image to the encoder 523.

The multiplexing unit 521 also supplies information to the multiplexing information generating unit 522 and the encoder 523. The information indicates that the multiplexed images of the compatible images and the auxiliary images, and the multiplexed images of the parallax images are multiplexed by the frame sequential technique, and also indicates the sequential order of the images in the temporal multiplexed image.

In step S545, based on the information supplied from the multiplexing unit 521, the multiplexing information generating unit 522 generates the information and the like as the overall multiplexing information, and inputs the overall multiplexing information to the transmitting unit 524.

In step S546, the compatible encoder 531 encodes, by the conventional AVC technique, the multiplexed image of the compatible images in the temporal multiplexed image, which is input by the encoder 523 based on the information from the multiplexing unit 521.

In step S547, the auxiliary encoder 532 encodes, by the 3DV technique, the multiplexed image of the auxiliary images, the multiplexed image of the parallax images of the compatible images, and the multiplexed image of the parallax images of the auxiliary images in the temporal multiplexed image, which is input by the encoder 523 based on the information from the multiplexing unit 521. The encoder 523 supplies the bit stream formed with the encoded data of the temporal multiplexed image obtained as a result of the encoding in steps S546 and S547, to the transmitting unit 524.

In step S548, the transmitting unit 524 generates the TSs from the bit stream from the encoder 523, auxiliary information, and the overall multiplexing information from the multiplexing information generating unit 522, and transmits the TSs. The TSs may be recorded on a BD or the like, or may be transmitted as a stream for broadcasting, for example. The operation then comes to an end.

As described above, the encoding device 520 generates one bit stream from the encoded data of the multiplexed image of the compatible images, the multiplexed image of the auxiliary images, the multiplexed image of the parallax images of the compatible images, and the multiplexed image of the parallax images of the auxiliary images. Accordingly, in a decoding device that includes a decoder capable of decoding only one bit stream, the bit stream generated by the encoding device 520 can be decoded.

In the above described example, the parallax images of the compatible images, the auxiliary images, and the parallax images of the auxiliary images are encoded by the 3DV technique compliant with the encoding technique for the compatible images. However, those images may be encoded by MPEG2 (Moving Picture Experts Group phase 2) or the like, which is not compliant with the encoding technique for the compatible images.

### [Example Structure of a Decoding Device]

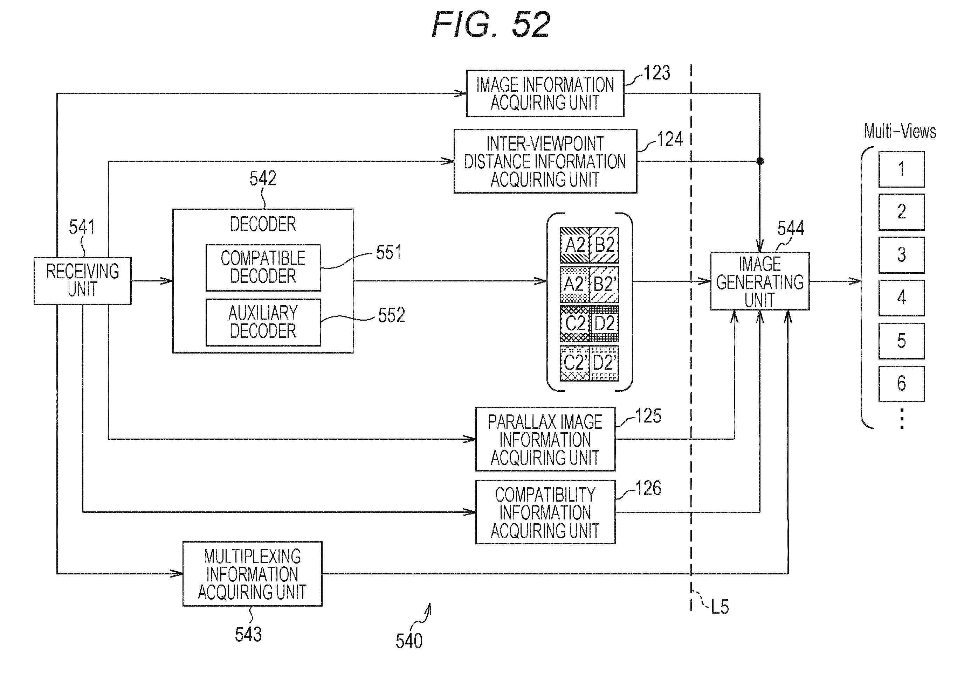

Fig. 52 is a diagram showing an example structure of a decoding device that decodes the TSs transmitted from the encoding device 520 shown in Fig. 49.

In the structure illustrated in Fig. 52, the same components as those in Fig. 4 are denoted by the same reference numerals as those in Fig. 4. The explanations that have already been made will not be repeated.

The structure of the decoding device 540 shown in Fig. 52 differs from the structure shown in Fig. 4 mainly in that the separating unit 121, the decoder 122, and the image generating unit 171 are replaced with a receiving unit 541, a decoder 542, and an image generating unit 544, and a multiplexing information acquiring unit 543 is added. The decoding device 540 decodes the bit stream of the temporal multiplexed image contained in the TSs transmitted from the encoding device 520, generates a two-view image or a multi-view image, and causes a display device (not shown) to display the generated image.

Specifically, the receiving unit 541 of the decoding device 540 receives the TSs transmitted from the encoding device 520. The receiving unit 541 extracts the bit stream of the temporal multiplexed image contained in the TSs, and supplies the bit stream to the decoder 542. The receiving unit 541 also extracts the auxiliary information contained in the TSs, supplies the image information in the auxiliary information to an image information acquiring unit 123, and supplies the inter-viewpoint distance information to an inter-viewpoint distance information acquiring unit 124. Further, the receiving unit 541 supplies the parallax image information in the auxiliary information to a parallax image information acquiring unit 125, and supplies the compatibility information to a compatibility information acquiring unit 126. The receiving unit 541 also extracts the overall multiplexing information contained in the TSs, and supplies the overall multiplexing information to the multiplexing information acquiring unit 543.

The decoder 542 is formed with a compatible decoder 551 and an auxiliary decoder 552. By a technique corresponding to the AVC technique, the compatible decoder 551 of the decoder 542 decodes the encoded data of the multiplexed image of the compatible images contained in the bit stream supplied from the receiving unit 541, and supplies the decoded image to the image generating unit 544.

By a technique corresponding to the encoding technique in the auxiliary encoder 532 shown in Fig. 49, the auxiliary decoder 552 decodes the encoded data of the multiplexed image of the auxiliary images, the multiplexed image of the parallax images of the compatible images, and the multiplexed image of the parallax images of the auxiliary images, which are contained in the bit stream supplied from the receiving unit 541. The auxiliary decoder 552 supplies the multiplexed image of the auxiliary images, the multiplexed image of the parallax images of the compatible images, and the multiplexed image of the parallax images of the auxiliary images, which are obtained as a result of the decoding, to the image generating unit 544.

The multiplexing information acquiring unit 543 acquires the overall multiplexing information supplied from the receiving unit 541, and supplies the overall multiplexing information to the image generating unit 544.

In accordance with a display instruction from a viewer, the image generating unit 544 outputs images, and causes the display device (not shown) to display the images. Specifically, in accordance with a multi-view 3D image display instruction from a viewer, the image generating unit 544 generates images that are of three or more viewpoints corresponding to the display device (not shown) and have half the resolution of the compatible images and the auxiliary images, using the multiplexed image of the compatible images, the multiplexed image of the auxiliary images, the multiplexed image of the parallax images of the compatible images, and the multiplexed image of the parallax images of the auxiliary images, based on the image information from the image information acquiring unit 123, the inter-viewpoint distance information from the inter-viewpoint distance information acquiring unit 124, the parallax image information from the parallax image information acquiring unit 125, the compatibility information from the compatibility information acquiring unit 126, the overall multiplexing information from the multiplexing information acquiring unit 543, and the like.

More specifically, based on the overall multiplexing information from the multiplexing information acquiring unit 543, the image generating unit 544 identifies the multiplexed image of the auxiliary images, the multiplexed image of the parallax images of the compatible images, and the multiplexed image of the parallax images of the auxiliary images, which are supplied from the auxiliary decoder 552. Based on the information that is contained in the parallax image information from the parallax image information acquiring unit 125 and indicates the multiplexing technique for the parallax images of the auxiliary images, the image generating unit 544 separates the parallax image of each of the auxiliary images from the multiplexed image of the parallax images of the auxiliary images, like the image generating unit 171 shown in Fig. 4. Based on the information that is contained in the parallax image information and indicates the multiplexing technique for the parallax images of the compatible images, the image generating unit 544 also separates the parallax image of each of the compatible images from the multiplexed image of the parallax images of the compatible images, like the image generating unit 171.

Further, based on the information that is contained in the image information from the image information acquiring unit 123 and indicates the multiplexing technique for the auxiliary images, the image generating unit 544 separates each of the auxiliary images from the multiplexed image of the auxiliary images, like the image generating unit 171. Based on the information that is contained in the image information and indicates the multiplexing technique for the compatible images, the image generating unit 544 also separates each of the compatible images from the multiplexed image of the compatible images, like the image generating unit 171.

Based on the inter-viewpoint distance information and the number of viewpoints corresponding to the display device (not shown), the image generating unit 544 also determines the location of each of the viewpoints of the multi-view image to be generated, like the image generating unit 171. Using the respective compatible images, the respective auxiliary images, the parallax images of the respective compatible images, and the parallax images of the respective auxiliary images, the image generating unit 544 generates images of the respective viewpoints having the locations determined, like the image generating unit 171. The image generating unit 544 then converts the resolution of the generated images of the viewpoints to the resolution calculated by dividing the resolution of the compatible images and the auxiliary images by the number of viewpoints, and combines the generated images. The resultant image is displayed on the display device (not shown).

At this point, the multi-view image after the combining is displayed in such a manner that the viewable angle varies at each viewpoint, and the viewer can view a 3D image without glasses by seeing the images of any two viewpoints with both eyes.

In accordance with a two-view 3D image display instruction from a viewer, the image generating unit 544 separates the multiplexed image of the compatible images supplied from the decoder 542 into the image A2 and the image B2 with half the resolution of the compatible images, based on the image information from the image information acquiring unit 123, like the image generating unit 171. Like the image generating unit 171, the image generating unit 544 alternately outputs the image A2 and the image B2 with half the resolution of the separated compatible images, and causes the display device (not shown) to display those images. At this point, the viewer puts on glasses that open one of the shutter for the left eye and the shutter for the right eye when the image A2 is displayed, and open the other one of the shutters when the image B2 is displayed. Wearing the glasses, the viewer sees the image A2 and the image B2 that are alternately displayed on the display device. In this manner, the viewer can view a 3D image.

### [Description of an Operation of the Decoding Device]

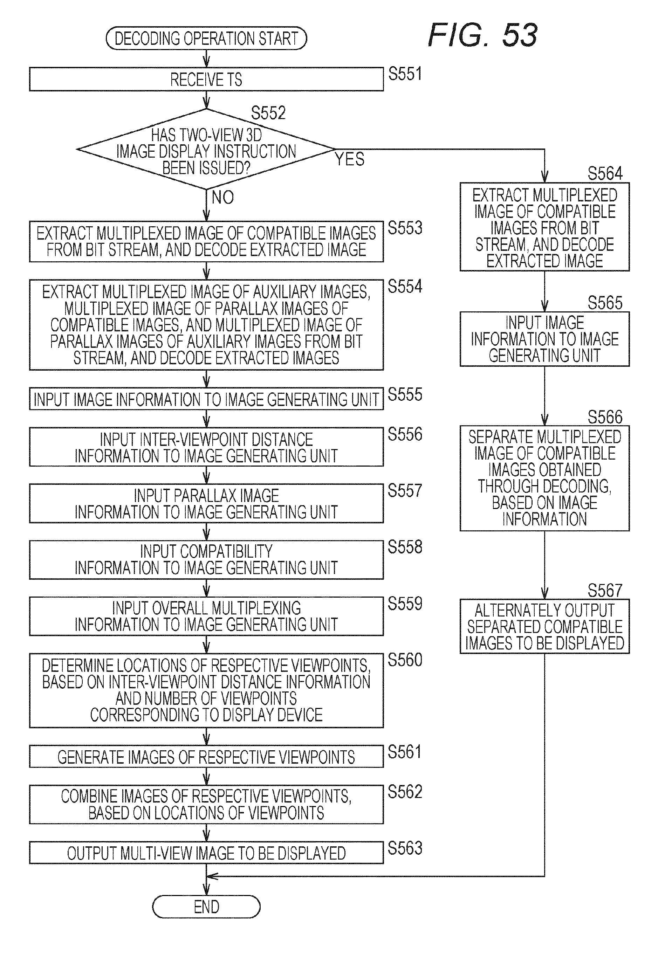

Fig. 53 is a flowchart for explaining a decoding operation by the decoding device 540 shown in Fig. 52. This decoding operation is started when the TSs transmitted from the encoding device 520 shown in Fig. 49 are input to the decoding device 540, for example.

In step S551 in Fig. 53, the receiving unit 541 of the decoding device 540 receives the TSs transmitted from the encoding device 520. The receiving unit 541 extracts the bit stream contained in the TSs, and supplies the bit stream to the decoder 542. The receiving unit 541 also extracts the auxiliary information contained in the TSs, supplies the image information in the auxiliary information to the image information acquiring unit 123, and supplies the inter-viewpoint distance information to the inter-viewpoint distance information acquiring unit 124. Further, the receiving unit 541 supplies the parallax image information in the auxiliary information to the parallax image information acquiring unit 125, and supplies the compatibility information to the compatibility information acquiring unit 126. The receiving unit 541 also extracts the overall multiplexing information contained in the TSs, and supplies the overall multiplexing information to the multiplexing information acquiring unit 543.

In step S552, the image generating unit 544 determines whether a two-view 3D image display instruction has been issued from a viewer. If it is determined in step S552 that a two-view 3D image display instruction has not been issued from a viewer, or that a multi-view 3D image display instruction has been issued, the operation moves on to step S553.

In step S553, the compatible decoder 551 of the decoder 542 extracts the encoded data of the multiplexed image of the compatible images from the bit stream supplied from the receiving unit 541, and decodes the extracted data by a technique corresponding to the AVC technique. The compatible decoder 551 then supplies the multiplexed image of the compatible images obtained as a result of the decoding to the image generating unit 544.

In step S554, the auxiliary decoder 552 extracts the encoded data of the multiplexed image of the auxiliary images, the multiplexed image of the parallax images of the compatible images, and the multiplexed image of the parallax images of the auxiliary images from the bit stream supplied from the receiving unit 541, and decodes the extracted data by a technique corresponding to the auxiliary encoder 532 shown in Fig. 49. The auxiliary decoder 552 supplies the multiplexed image of the auxiliary images, the multiplexed image of the parallax images of the compatible images, and the multiplexed image of the parallax images of the auxiliary images, which are obtained as a result of the decoding, to the image generating unit 544. The operation then moves on to step S555.

The procedures in steps S555 through S558 are the same as the procedures in steps S475 through S478 in Fig. 39, and therefore, explanation of them is not repeated herein.

After the procedure in step S558, the multiplexing information acquiring unit 543 in step S559 acquires the overall multiplexing information supplied from the receiving unit 541, and inputs the overall multiplexing information to the image generating unit 544.

In step S560, based on the inter-viewpoint distance information from the inter-viewpoint distance information acquiring unit 124 and the number of viewpoints corresponding to the display device (not shown), the image generating unit 544 determines the location of each of the viewpoints of the multi-view image to be generated.

In step S561, based on the locations of the respective viewpoints determined in step S560, the image information from the image information acquiring unit 123, the parallax image information from the parallax image information acquiring unit 125, the compatibility information from the compatibility information acquiring unit 126, the overall multiplexing information from the multiplexing information acquiring unit 543, and the like, the image generating unit 544 generates images of the respective viewpoints that have half the resolution of the compatible images and the auxiliary images, using the multiplexed image of the compatible images, the multiplexed image of the auxiliary images, the multiplexed image of the parallax images of the compatible images, and the multiplexed image of the parallax images of the auxiliary images. The operation then moves on to step S562.

The procedures in steps S562 through S567 are the same as the procedures in steps S481 through S486 in Fig. 39, and therefore, explanation of them is not repeated herein. In the procedure in step S564, however, the compatible decoder 551 extracts the multiplexed image of the compatible images from the bit stream supplied from the receiving unit 541, instead of the compatible stream.

In a decoding device that can decode only compatible images having compatibility with the decoding device 540, encoded data other than the encoded data of the processable compatible images is ignored, and the procedures in steps S564, S566, and S567 are carried out. In this case, however, in the procedure in step S566, the multiplexed image of the compatible images is separated, based on the multiplexing technique determined in advance.

As described above, the decoding device 540 can decode one bit stream generated from the encoded data of the multiplexed image of the compatible images, the multiplexed image of the auxiliary images, the multiplexed image of the parallax images of the compatible images, and the multiplexed image of the parallax images of the auxiliary images.

### [Baseband Data Transmission]

In the above described decoding device 540 shown in Fig. 52, if the left side (the receiving unit 541 and the decoder 542) of the dashed line L5 is designed as a reproducing device, and the right side (the image generating unit 544) of the dashed line L5 is designed as a display device, the reproducing device and the display device have the same structures as those of the above described reproducing device 301 and the reproducing device 302, respectively.

### <6. Bit Streams in This Embodiment>

### [Example Structure of a Bit Stream]

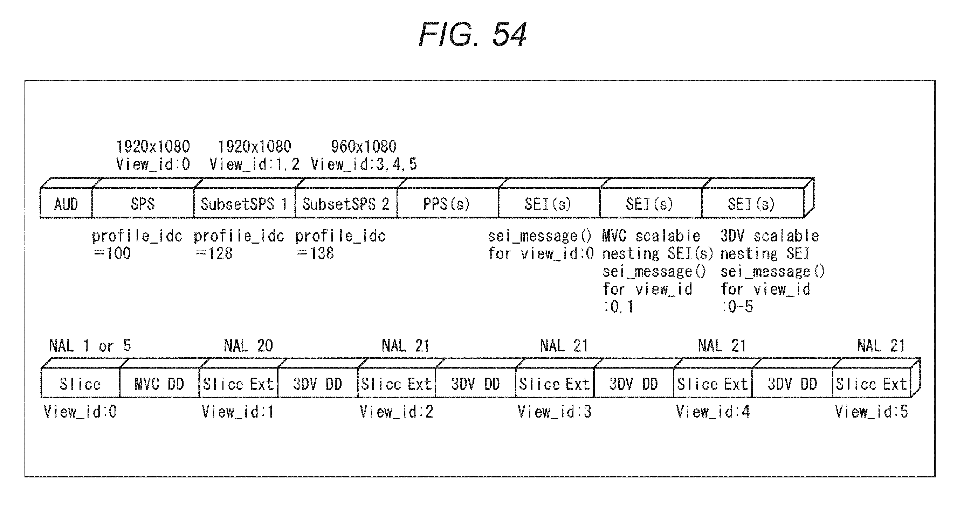

Fig. 54 is a diagram showing an example structure of an access-unit bit stream (an encoded stream) generated in this embodiment.

In the example shown in Fig. 54, compatible images are an L image and an R image of 1920 x 1080 pixels, and an auxiliary image is an O image of 1920 x 1080 pixels. An L parallax image, an R parallax image, and an O parallax image are 960 x 1080 in size. Further, the L image is encoded by the AVC technique, the R image is encoded by the MVC technique, and the O image, the L parallax image, the R parallax image, and the O parallax image are encoded by the 3DV technique. The view IDs of the L image, the R image, the O image, the L parallax image, the R parallax image, and the O parallax image are 0, 1, 2, 3, 4, and 5, respectively. It should be noted that each view ID is an ID unique to an image or a parallax image of a viewpoint.

As shown in Fig. 54, the access-unit bit stream includes an access unit delimiter (AUD), a SPS (Sequence Parameter Set), a Subset SPS of the MVC technique for images (Subset SPS1), a Subset SPS of the 3DV technique for parallax images (Subset SPS2), a PPS (Picture Parameter Set), SEI of the AVC technique, SEI of the MVC technique, SEI of the 3DV technique, and a NAL(Network Abstraction Layer) unit of encoded data, in this order.

The NAL unit of the access unit delimiter is a NAL unit representing the boundary of the access unit. The NAL unit of the SPS is a NAL unit of a SPS containing "profile_idc" (100 in the example shown in Fig. 54) representing the profile of the L image among the profiles defined by the AVC technique. The NAL unit of the Subset SPS for images is a NAL unit of a Subset SPS containing "profile_idc" (128 in the example shown in Fig. 54) representing the profiles of the R image and the O image among the profiles defined by the MVC technique. The NAL unit of the Subset SPS for parallax images is a NAL unit of a Subset SPS containing "profile_idc" (138 in the example shown in Fig. 54) representing the profiles of the L parallax image, the R parallax image, and the O parallax image among the profiles defined as the profiles for parallax images by the 3DV technique.

The NAL unit of the SEI of the AVC technique is the NAL unit of the SEI of the L image. The NAL unit of the SEI of the MVC technique is the NAL unit of the SEI of the L image and the R image. The NAL unit of the SEI of the 3DV technique is the NAL unit of the SEI of the L image, the R image, the O image, the L parallax image, the R parallax image, and the O parallax image.

The NAL unit of encoded data includes encoded data of the L image, a delimiter (MVC DD), encoded data of the R image, a delimiter (3DV DD), encoded data of the O image, a delimiter (3DV DD), encoded data of the L parallax image, a delimiter (3DV DD), encoded data of the R parallax image, a delimiter (3DV DD), encoded data of the O parallax image, in this order.

A NAL header containing 1 or 5 as a type of NAL unit, which represents an AVC picture, is attached to the NAL unit of the encoded data of the L image. The NAL unit of the delimiter (MVC DD) is a NAL unit representing the top of MVC encoded data. A NAL header containing 20 as a type of NAL unit, which represents MVC encoded data, is attached to the NAL unit of the encoded data of the R image. The NAL unit of the delimiter (3DV DD) is a NAL unit representing the top of 3DV encoded data. A NAL header containing 21 as a type of NAL unit, which represents 3DV encoded data, is attached to the NAL unit of the encoded data of the O image, the L parallax image, the R parallax image, and the O parallax image.

### [Example Description of the Subset SPS of the 3DV Technique for Parallax Images]

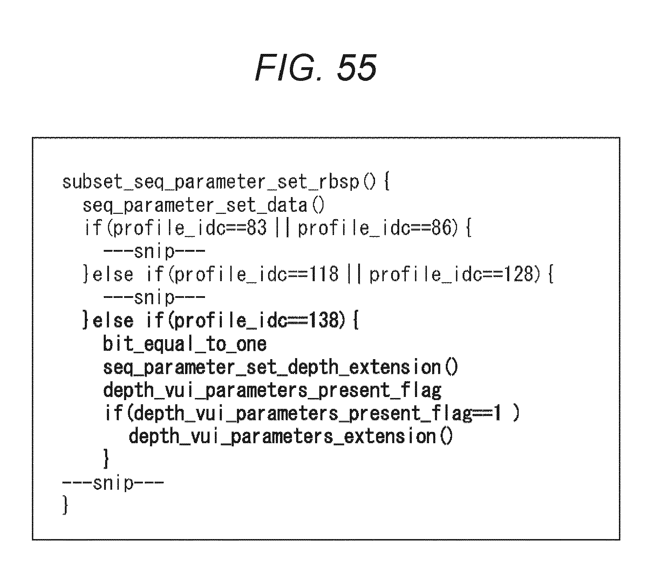

Fig. 55 is a diagram showing an example description of the Subset SPS of the 3DV technique for parallax images shown in Fig. 54.

As shown in Fig. 55, the Subset SPS of the 3DV technique for parallax images includes a SPS (seq_parameter_set_data) containing "profile_idc" (138 in the example shown in Fig. 55) representing the profiles of the L parallax image, the R parallax image, and the O parallax image, and information about each "profile_idc" defined by the 3DV technique.

Specifically, the Subset SPS of the 3DV technique for parallax images includes, as the information shown when "profile_idc" is 138, extension information for parallax images (seq_parameter_set_depth_extension), a VUI information flag for parallax images indicating whether VUI extension information for parallax images is contained (depth_vui_parameters_present_flag), and the like. In a case where the VUI information flag for parallax images indicates that the VUI extension information for parallax images is contained, the VUI extension information for parallax images (depth_vui_parameters_extension) is also written.

In a case where the Subset SPS of the 3DV technique for parallax images is referred to at the time of decoding, or where the L parallax image, the R parallax image, and the O parallax image are decoded, the reference image is reset at the same time as decoding of an IDR picture.

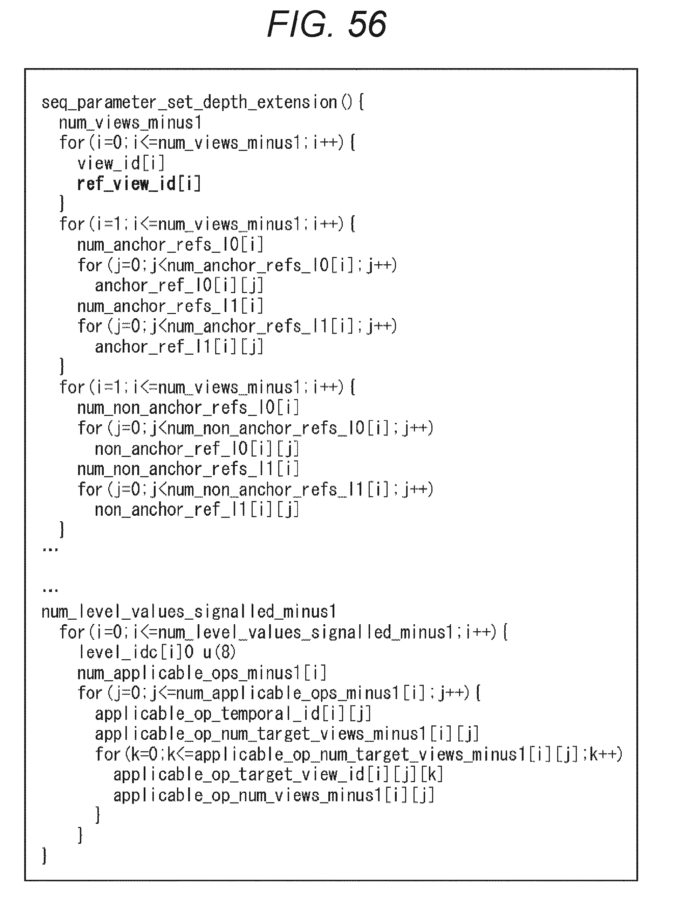

Fig. 56 is a diagram showing an example description of the extension information for parallax images shown in Fig. 55.

As shown in Fig. 56, the extension information for parallax images contains information written like extension information in the Subset SPS of the MVC technique (seq_parameter_set_mvc_extension), and the view IDs of the images corresponding to the respective parallax images (ref_view_id).

In Fig. 56, the information written like the extension information in the Subset SPS of the MVC technique is expanded and included in the extension information for parallax images. Accordingly, the view IDs (view_id) of the respective parallax images and the view IDs of the images corresponding to the respective parallax images can be collectively written for each of the parallax images. That is, information indicating the number of parallax images (num_views_minus1) is written, and a description can be provided so that the view IDs of the same number of parallax images as the number indicated in the information, and the view IDs of the images corresponding to the parallax images are read out.

In a case where the information written like the extension information in the Subset SPS of the MVC technique is not expanded but is contained in the extension information for parallax images, on the other hand, the information indicating the number of parallax images is written together with the extension information for parallax images, and a description need to be provided so that the view IDs of the images corresponding to the same number of parallax images as the number indicated in the information can be read out. As a result, the description of the information indicating the number of parallax images overlaps the description for reading out the information about the same number of parallax images as the number indicated in the information.

Accordingly, in a case where the information written like the extension information in the Subset SPS of the MVC technique is expanded and is contained in the extension information for parallax images, as shown in Fig. 56, the data amount of the extension information for parallax images can be made smaller than in a case where the information is not expanded but is contained in the extension information for parallax images.

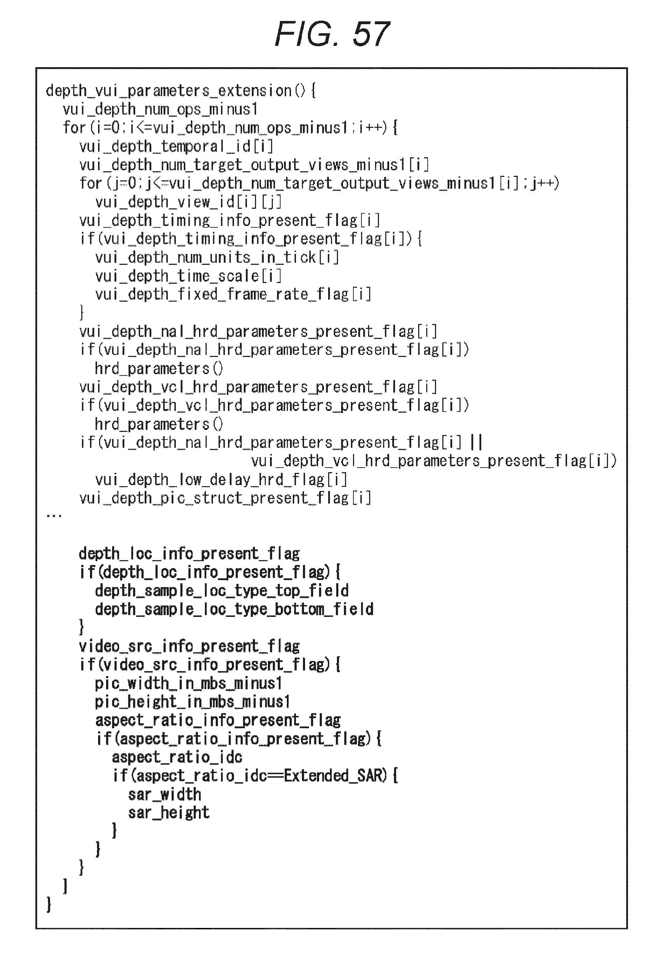

Fig. 57 is a diagram showing an example description of the VUI extension information for parallax images shown in Fig. 55.

As shown in Fig. 57, the VUI extension information for parallax images is written like the VUI extension information of the MVC technique (mvc_vui_parameters_extension), except for the following points. The VUI information for parallax images includes, for each pixel of each parallax image, a location type flag indicating whether the location type indicating the type of location in the image corresponding to the parallax image is contained (depth_loc info_present_flag), and a pre-conversion size information flag indicating whether pre-conversion size information indicating the size of the parallax image prior to a resolution conversion is contained (video_src_info_present_flag). In a case where the location type flag indicates the location type is contained, the VUI information for parallax images also includes the location type. In a case where the pre-conversion size information flag indicates that the pre-conversion size information is contained, the VUI information for parallax images also includes the pre-conversion size information.

The location type is formed with a top field location type (depth_sample_loc_type_top_field) and a bottom field location type (depth_sample_loc_type_bottom_field). The top field and bottom field location types are written like the top field location type (chroma_sample_loc_type_top_field) and the bottom field location type (chroma_sample_loc_type_bottom_field) contained in the VUI extension information of the MVC technique.

The pre-conversion size information is formed with information indicating the number of macroblocks in the transverse direction of the parallax image prior to the resolution conversion (pic_width_in_mbs_minus1) and the information indicating the number of macroblocks in the vertical direction (pic_height_in_mbs_minus1), an aspect ratio flag indicating whether aspect information indicating the aspect ratio is contained (aspect_ratio_info_present_flag), and the like. In a case where the aspect ratio flag indicates that the aspect information is contained, the pre-conversion size information also contains the aspect information.

The aspect information is formed with an aspect ratio ID that is an ID unique to an aspect ratio (aspect_ratio_idc) and the like. The aspect ratio ID is assigned to a predetermined aspect ratio, and is also assigned to all undefined aspect ratios. In a case where the aspect ratio ID contained in the aspect information is an aspect ratio ID assigned to all undefined aspect ratios (Extended_SAR), the aspect information also contains the value in the transverse direction of the parallax image (sar_width) and the value in the vertical direction of the parallax image (sar_height) at the aspect ratio prior to the resolution conversion.

### [Example Description of the NAL Header of 3DV Encoded Data]

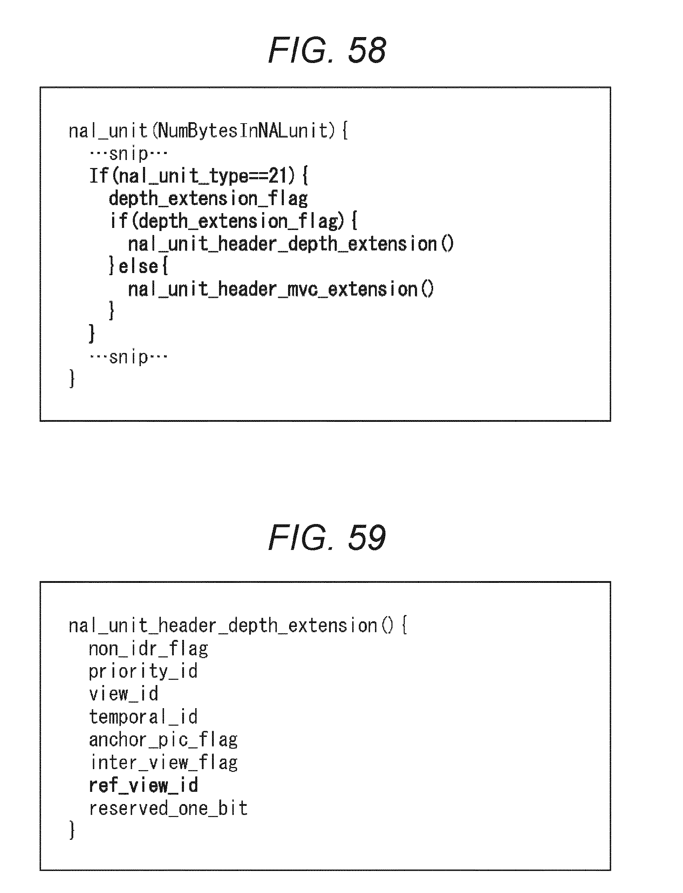

Fig. 58 is a diagram showing an example description of the NAL header of the NAL unit of 3DV encoded data containing 21 as the NAL unit type.

As shown in Fig. 58, the NAL header of 3DV encoded data contains a header extension information flag for parallax images indicating whether the header extension information for parallax images is contained (depth_extension_flag), as the information shown when the NAL unit type is 21. Here, the header extension information for parallax images is written in the NAL header of the 3DV encoded data of a parallax image.

In a case where the header extension information flag for parallax images indicates that the header extension information for parallax images is contained, the NAL header of the 3DV encoded data also contains the header extension information for parallax images (nal_unit_header_depth_extension). In a case where the header extension information flag for parallax images indicates that the header extension information for parallax images is not contained, the NAL header of the 3DV encoded data also contains the header extension information for the MVC technique (nal_unit_header_mvc_extension).

Fig. 59 is a diagram showing an example description of the header extension information for parallax images shown in Fig. 58.

As shown in Fig. 59, the header extension information for parallax images is the same as the header extension information for the MVC technique, except that the view IDs of the images corresponding to the parallax images (ref_view_id) are contained.

### [Example Description of the SEI of the 3DV Technique]

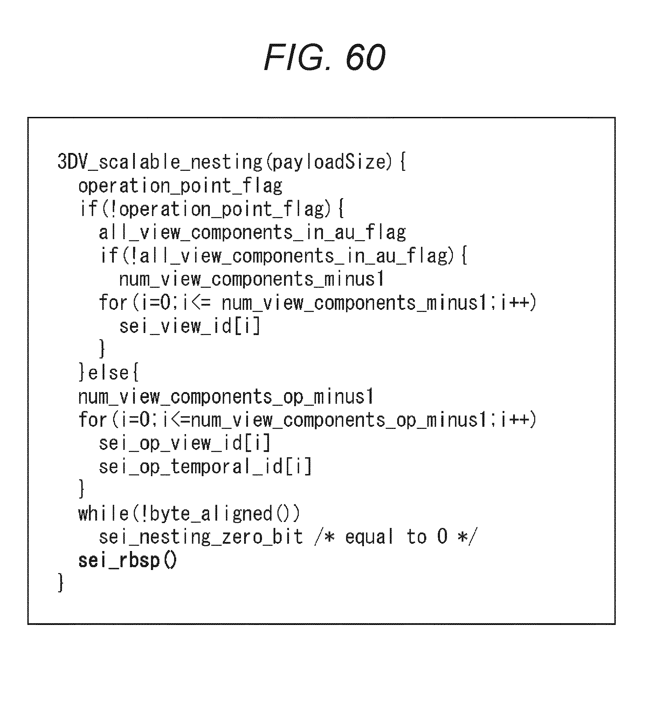

Fig. 60 is a diagram showing an example description of the SEI of the 3DV technique shown in Fig. 54.

As shown in Fig. 60, the SEI of the 3DV technique includes a SEI message, like the SEI of the MVC technique.

That is, the SEI of the 3DV technique contains an operation point flag indicating whether to designate an operation point (operation_point_flag), and an overall component flag indicating whether to apply the SEI message to all the images and parallax images in the access unit (all_view_components_in_au_flag) in a case where the operation point flag indicates that no operation points are to be designated. Also, in a case where the overall component flag indicates that the SEI message is to be applied to not all the images and parallax images in the access unit, the number of view IDs of the images and parallax images to which the SEI message is to be applied (num_view_components_minus1), and the view IDs (sei_view_id) of those images and parallax images are written.

In a case where the operation point flag indicates that operation points are to be designated, on the other hand, the view IDs of the images and parallax images to which the SEI message is to be applied among the operation points (sei_op_view_id), and the number of the operation points (sei_op_temporal_id) are written. The SEI message (sei_rbsp) is then written. In the SEI of the 3DV technique can contain two or more SEI messages.

In the example shown in Fig. 54, the profiles of the R image and the O image are the same. However, those profiles may differ from each other.

### [Another Example Structure of a Bit Stream]

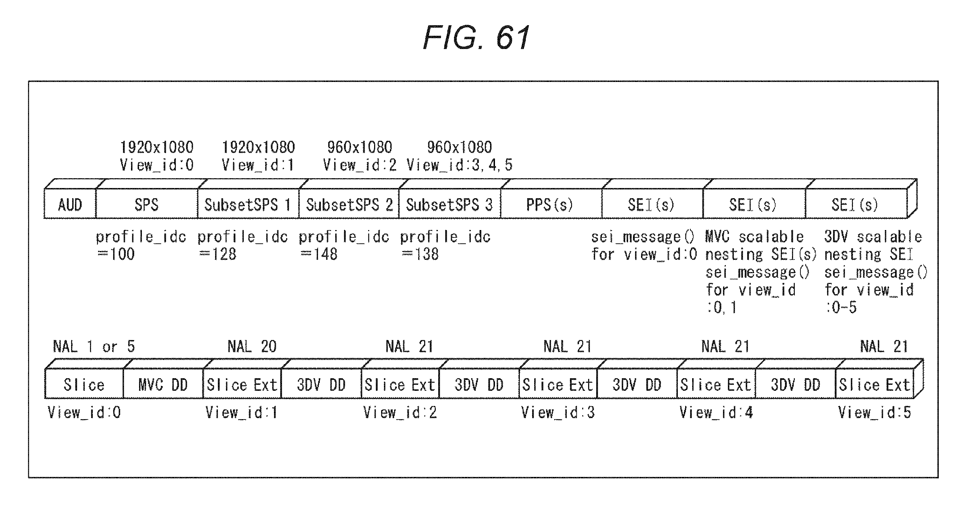

Fig. 61 is a diagram showing an example structure of an access-unit bit stream in a case where the profiles of the R image and the O image differ from each other in Fig. 54.

The structure of the bit stream shown in Fig. 61 differs from the structure of the bit stream shown in Fig. 54 in that a Subset SPS of the 3DV technique for images is provided as well as the Subset SPS of the MVC technique for images and the Subset SPS of the 3DV technique for parallax images.

The NAL unit of the Subset SPS of the MVC technique for images (Subset SPS1) is a NAL unit of a Subset SPS containing "profile_idc" (128 in the example shown in Fig. 61) representing the profile of the R image among the profiles defined by the MVC technique. The NAL unit of the Subset SPS of the 3DV technique for images (Subset SPS2) is a NAL unit of a Subset SPS containing "profile_idc" (148 in the example shown in Fig. 61) representing the profile of the O image among the profiles defined as profiles for images by the 3DV technique. The NAL unit of the Subset SPS for parallax images (Subset SPS3) is a NAL unit of a Subset SPS containing "profile_idc" (138 in the example shown in Fig. 61) representing the profiles of the L parallax image, the R parallax image, and the O parallax image among the profiles defined as the profiles for parallax images by the 3DV technique.

### [Example Description of the Subset SPS of the 3DV Technique for Images]

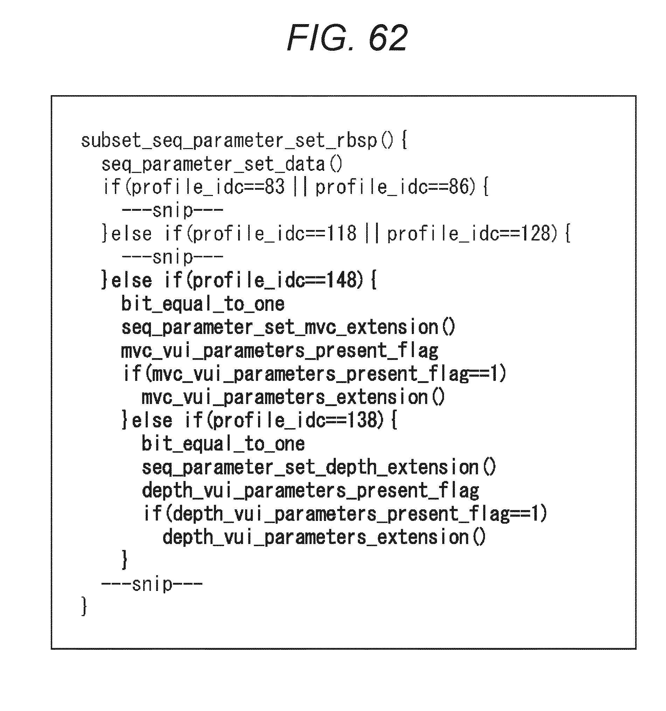

Fig. 62 is a diagram showing an example description of the Subset SPS of the 3DV technique for images shown in Fig. 61.

As shown in Fig. 62, the Subset SPS of the 3DV technique for images includes a SPS (seq_parameter_set_data) containing "profile_idc" (148 in the example shown in Fig. 62) representing the profile of the O parallax image, and information about each "profile_idc" defined by the 3DV technique.

Specifically, the Subset SPS of the 3DV technique for images includes, as the information shown when "profile_idc" is 148, extension information of the MVC technique (seq_parameter_set_mvc_extension) and a MVC-technique VUI information flag indicating whether VUI extension information of the MVC technique is contained (mvc_vui_parameters_present_flag), like the Subset SPS of the MVC technique. In a case where the MVC-technique VUI information flag indicates that the VUI extension information of the MVC technique is contained, the VUI extension information of the MVC technique (mvc_vui_parameters_extension) is also written. As the information shown when "profile_idc" is 138, the same information as that in Fig. 55 is written.

The 3DV technique may be a technique for encoding images for display by a multi-view technique compliant to the HEVC technique, instead of the AVC technique or the MVC technique. The bit stream in this case will be described below. In this specification, the HEVC technique is based on the description in HEVC Working Draft (Thomas Wiegand, Woo-jin Han, Benjamin Bross, Jens-Rainer Ohm, and Gary J. Sullivian, "WD3: Working Draft 3 of High-Efficiency Video Coding", JCTVc-E603_d5 (version 5), May 20, 2011) of JCTVC (Joint Collaborative Team on Video Coding).

### <7. Bit Stream in a Case Where the 3DV Technique is Compliant with the HEVC Technique>

### [Example Structure of a Bit Stream]

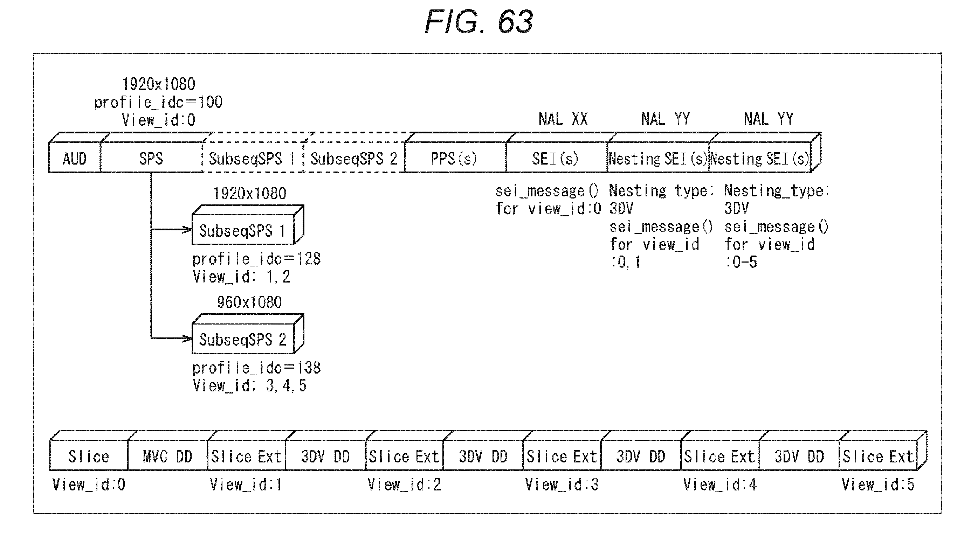

Fig. 63 is a diagram showing an example structure of an access-unit bit stream in a case where the 3DV technique is compliant with the HEVC technique.

In the example shown in Fig. 63, an L viewpoint image, an R viewpoint image, and an O viewpoint image, which are the same as those in the example shown in Fig. 54. The L image is encoded by the AVC technique, and the L parallax image, the R viewpoint image, and the O viewpoint image are encoded by the 3DV technique.

The bit stream shown in Fig. 63 differs from the bit stream shown in Fig. 54 in that the Subset SPS of the 3DV technique for images (Subset SPS1) and the Subset SPS of the 3DV technique for parallax images (Subset SPS2) can be written in the SPS, and NAL headers containing different NAL unit types from each other are attached to the NAL units of the SEI of the HEVC technique and the SEI of the 3DV technique.

In the bit stream shown in Fig. 63, the Subset SPS of the 3DV technique for images and the Subset SPS of the 3DV technique for parallax images can be written only in the SPS, or can be written separately from the SPS, or can be written in the SPS and separately from the SPS. Writing the Subset SPS of the 3DV technique for images and the Subset SPS of the 3DV technique for parallax images separately from the SPS is preferred in a case where HEVC encoded data and 3DV encoded data are generated as different ESs (Elementary Streams) in compliance with the BD standard.

Also, in the bit stream shown in Fig. 63, the NAL unit of the SEI of the HEVC technique and the NAL unit contained in the NAL header attached to the NAL unit of the SEI of the 3DV technique are of different types from each other. Accordingly, the NAL units of the SEI of the HEVC technique and the SEI of the 3DV technique can be easily extracted at the time of decoding.

### [Example Description of the SPS]

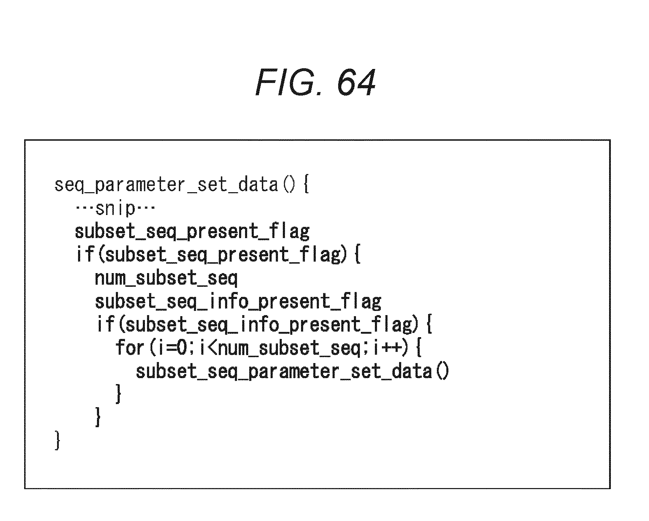

Fig. 64 is a diagram showing an example description of the SPS shown in Fig. 63.

The SPS description shown in Fig. 64 is the same as the SPS description of the HEVC technique, except that a Subset SPS information flag indicating whether Subset SPS information is contained (subset_seq_present_flag), and the Subset SPS information is written in a case where the Subset SPS information flag indicates that the Subset SPS information is contained.

As shown in Fig. 64, the Subset SPS information contains the number of Subset SPSs (num_subset_seq) and a Subset SPS flag indicating whether a Subset SPS is contained (subset_seq_info_present_flag). In a case where the Subset SPS flag indicates that a Subset SPS is contained, the Subset SPS information also contains the Subset SPS (subset_seq_parameter_set_data).

As described above, the number of Subset SPSs is written as the Subset SPS information. Accordingly, it is possible to recognize whether a Subset SPS exists simply by reading the SPS description at the time of decoding. Also, as the Subset SPS flag is written, the Subset SPSs are not written in the SPS and can be written separately from the SPS. Accordingly, overlapping of Subset SPS descriptions can be prevented.

### [Example Description of the Subset SPS]

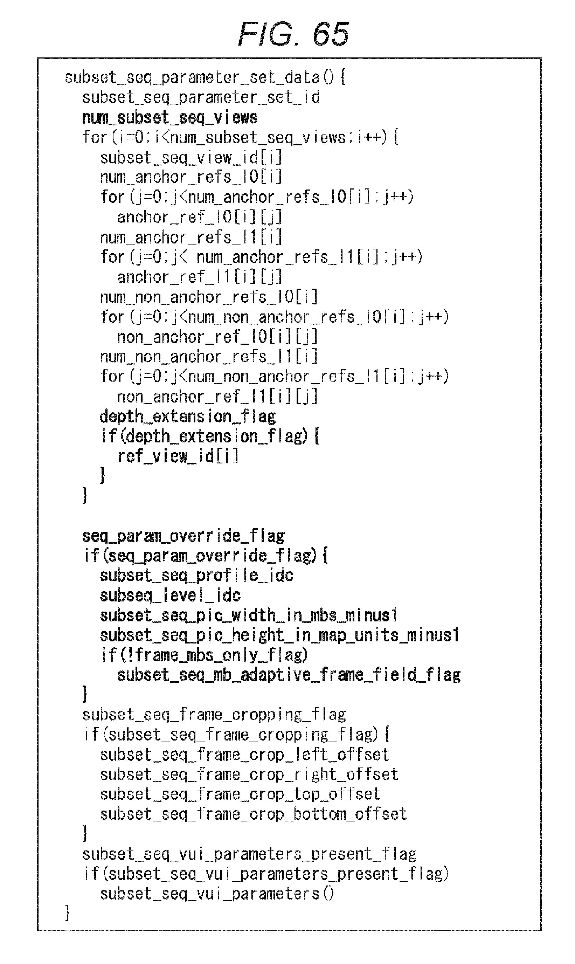

Fig. 65 is a diagram showing an example description of the Subset SPS shown in Fig. 64.

The Subset SPS description shown in Fig. 65 is the same as the SPS description of the HEVC technique, except that the Subset SPS description includes the number of view IDs of images and parallax images to which the Subset SPS is applied (num_subset_seq_views), a parallax image flag indicating whether the Subset SPS is applied to a parallax image (depth_extension_flag), and an override flag indicating whether the SPS is overridden at the time of application of the Subset SPS (seq_param_override_flag).

In a case where the parallax image flag indicates that the Subset SPS is applied to a parallax image, the Subset SPS includes the view ID of the image corresponding to the subject parallax image (ref_view_id). In a case where the override flag indicates that the SPS is overridden at the time of application of the Subset SPS, the Subset SPS includes information indicating profiles (subset_seq_profile_idc), like the SPS.

Also, in the Subset SPS description, the same items as those in the SPS description include information indicating whether the image and parallax image to which the Subset SPS is applied are cropped (subset_seq_frame_cropping_flag), and a VUI information flag (subset_seq_vui_parameters_present_flag) indicating whether VUI information is contained (subset_seq_vui_parameters), for example. In a case where the VUI information flag indicates that the VUI information is contained, the VUI information is also written, as in the SPS. In a case where the VUI information flag indicates that the VUI information is not contained, on the other hand, the VUI information is not written as in the SPS. In this case, the VUI information in the SPS is used as the VUI information.

### [Example Description of the VUI information in the Subset SPS]

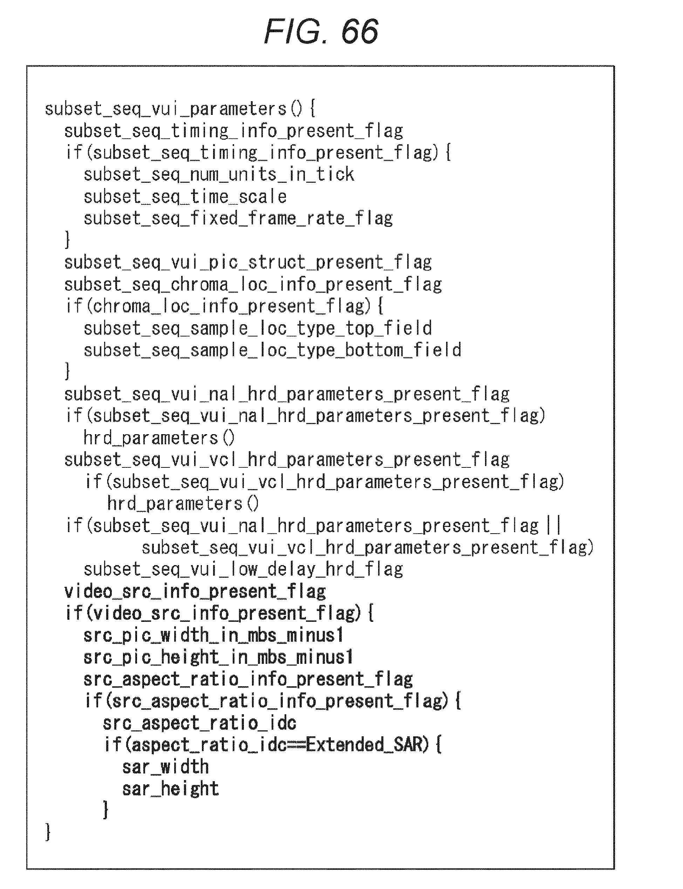

Fig. 66 is a diagram showing an example description of the VUI information in the Subset SPS shown in Fig. 65.

The VUI information description in the Subset SPS shown in Fig. 66 is the same as the VUI information description in the SPS of the HEVC technique, except that a pre-conversion size information flag indicating whether pre-conversion size information about a subject image (video_src_info_present_flag) is written.

In a case where the pre-conversion size information flag indicates that the pre-conversion size information of the subject image is contained, the pre-conversion size information is written in the VUI information shown in Fig. 66. That is, information indicating the number of macroblocks in the transverse direction of the subject image prior to the resolution conversion (src_pic_width_in_mbs_minus1) and the information indicating the number of macroblocks in the vertical direction (src_pic_height_in_mbs_minus1), an aspect ratio flag indicating whether aspect information indicating the aspect ratio is contained (src_aspect_ratio_info_present_flag), and the like are written.

In a case where the aspect ratio flag indicates that the aspect information is contained, the pre-conversion size information also contains the aspect information formed with an aspect ratio ID (src_aspect_ratio_idc) and the like. In a case where the aspect ratio ID contained in the aspect information is an aspect ratio ID assigned to all undefined aspect ratios (Extended_SAR), the aspect information also contains the value in the transverse direction of the parallax image (sar_width) and the value in the vertical direction of the subject image (sar_height) at the aspect ratio prior to the resolution conversion.

Alternatively, only the different part of the VUI information of the Subset SPS shown in Fig. 66 from the VUI information of the SPS may be written. In this case, the information contained in the VUI information of the SPS is used in place of the unwritten information in the VUI information of the Subset SPS.

### [Example Description of SEI]

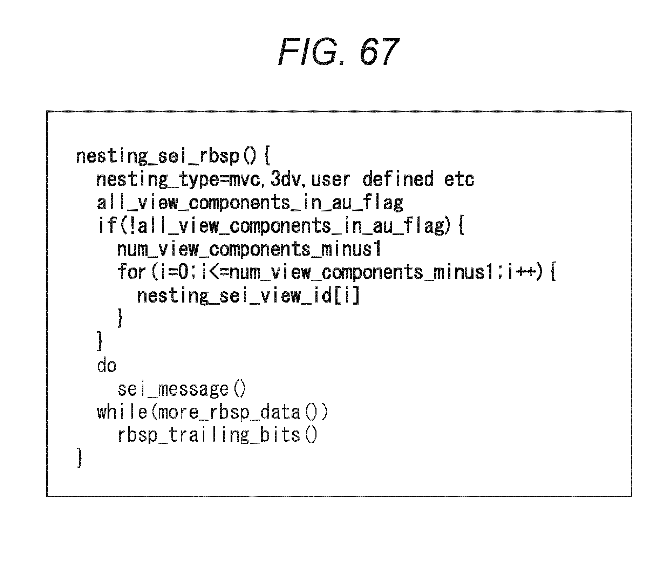

Fig. 67 is a diagram showing an example description of the SEI of the 3DV technique shown in Fig. 63.

The SEI description of the 3DV technique shown in Fig. 67 is the same as the SEI message description of a SEI message type, except that the type of SEI message (nesting_type), an overall component flag (all_view_components_in_au_flag), and the like are written.

The type of SEI message may be a MVC SEI message, a 3DV SEI message, a SEI message defined by a user, or the like. In a case where the overall component flag indicates that the SEI message is applied to not all the images and parallax images in the access unit, the number of view IDs of the images and parallax images to which the SEI message is applied (num_view_components_minus1), and the view IDs (nesting_sei_view_id) of those images and parallax images are also written in the SEI of the 3DV technique.

Based on decoded 3D image data, the above described reproducing device 301 may generate 3D information that contains image information, compatibility information, inter-viewpoint distance information, parallax image information, information for identifying the multiplexing pattern of an image, information for identifying the multiplexing pattern of a parallax image, and the like.

### <8. Sixth Embodiment>

### [Computer]

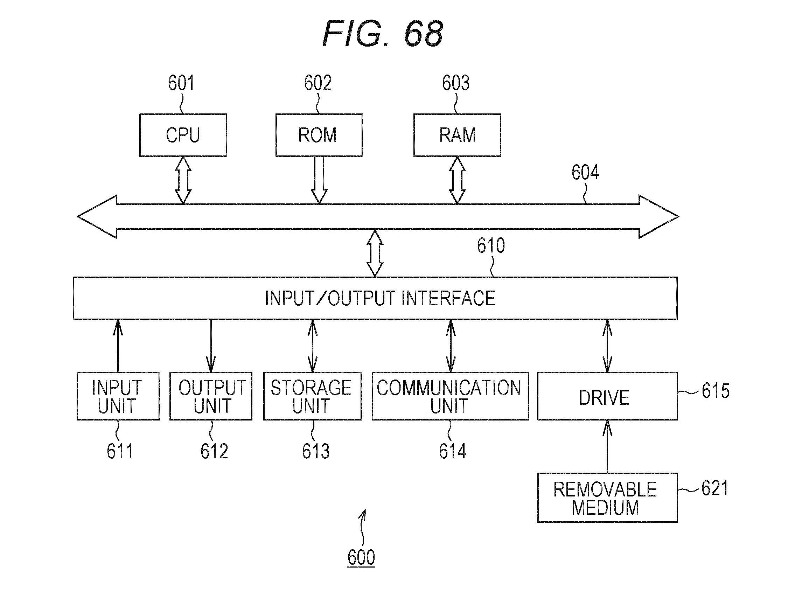

The above described series of operations can be performed by hardware or can be performed by software. In this case, the operations may be realized by a computer as shown in Fig. 68, for example.

In Fig. 68, the CPU (Central Processing Unit) 601 of a computer 600 performs various kinds of operations in accordance with a program stored in a ROM (Read Only Memory) 602, or a program loaded from a storage unit 613 into a RAM (Random Access Memory) 603. Necessary data for the CPU 601 to perform various kinds of operations and the like are also stored in the RAM 603, where necessary.

The CPU 601, the ROM 602, and the RAM 603 are connected to one another via a bus 604. An input/output interface 610 is also connected to the bus 604.

The input/output interface 610 has the following components connected thereto: an input unit 611 formed with a keyboard, a mouse, or the like; an output unit 612 formed with a display such as a CRT (Cathode Ray Tube) or a LCD (Liquid Crystal Display), and a speaker; the storage unit 613 formed with a hard disk or the like; and a communication unit 614 formed with a modem. The communication unit 614 performs communications via networks including the Internet.

A drive 615 is also connected to the input/output interface 610 where necessary, and a removable medium 621 such as a magnetic disk, an optical disk, a magnetooptical disk, or a semiconductor memory is mounted on the drive as appropriate. A computer program read from such a removable disk is installed in the storage unit 613 where necessary.

In a case where the above described series of operations is performed by software, the program forming the software is installed from a network or a recording medium.

As shown in Fig. 68, this recording medium is formed with the removable medium 621 that is distributed for delivering the program to users separately from the device, such as a magnetic disk (including a flexible disk), an optical disk (including a CD-ROM (Compact Disc - Read Only Memory) or a DVD (Digital Versatile Disc)), a magnetooptical disk (including an MD (Mini Disc)), or a semiconductor memory, which has the program recorded thereon. Alternatively, the recording medium may be formed with the ROM 602 having the program recorded therein or a hard disk included in the storage unit 613. Such a recording medium is incorporated beforehand into the device prior to the delivery to users.

The program to be executed by the computer may be a program for carrying out processes in chronological order in accordance with the sequence described in this specification, or a program for carrying out processes in parallel or whenever necessary such as in response to a call.

In this specification, the step written in the program to be recorded in a recording medium includes operations to be performed in parallel or independently of one another if not necessarily in chronological order, as well as operations to be performed in chronological order in accordance with the sequence described herein.

### <9. Seventh Embodiment>

### [Example Structure of a Television Apparatus]

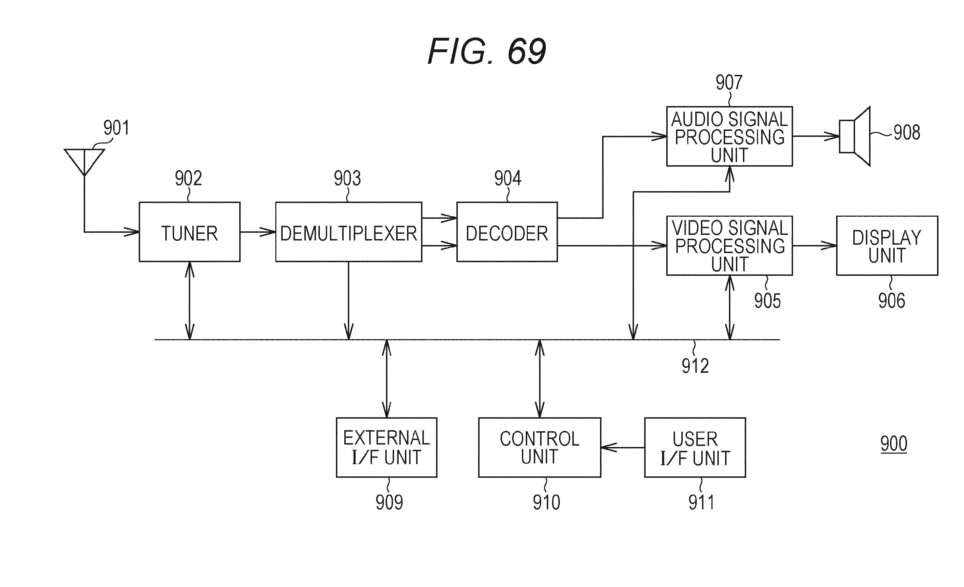

Fig. 69 schematically shows an example structure of a television apparatus to which the present technique is applied. The television apparatus 900 includes an antenna 901, a tuner 902, a demultiplexer 903, a decoder 904, a video signal processing unit 905, a display unit 906, an audio signal processing unit 907, a speaker 908, and an external interface unit 909. The television apparatus 900 further includes a control unit 910, a user interface unit 911, and the like.

The tuner 902 selects a desired channel from broadcast wave signals received at the antenna 901, and performs demodulation. The resultant encoded bit stream is output to the demultiplexer 903.

The demultiplexer 903 extracts the video and audio packets of the show to be viewed from the encoded bit stream, and outputs the data of the extracted packets to the decoder 904. The demultiplexer 903 also supplies a packet of data such as EPG (Electronic Program Guide) to the control unit 910. Where scrambling is performed, the demultiplexer or the like cancels the scrambling.

The decoder 904 performs a packet decoding operation, and outputs the video data generated through the decoding operation to the video signal processing unit 905, and the audio data to the audio signal processing unit 907.

The video signal processing unit 905 subjects the video data to a noise removal and video processing or the like in accordance with user settings. The video signal processing unit 905 generates video data of the show to be displayed on the display unit 906, or generates image data or the like through an operation based on an application supplied via a network. The video signal processing unit 905 also generates video data for displaying a menu screen or the like for item selection, and superimposes the generated video data on the video data of the show. Based on the video data generated in this manner, the video signal processing unit 905 generates a drive signal to drive the display unit 906.

Based on the drive signal from the video signal processing unit 905, the display unit 906 drives a display device (a liquid crystal display element, for example) to display the video of the show.

The audio signal processing unit 907 subjects the audio data to predetermined processing such as a noise removal, and performs a D/A conversion operation and an amplification operation on the processed audio data. The resultant audio data is supplied as an audio output to the speaker 908.

The external interface unit 909 is an interface for a connection with an external device or a network, and transmits and receives data such as video data and audio data in accordance with the HDMI standard or the like.

The user interface unit 911 is connected to the control unit 910. The user interface unit 911 is formed with operation switches, a remote control signal reception unit, and the like, and supplies an operating signal according to a user operation to the control unit 910.

The control unit 910 is formed with a CPU (Central Processing Unit), a memory, and the like. The memory stores the program to be executed by the CPU, various kinds of data necessary for the CPU to perform operations, the EPG data, data obtained via a network, and the like. The program stored in the memory is read and executed by the CPU at a predetermined time such as the time of activation of the television apparatus 900. The CPU executes the program to control the respective components so that the television apparatus 900 operates in accordance with a user operation.

In the television apparatus 900, a bus 912 is provided for connecting the tuner 902, the demultiplexer 903, the video signal processing unit 905, the audio signal processing unit 907, the external interface unit 909, and the like, to the control unit 910.

In the television apparatus having such a structure, the function of an image processing device (an image processing method) of the present invention is provided in the external I/F unit 909. Thus, image data in such a format as to generate multi-view images can be correctly transmitted.

### <10. Eighth Embodiment>

### [Example Structure of a Portable Telephone Device]

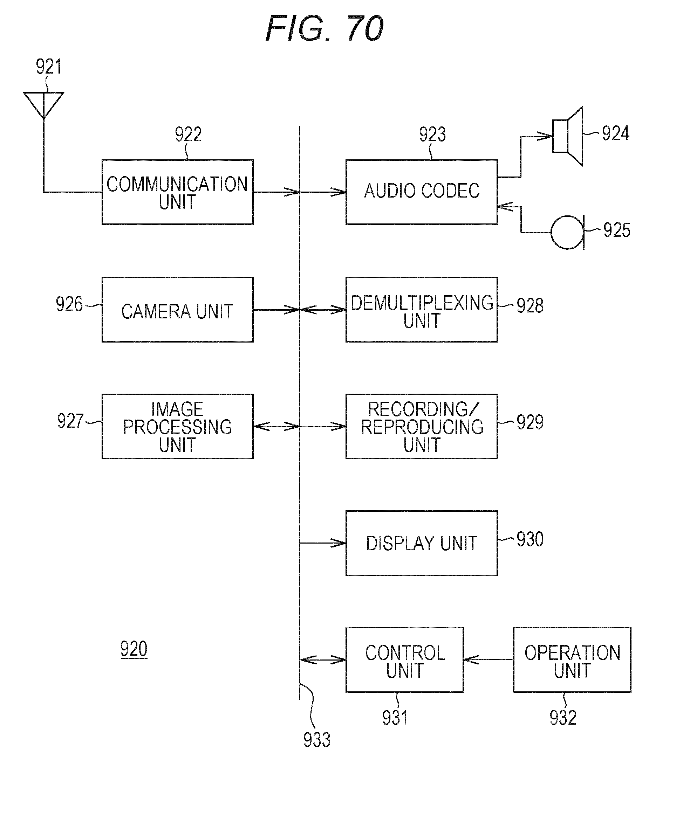

Fig. 70 schematically shows an example structure of a portable telephone device to which the present technique is applied. The portable telephone device 920 includes a communication unit 922, an audio codec 923, a camera unit 926, an image processing unit 927, a demultiplexing unit 928, a recording/reproducing unit 929, a display unit 930, and a control unit 931. Those components are connected to one another via a bus 933.

Also, an antenna 921 is connected to the communication unit 922, and a speaker 924 and a microphone 925 are connected to the audio codec 923. Further, an operation unit 932 is connected to the control unit 931.

The portable telephone device 920 performs various kinds of operations such as transmission and reception of audio signals, transmission and reception of electronic mail and image data, image capturing, and data recording, in various kinds of modes such as an audio communication mode and a data communication mode.

In the audio communication mode, an audio signal generated at the microphone 925 is converted into audio data, and the data is compressed at the audio codec 923. The compressed data is supplied to the communication unit 922. The communication unit 922 performs a modulation operation, a frequency conversion operation, and the like on the audio data, to generate a transmission signal. The communication unit 922 also supplies the transmission signal to the antenna 921, and the transmission signal is transmitted to a base station (not shown). The communication unit 922 also amplifies a signal received at the antenna 921, and performs a frequency conversion operation, a demodulation operation, and the like. The resultant audio data is supplied to the audio codec 923. The audio codec 923 decompresses audio data, and converts the audio data into an analog audio signal to be output to the speaker 924.

In a case where mail transmission is performed in the data communication mode, the control unit 931 receives text data that is input through an operation by the operation unit 932, and the input text is displayed on the display unit 930. In accordance with a user instruction or the like through the operation unit 932, the control unit 931 generates and supplies mail data to the communication unit 922. The communication unit 922 performs a modulation operation, a frequency conversion operation, and the like on the mail data, and transmits the resultant transmission signal from the antenna 921. The communication unit 922 also amplifies a signal received at the antenna 921, and performs a frequency conversion operation, a demodulation operation, and the like, to restore the mail data. This mail data is supplied to the display unit 930, and the mail content is displayed.

The portable telephone device 920 can cause the recording/reproducing unit 929 to store received mail data into a storage medium. The storage medium is a rewritable storage medium. For example, the storage medium may be a semiconductor memory such as a RAM or an internal flash memory, a hard disk, or a removable medium such as a magnetic disk, a magnetooptical disk, an optical disk, a USB memory, or a memory card.

In a case where image data is transmitted in the data communication mode, image data generated at the camera unit 926 is supplied to the image processing unit 927. The image processing unit 927 performs an encoding operation on the image data, to generate encoded data.

The demultiplexing unit 928 multiplexes the encoded data generated at the image processing unit 927 and the audio data supplied from the audio codec 923 by a predetermined technique, and supplies the multiplexed data to the communication unit 922. The communication unit 922 performs a modulation operation, a frequency conversion operation, and the like on the multiplexed data, and transmits the resultant transmission signal from the antenna 921. The communication unit 922 also amplifies a signal received at the antenna 921, and performs a frequency conversion operation, a demodulation operation, and the like, to restore the multiplexed data. This multiplexed data is supplied to the demultiplexing unit 928. The demultiplexing unit 928 divides the multiplexed data, and supplies the encoded data to the image processing unit 927, and the audio data to the audio codec 923.
The image processing unit 927 performs a decoding operation on the encoded data, to generate image data. The image processing unit 927 also supplies the image data to the display unit 930 to display the received image, or transmits the image data in accordance with the HDMI standard or the like. The audio codec 923 converts the audio data into an analog audio signal, and supplies the analog audio signal to the speaker 924, so that the received sound is output.

In the portable telephone device having such a structure, the function of an image processing device (an image processing method) of the present invention is provided in the image processing unit 927. Thus, image data in such a format as to generate multi-view images can be correctly transmitted.

### <11. Ninth Embodiment>

### [Example Structure of a Recording/Reproducing Device]

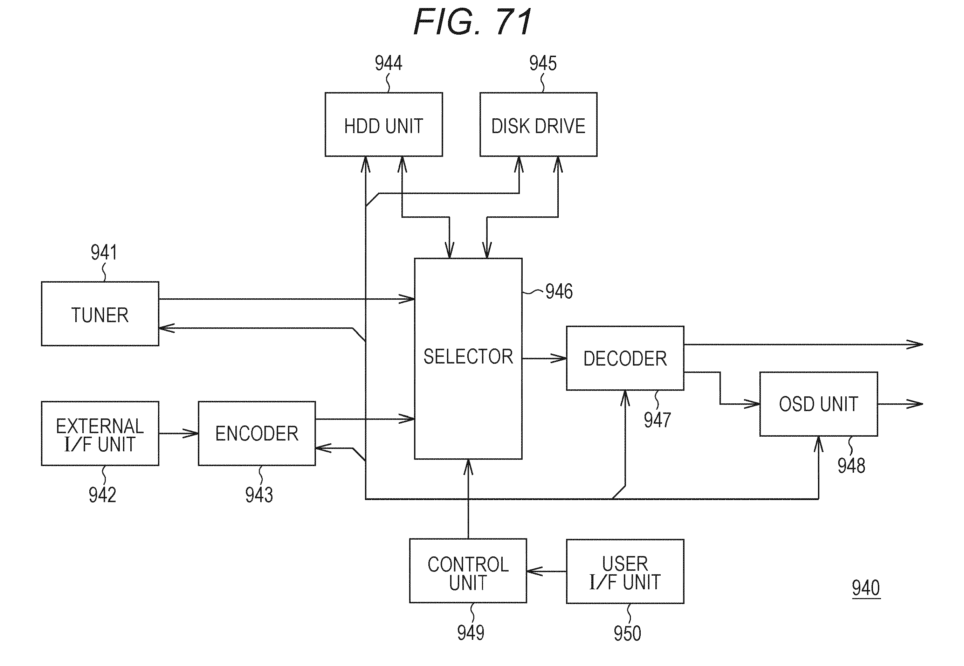

Fig. 71 schematically shows an example structure of a recording/reproducing device to which the present technique is applied. The recording/reproducing device 940 records the audio data and video data of a received broadcast show on a recording medium, for example, and provides the recorded data to a user at the time according to an instruction from the user. The recording/reproducing device 940 can also obtain audio data and video data from another device, for example, and record the data on a recording medium. Further, the recording/reproducing device 940 decodes and outputs audio data and video data recorded on a recording medium, so that a monitor device or the like can display images and outputs sound.

The recording/reproducing device 940 includes a tuner 941, an external interface unit 942, an encoder 943, a HDD (Hard Disk Drive) unit 944, a disk drive 945, a selector 946, a decoder 947, an OSD (On-Screen Display) unit 948, a control unit 949, and a user interface unit 950.

The tuner 941 selects a desired channel from broadcast signals received at an antenna (not shown). The tuner 941 demodulates the received signal of the desired channel, and outputs the resultant encoded bit stream to the selector 946.

The external interface unit 942 is formed with at least one of an IEEE1394 interface, a network interface unit, a USB interface, a flash memory interface, an HDMI, and the like. The external interface unit 942 is an interface for a connection with an external device, a network, a memory card, or the like, and receives data such as video data and audio data to be recorded, and the like.

The encoder 943 performs predetermined encoding on video data and audio data that are supplied from the external interface unit 942 and are not encoded, and outputs an encoded bit stream to the selector 946.

The HDD unit 944 records content data such as videos and sound, various kinds of programs, other data, and the like on an internal hard disk, and reads the data from the hard disk at the time of reproduction or the like.

The disk drive 945 performs signal recording and reproduction on a mounted optical disk. The optical disk may be a DVD disk (such as a DVD-Video, a DVD-RAM, a DVD-R, a DVD-RW, a DVD+R, or a DVD+RW) or a Blu-ray disk, for example.

The selector 946 selects an encoded bit stream from the tuner 941 or the encoder 943 at the time of video and audio recording, and supplies the encoded bit stream to either the HDD unit 944 or the disk drive 945. The selector 946 also supplies an encoded bit stream output from the HDD unit 944 or the disk drive 945 to the decoder 947 at the time of video and audio reproduction.

The decoder 947 performs a decoding operation on an encoded bit stream. The decoder 947 supplies the video data generated by performing the decoding to the OSD unit 948. The decoder 947 also outputs the audio data generated by performing the decoding.

The OSD unit 948 generates video data for displaying a menu screen or the like for item selection, and superimposes the video data on video data output from the decoder 947.

The user interface unit 950 is connected to the control unit 949. The user interface unit 950 is formed with operation switches, a remote control signal reception unit, and the like, and supplies an operating signal according to a user operation to the control unit 949.

The control unit 949 is formed with a CPU, a memory, and the like. The memory stores the program to be executed by the CPU, and various kinds of data necessary for the CPU to perform operations. The program stored in the memory is read and executed by the CPU at a predetermined time such as the time of activation of the recording/reproducing device 940. The CPU executes the program to control the respective components so that the recording/reproducing device 940 operates in accordance with a user operation.

In the recording/reproducing device having such a structure, the function of an image processing device (an image processing method) of the present invention is provided in the external I/F unit 942. Thus, image data in such a format as to generate multi-view images can be correctly transmitted.

### <12. Tenth Embodiment>

### [Example Structure of an Imaging Device]

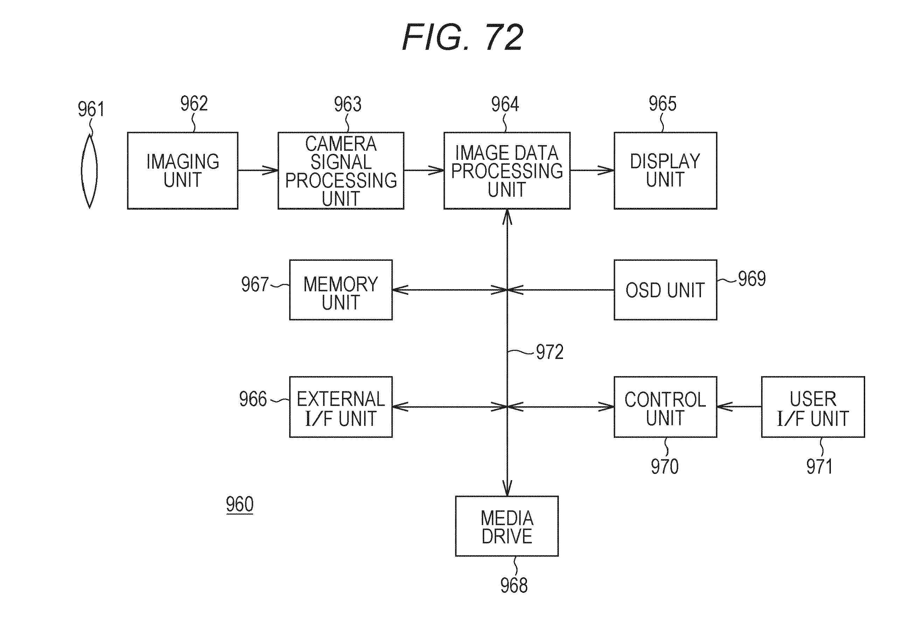

Fig. 72 schematically shows an example structure of an imaging apparatus to which the present technique is applied. An imaging device 960 captures an image of an object, and causes a display unit to display the image of the object or records the image as image data on a recording medium.

The imaging device 960 includes an optical block 961, an imaging unit 962, a camera signal processing unit 963, an image data processing unit 964, a display unit 965, an external interface unit 966, a memory unit 967, a media drive 968, an OSD unit 969, and a control unit 970. A user interface unit 971 is connected to the control unit 970. Further, the image data processing unit 964, the external interface unit 966, the memory unit 967, the media drive 968, the OSD unit 969, the control unit 970, and the like are connected via a bus 972.

The optical block 961 is formed with a focus lens, a diaphragm, and the like. The optical block 961 forms an optical image of an object on the imaging surface of the imaging unit 962. Formed with a CCD or a CMOS image sensor, the imaging unit 962 generates an electrical signal in accordance with the optical image through a photoelectric conversion, and supplies the electrical signal to the camera signal processing unit 963.

The camera signal processing unit 963 performs various kinds of camera signal processing such as a knee correction, a gamma correction, and a color correction on the electrical signal supplied from the imaging unit 962. The camera signal processing unit 963 supplies the image data subjected to the camera signal processing, to the image data processing unit 964.

The image data processing unit 964 performs an encoding operation on the image data supplied from the camera signal processing unit 963. The image data processing unit 964 supplies the encoded data generated by performing the encoding operation, to the external interface unit 966 and the media drive 968. The image data processing unit 964 also performs a decoding operation on the encoded data supplied from the external interface unit 966 and the media drive 968. The image data processing unit 964 supplies the image data generated by performing the decoding operation to the display unit 965. The image data processing unit 964 also performs an operation to supply the image data supplied from the camera signal processing unit 963 to the display unit 965, or superimposes display data obtained from the OSD unit 969 on the image data and supplies the image data to the display unit 965.

The OSD unit 969 generates a menu screen formed with symbols, characters, or figures, or display data such as icons, and outputs such data to the image data processing unit 964.

The external interface unit 966 is formed with a USB input/output terminal or a HDMI input/output terminal, for example, and is connected to a printer when image printing is performed. A drive is also connected to the external interface unit 966 where necessary, and a removable medium such as a magnetic disk or an optical disk is mounted on the drive as appropriate. A computer program read from such a removable disk is installed where necessary. Further, the external interface unit 966 includes a network interface connected to a predetermined network such as a LAN or the Internet. The control unit 970 reads encoded data from the memory unit 967 in accordance with an instruction from the user interface unit 971, for example, and can supply the encoded data from the external interface unit 966 to another device connected thereto via a network. The control unit 970 can also obtain, via the external interface unit 966, encoded data or image data supplied from another device via a network, and supply the encoded data or image data to the image data processing unit 964.

A recording medium to be driven by the media drive 968 may be a readable/rewritable removable disk such as a magnetic disk, a magnetooptical disk, an optical disk, or a semiconductor memory. The recording medium may be any type of removable medium, and may be a tape device, a disk, or a memory card. The recording medium may of course be a non-contact IC card or the like.

Alternatively, the media drive 968 and a recording medium may be integrated, and may be formed with an immobile storage medium such as an internal hard disk drive or a SSD (Solid State Drive).

The control unit 970 is formed with a CPU, a memory, and the like. The memory stores the program to be executed by the CPU, various kinds of data necessary for the CPU to perform operations, and the like. The program stored in the memory is read and executed by the CPU at a predetermined time such as the time of activation of the imaging device 960. The CPU executes the program to control the respective components so that the imaging device 960 operates in accordance with a user operation.

In the imaging device having such a structure, the function of an image processing device (an image processing method) of the present invention is provided in the external I/F unit 966. Thus, image data in such a format as to generate multi-view images can be correctly transmitted.

In this specification, a system means an entire apparatus formed with more than one device.

Also, in the above described examples, any structure described as one device (or one processing unit) may be divided into two or more devices (or processing units). Conversely, any structure described as two or more devices (or processing units) may be combined to form one device (or one processing unit). Also, it is of course possible to add a structure other than the above described ones to the structure of any of the devices (or any of the processing units). Further, as long as the structure and function of the entire system remain the same, part of the structure of a device (or a processing unit) may be incorporated into another device (or another processing unit). That is, embodiments of the present technique are not limited to the above described embodiments, and various modifications may be made to them without departing from the scope of the technique.

### REFERENCE SIGNS LIST

300 Transmission system, 301 Reproducing device, 302 Display device, 303 HDMI cable, 311 Decoder, 312 Mode determining unit, 313 3D information generating unit, 314 Communication unit, 321 Communication unit, 322 Mode determination unit, 323 Synchronization setting unit, 324 Synchronization control unit, 325 Image generating unit, 326 Display unit, 411 Receiving-end information acquiring unit, 412 Synchronization setting unit, 421 Receiving-end information providing unit

## Claims

1. An image processing device comprising:
a mode determining unit configured to determine a compatible mode indicating compatibility with an image data format by referring to a format of stereoscopic image data to be used for generating a multi-view image;
a generating unit configured to generate compatibility information as 3D information, the compatibility information indicating the compatible mode determined by the mode determining unit; and
a transmitting unit configured to transmit the stereoscopic image data and the 3D information generated by the generating unit to a transmission destination of the stereoscopic image data.

2. The image processing device according to claim 1, wherein the generating unit generates format information as the 3D information, the format information indicating the format of the stereoscopic image data.

3. The image processing device according to claim 2, wherein the generating unit generates image multiplexing information and parallax image multiplexing information as the 3D information, the image multiplexing information indicating a multiplexing technique for image data in the stereoscopic image data, the parallax image multiplexing information indicating a multiplexing technique for parallax image data in the stereoscopic image data.

4. The image processing device according to claim 2, wherein the generating unit generates identification information as the 3D information, the identification information being for identifying a multiplexing pattern of image data in the stereoscopic image data or a multiplexing pattern of parallax image data in the stereoscopic image data.

5. The image processing device according to claim 2, wherein the transmitting unit puts the 3D information in VSIFPC (Vendor Specific InfoFrame Packet Contents) of HDMI (High Definition Multimedia Interface) standard, and transmits the 3D information.

6. The image processing device according to claim 5, wherein the transmitting unit puts the 3D information in a free space in a region of the VSIFPC, and transmits the 3D information, the region of the VSIFPC being designed to have information about 3D image data written therein.

7. The image processing device according to claim 2, wherein the compatible mode includes mono compatible mode indicating compatibility with conventional two-dimensional image data, frame packing compatible mode indicating compatibility with conventional frame packing 3D image data, and stereoscopic compatible mode indicating compatibility with conventional stereoscopic 3D image data.

8. The image processing device according to claim 1, wherein the transmitting unit transmits data of one frame of the stereoscopic image data, using an active video interval equivalent to a plurality of cycles of a vertical synchronization signal.

9. The image processing device according to claim 8, further comprising:
an interval setting unit configured to set irregular cycles to the vertical synchronization signal,
wherein the transmitting unit transmits data of one frame of the stereoscopic image data, using the active video interval equivalent to the cycles set by the interval setting unit.

10. The image processing device according to claim 1, further comprising:
a capability information acquiring unit configured to acquire capability information from a device at the transmission destination of the stereoscopic image data, the capability information indicating processing capability of the device; and
a synchronization setting unit configured to set a synchronization method for the stereoscopic image data, based on the processing capability of the device indicated by the capability information acquired by the capability information acquiring unit,
wherein the generating unit generates synchronization information as the 3D information, the synchronization information indicating the synchronization method set by the synchronization setting unit.

11. An image processing method to be performed by an image processing device, comprising:
determining a compatible mode indicating compatibility with an image data format by referring to a format of stereoscopic image data to be used for generating a multi-view image, the determining being performed by a mode determining unit;
generating compatibility information as 3D information, the compatibility information indicating the compatible mode determined by the mode determining unit, the generating being performed by a generating unit; and
transmitting the stereoscopic image data and the 3D information generated by the generating unit to a transmission destination of the stereoscopic image data, the transmitting being performed by a transmitting unit.

12. An image processing device comprising:
a receiving unit configured to receive stereoscopic image data to be used for generating a multi-view image, and receive a compatible mode as 3D information, the compatible mode indicating compatibility of a format of the stereoscopic image data with an image data format;
a mode determining unit configured to determine the compatible mode of the stereoscopic image data received by the receiving unit, based on the 3D information received by the receiving unit; and
a synchronization control unit configured to control synchronization of processing of the stereoscopic image data received by the receiving unit, based on the compatible mode determined by the mode determining unit.

13. The image processing device according to claim 12, wherein the receiving unit receives format information as the 3D information, the format information indicating the format of the stereoscopic image data.

14. The image processing device according to claim 13, wherein the receiving unit generates image multiplexing information and parallax image multiplexing information as the 3D information, the image multiplexing information indicating a multiplexing technique for image data in the stereoscopic image data, the parallax image multiplexing information indicating a multiplexing technique for parallax image data in the stereoscopic image data.

15. The image processing device according to claim 13, wherein the receiving unit receives identification information as the 3D information, the identification information being for identifying a multiplexing pattern of image data in the stereoscopic image data or a multiplexing pattern of parallax image data in the stereoscopic image data.

16. The image processing device according to claim 13, wherein the receiving unit receives the 3D information that is written in VSIFPC (Vendor Specific InfoFrame Packet Contents) of HDMI (High Definition Multimedia Interface) standard and is transmitted.

17. The image processing device according to claim 16, wherein the receiving unit receives the 3D information that is written in a free space in a region of the VSIFPC and is transmitted, the region of the VSIFPC being designed to have information about 3D image data written therein.

18. The image processing device according to claim 13, wherein the compatible mode includes mono compatible mode indicating compatibility with conventional two-dimensional image data, frame packing compatible mode indicating compatibility with conventional frame packing 3D image data, and stereoscopic compatible mode indicating compatibility with conventional stereoscopic 3D image data.

19. The image processing device according to claim 12, wherein the receiving unit receives data of one frame of the stereoscopic image data transmitted using an active video interval equivalent to a plurality of cycles of a vertical synchronization signal.

20. The image processing device according to claim 19, wherein the receiving unit receives data of one frame of the stereoscopic image data transmitted using the active video interval equivalent to the plurality of cycles of the vertical synchronization signal, the cycles of the vertical synchronization signal being irregular.

21. The image processing device according to claim 12, further comprising:
a capability information providing unit configured to provide capability information indicating processing capability of the image processing device to a device as a transmitter of the stereoscopic image data.

22. An image processing method to be performed by an image processing device, comprising:
receiving stereoscopic image data to be used for generating a multi-view image, and receiving a compatible mode as 3D information, the compatible mode indicating compatibility of a format of the stereoscopic image data with an image data format, the receiving being performed by a receiving unit;
determining the compatible mode of the stereoscopic image data received by the receiving unit, based on the 3D information received by the receiving unit, the determining being performed by a mode determining unit; and
controlling synchronization of processing of the stereoscopic image data received by the receiving unit, based on the compatible mode determined by the mode determining unit, the controlling being performed by a synchronization control unit.
